# EUROPEAN PATENT SPECIFICATION

(11) **EP 3 110 165 B1**
(45) Date of publication and mention of the grant of the patent: **02.10.2019**
(21) Application number: 14888652.6
(22) Date of filing: 06.08.2014
(51) Int. Cl.: H04N 21/8549, H04N 5/445, H04N 21/233, H04N 21/234, H04N 21/439, H04N 21/44, H04N 21/84, G06K 9/00

(54) **BROADCAST RECEIVING APPARATUS AND METHOD FOR SUMMARIZED CONTENT SERVICE**
RUNDFUNKEMPFANGSVORRICHTUNG UND VERFAHREN FÜR ZUSAMMENGEFASSTEN INHALTSDIENST
APPAREIL DE RÉCEPTION DE DIFFUSION ET PROCÉDÉ ASSOCIÉ À UN SERVICE DE CONTENU RÉSUMÉ

(30) Priority: 11.04.2014 KR 20140043524; 11.04.2014 KR 20140043641; 11.04.2014 KR 20140043536; 11.04.2014 KR 20140043639; 11.04.2014 KR 20140043597; 05.08.2014 KR 20140100489
(43) Date of publication of application: 28.12.2016
(73) Proprietor: Samsung Electronics Co., Ltd., Suwon-si, Gyeonggi-do 443-742 (KR)
(72) Inventor: LEE, Ji-hyo, Suwon-si Gyeonggi-do 443-280 (KR); CHOI, Sang-jin, Daegu 702-865 (KR); KANG, Ji-hong, Seoul 100-717 (KR); LEE, Yong-hoon, Seoul 137-862 (KR); KIM, Seung-won, Gwangju-si Gyeonggi-do 464-807 (KR); KIM, Joo-youn, Seoul 138-790 (KR); YOO, Jong-uk, Suwon-si Gyeonggi-do 443-390 (KR)
(74) Representative: Appleyard Lees IP LLP
(86) International application number: PCT/KR2014/007280
(87) International publication number: WO 2015/156452

(56) References cited:
- EP-A2- 1 659 519
- WO-A1-2007/073349
- KR-A- 20070 088 890
- KR-A- 20100 085 720
- KR-A- 20110 062 982
- US-A1- 2002 083 473
- US-A1- 2003 076 448
- US-A1- 2003 141 665
- US-A1- 2004 130 567
- US-A1- 2005 195 331
- US-A1- 2007 201 764
- US-A1- 2008 138 029
- US-A1- 2008 282 287
- US-A1- 2012 307 109
- US-A1- 2013 293 776

## Description

### [TECHNICAL FIELD]

Methods and apparatuses consistent with exemplary embodiments relate to a broadcast receiving apparatus and method, and more particularly, to a broadcast receiving apparatus and method for providing a summary content service for a sport-related content.

### [BACKGROUND OF THE INVENTION]

A related-art broadcast receiving apparatus externally receives a summary content (hereinafter referred to as a highlight image) of a currently displayed content and displays the received summary content on the screen. The highlight image is generated by an external server and is transmitted to the broadcast receiving apparatus a predetermined period of time after the content related to the highlight image was played back.

For example, in the case of a highlight image of a sports content such as soccer, an external server generates a highlight image of the sport content after the first half or the first and second halves of the soccer game, and transmits the highlight image to the broadcast receiving apparatus. Accordingly, the broadcast receiving apparatus receives the highlight image of the soccer game from the external server after the first half or the first and second halves of the soccer game, and displays the highlight image on the screen.

Therefore, when an event such as a goal occurs while a user is not watching a currently displayed soccer game, the user has to inconveniently wait for a highlight image including an image section related to the event until the highlight image is received from the external server.

US2008/0282287 discloses a method for processing sports video. US2013/0293776 discloses a system and method for generating video summaries. US2003/0141665 discloses summarization of sumo video content. US2012/0307109 discloses a video extraction device. US2002/0083473 discloses accessing a multimedia summary of a video. EP1659519 discloses summarizing a moving sports picture. US2008/0138029 discloses replay generation for a broadcast video. US2005/0195331 discloses classification of sports videos. US2003/0076448 discloses identification of replay segments. US2007/0201764 discloses detection key caption from moving picture.

### [DISCLOSURE OF INVENTION]

### [TECHNICAL PROBLEM]

One or more exemplary embodiments provide generating a summary content of a content being played back by a broadcast receiving apparatus on a real time basis.

One or more exemplary embodiments also provide providing a summary content service to play back at least one of a content being played back by a broadcast receiving apparatus and a summary content.

### [SOLUTION TO PROBLEM]

The embodiment of the application is defined in the appended claims. According to an aspect of an exemplary embodiment, there is provided a method for providing a summary content service of a broadcast receiving apparatus, including: receiving a content; analyzing at least one of video and audio data included in the content and detecting at least one event section corresponding to a predetermined condition; and generating a summary content on the basis of the at least one detected event section.

The content may be a sport-related content, and the broadcast receiving apparatus may store a play situation condition related to a summary content of the sport-related content, and the detecting may include analyzing the video data included in the content and detecting an image section corresponding to the stored play situation condition as the at least one event section.

The detecting may include analyzing the audio data included in the content and detecting an image section having an audio signal level which is equal to or higher than a predetermined threshold level as the at least one event section.

The detecting may include generating text data by performing speech to text (STT) analysis of the audio data included in the content, and detecting an image section including a predetermined term related to the summary content as the at least one event section using the generated text data.

The generating may include: determining whether the content is a sport-related content on the basis of colors and a proportion value of each color which are included in image information of an image section of the at least one detected event section; and in response to the content being a sport-related content, determining a content summary section on the basis of time information regarding the at least one detected event section.

The determining may include determining whether the content is a sport-related content according to whether a proportion of a color corresponding to a predetermined field color among the colors included in the image information of the image section of the at least one detected event section is equal to or higher than a predetermined first threshold value.

The determining may include determining whether the sport is being played according to whether a proportion value of the color corresponding to the field color among the colors included in image information of an adjacent image section which is adjacent to the image section of the at least one detected event section is equal to or higher than a predetermined second threshold value.

The determining may include extracting a guide area that indicates a play situation condition from an image of the image section of the at least one detected event section, and determining whether the sport is being played on the basis of the extracted guide area, and the guide area may be an area indicating at least one of a score of the sport and a duration of the sport.

The determining the content summary section may include acquiring previous and subsequent image sections which exist within a predetermined fixed time on the basis of time regarding the at least one detected event section, and determining the acquired previous and subsequent image sections and the image section of the at least one event section as the content summary section.

The determining the content summary section may include changing the fixed time according to whether a scene changes in at least one of the acquired previous and subsequent image sections.

The method may further include: in response to the at least one event section being detected, acquiring a thumbnail image from the image section of the at least one detected event section; matching and storing the summary content and the thumbnail image acquired with respect to the summary content; and outputting the summary content of the content and the thumbnail image matched with the summary content in accordance with a user command.

The acquiring may include, in response to there being a plurality of thumbnail images, acquiring a thumbnail image having least color corresponding to a predetermined valid field color or a thumbnail image including a largest object with respect to a same object included in each of the thumbnail images from among the plurality of thumbnail images.

According to an aspect of another exemplary embodiment, there is provided a broadcast receiving apparatus including: a receiver configured to receive a content; an outputter configured to output the content; and a controller configured to analyze at least one of video and audio data included in the content, detect at least one event section corresponding to a predetermined condition, generate a summary content on the basis of the at least one detected event section, and control the outputter to output the summary content.

According to an aspect of another exemplary embodiment, there is provided a method for providing a summary content service of a broadcast receiving apparatus. The method may include: detecting an event region for a summary content service by comparing pixel values of a plurality of image frames; detecting, in response to an image frame being input, a region corresponding to the detected event region from the input image frame, and sensing generation of an event by detecting character change of the region corresponding to the detected event region; and generating a summary content based on a detected result of the generation of the event.

The detecting may include comparing pixel differences of corresponding pixel regions of a first image frame and a second image frame among the plurality of image frames with a preset threshold value and calculating the number of pixel regions having a pixel difference of lower than the threshold value, determining whether or not, in response to the number of pixel regions having the pixel difference of lower than the threshold value being less than the preset threshold number of pixels, the pixel region having the pixel difference of lower than the threshold value is continuously detected the preset threshold number of times or more, and detecting the event region based on the pixel region having the pixel difference of lower than the threshold value in response to the pixel region having the pixel difference of lower than the threshold value is continuously detected the preset threshold number of times or more and storing the detected event region.

The calculating may include applying different variables of the pixel region having the pixel difference of lower than the threshold value and remaining pixel regions, and calculating the number of pixel regions having the pixel difference of lower than the threshold value from a number of a variable applied to the pixel region having the pixel difference of lower than the threshold value.

The detecting may further include analyzing the event region and generating source information for determining whether or not the event is generated. The event region may be a scoreboard region related to a sporting event, and the source information may include at least one of a playing time section, a score section, and a team section.

The generating of the source information may include generating source information including the playing time section based on a pixel region set to a variable indicating generation of the pixel difference among variables set according to pixel regions in the event region, and storing the generated source information.

The generating of the source information may include detecting a number from the event region using a number recognition algorithm, generating the source information including the playing time section based on a pixel region from which the number is detected in response to the detected number continuously existing twice or more, and storing the generated source information.

The generating of the source information may include generating the source information including at least one of the playing time section, the score section, and the team section using a character recognition algorithm, and storing the generated source information.

The sensing may include, in response to the image frame being input, analyzing a pixel region of the image frame corresponding to each pixel region of the event region, and determining whether or not a region corresponding to the event region exists, and in response to the region corresponding to the event region existing, analyzing the event region and the region corresponding to the event region based on the source information, and sensing the generation of the event.

The determining may include acquiring the number of pixel regions of the image frame having the pixel difference of lower than the preset threshold value among pixel differences calculated from remaining pixel regions of the event region other than the playing time section, and arbitrary pixel regions of the image frame corresponding to the remaining pixel regions, and determining the region corresponding to the event region to the event region in response to a ratio value of the number of pixel regions having the pixel difference of lower than the preset threshold value to the number of the remaining pixel regions of the event region other than the playing time section being less than a preset pixel ratio value.

The sensing may include, in response to the score section being not included in the source information, determining a score section based on a variable set to the pixel regions corresponding to the remaining pixel regions of the region corresponding to the event region other than the playing time section and determining a score section corresponding to the determined score section from the event region, and recognizing numbers from the score sections using a number recognition algorithm and sensing the generation of the event according to change of the numbers.

The sensing may include, in response to the score section being included in the source information, detecting a region corresponding to the score section from the region corresponding to the event region, recognizing numbers from the detected region and the score section using a number recognition algorithm, and sensing the generation of the event according to change of the numbers.

The sensing may include, in response to the generation of the event being sensed according to the change of the numbers recognized from the score sections, updating the event region and the source information to the region corresponding to the event region and source information related to the region corresponding to the event region.

According to an aspect of another exemplary embodiment, there is provided a broadcast receiving apparatus. The broadcast receiving apparatus may include: a storage configured to record a content and store the recorded content; and a controller configured to compare pixel values of a plurality of image frames for the content to detect an event region for a summary content service, store the detected event region in the storage, detecting, in response to an image frame being input after the event region is detected, a region corresponding to the detected event region from the input image frame, sensing change in a number of the region corresponding to the detected event region to sense generation of an event, and generate a summary content based on a sensing result of the generation of the event.

According to an aspect of another exemplary embodiment, there is provided a method for providing a summary content service of a broadcast receiving apparatus. The method includes: decoding video and audio data of a content which is selected by a user, analyzing video images of the decoded video data to determine and store at least one candidate thumbnail image, analyzing at least one of the decoded video data and audio data to generate a summary content when an event occurs, and determining a candidate thumbnail image which corresponds to the summary content as a representative thumbnail image of the summary content based on time information included in the summary content.

The storing may include determining and storing a zoom-in shot image among the video images of the decoded video data as the at least one candidate thumbnail image.

The storing may include analyzing video images for each of the decoded video data to calculate a pixel ratio value of a color which correspond to an effective field color and comparing the calculated pixel ratio value with a predetermined reference pixel ratio value to determine and store a video image having a pixel ratio value which is lower than the reference pixel ratio value as a candidate thumbnail image.

The storing may include determining and storing, as a candidate thumbnail image, a video image including an object which is larger in size than a predetermined threshold size among objects included in video images for each of the decoded video data.

The storing may include determining a rate of scene change based on histograms of video images determined as the at least one of candidate thumbnail images and their respective previous video images and comparing the determined scene change ratio with a predetermined reference change ratio to delete previously stored candidate thumbnail images other than candidate thumbnail images whose scene change ratios are lower than the predetermined reference change ratio.

The determining may include determining whether a candidate thumbnail image which is included in a playback section of the summary content has been already stored, in response to a candidate thumbnail image which is included in a playback section of the summary content being stored, determining the candidate thumbnail image as a representative thumbnail image, in response to a candidate thumbnail image which is included in a playback section of the summary content not being stored, determining, as a representative thumbnail image, a video image of a section where playback of the summary content ends, and matching the determined representative thumbnail image to the summary content and then storing the determined representative thumbnail image and the summary content s.

The determining may further include analyzing video images of the decoded video data and previous and subsequent images of the video images, in response to video and audio data of the at least one content being decoded, and generating a video image from which a black image is removed, depending on whether black images are consecutively detected in at least one region of regions in upper/lower/left/right sides.

According to an aspect of another exemplary embodiment, there is provided a broadcast receiving apparatus including a decoder which decodes the video and audio data of the content selected by a user, a storage which stores at least one candidate thumbnail image, and a controller which analyzes at least one of the decoded video and audio data to generate a summary content when an event occurs and determines and then stores in the storage, as a representative thumbnail image for the summary content, a candidate thumbnail image which corresponds to the summary content among at least one candidate thumbnail image stored in the storage, based on time information included in the summary content.

According to an aspect of another exemplary embodiment, there is provided a method for providing a summary content service in a broadcast receiving apparatus, including: decoding video and audio data regarding at least one content, detecting at least one event section corresponding to a preset condition by analyzing at least one of the video and the audio data regarding the decoded content, generating a summary content based on the detected event section, and outputting at least one of the content and the summary content according to a user command.

The outputting may include simultaneously outputting the content and the summary content related with the content according to a first user command, and simultaneously outputting the content and a summary content related with another content according to a second user command.

The decoding may include decoding video and audio data of a content through a first decoder and decodes the summary content related with the content through a second decoder when the user command is a first user command, and the outputting may include simultaneously outputting a content decoded through the first and the second decoders and a summary content related with the content.

The method may additionally include extracting a content of a channel corresponding to a user command among a plurality of channels through a demux. The decoding may include decoding video and audio data of the content extracted from the demux through the first decoder, and the generating may include generating a summary content based on the content extracted from the demux.

The method may additionally include extracting a content of a channel corresponding to a user command among a plurality of channels through the first and the second demuxes. The decoding may include decodibng video and audio data of the content extracted from the first demux through the first decoder, and the generating may include generating a summary content based on the content extracted from the second demux and time information when the event section is detected.

The method may additionally include extracting a content of a channel corresponding to a user command among a plurality of channels through first to third demuxes. The decoding may include decoding video and audio data of the content extracted from the first demux through the first decoder, and video and audio data of the content extracted from the third demux through the third decoder, and the generating may include generating a summary content based on the content extracted from the second demux and time information when the event section is detected.

The method may additionally include extracting first and second contents from first and second demuxes. The decoding may include decoding video and audio data of the first content extracted from the first demux through the first decoder, video and audio data of the second content extracted from the second demux through the second decoder, and a pre-generated summary content related with the second content extracted from the third demux through the third decoder, and the outputting may include simultaneously outputting the first content decoded through the first and the second decoders and a summary content regarding the second content when the user command is a second user command.

According to an aspect of another exemplary embodiment, there is provided a broadcast receiving apparatus including: a decoder configured to perform decoding regarding video and audio data included in at least one content, an outputter configured to output the decoded content, an event detector configured to detect at least one event section corresponding to a preset condition by analyzing at least one of the video and the audio data regarding the decoded content, and a controller configured to generate a summary content based on the detected event section, and control the outputter to simultaneously output the contents and the summary content according to a user command.

According to an aspect of another exemplary embodiment, there is provided a method of providing a summary content service of a broadcast receiving apparatus. The method may include: analyzing at least one of video and audio data of a content to detect an event section corresponding to a preset condition; automatically generating bookmarking information for selectively outputting a video section related to the detected event section from the content; and storing the generated bookmarking information.

The bookmarking information may include time information about a start time and an end time of a summary content section including the event section. The generating may include determining one of video images included in the video section related to the event section as a representative thumbnail image, and generating the bookmarking information including the video image determined as the representative thumbnail image.

The method may further include: simultaneously outputting a recorded content and a representative thumbnail image included in the recorded content or bookmarking information of the recorded content according to a user command. The outputting may include, in response to the user command being a summary content service command, selectively outputting only a video section corresponding to the time information included in the bookmarking information of the recorded content based on playback time information of the recorded content.

The detecting may include analyzing one of decoded video data, deinterlaced video data, scaled video data, and video data output according to a driving control signal of a timing driver to detect an event section.

The method may further include: outputting a content of a channel selected through a first tuner of a plurality of tuners; and recording and storing a content of a channel selected through a second tuner of the plurality of tuners, and the detecting may include analyzing at least one of video and audio data of the content of the channel selected through the second tuner detect an event section corresponding to a preset condition.

According to an aspect of another exemplary embodiments, there is provided a broadcast receiving apparatus including: a storage configured to store a recorded content; a data processor configured to signal-process video and audio data of a content as formats that are enabled to be output; an outputter configured to output the video and audio data of the signal-processed content; and a controller configured to analyze at least one of the video and audio data of the signal-processed content in order to detect an event section corresponding to a preset condition, automatically generate bookmarking information for selectively outputting a video section related to the detected event section from the content, and store the bookmarking information in the storage.

### [ADVANTAGEOUS EFFECTS OF INVENTION]

According to various exemplary embodiments as described above, the broadcast receiving apparatus may generate a summary content regarding a content requested by the user. In addition, the broadcast receiving apparatus may simultaneously play back a content requested by the user and a summary content regarding the corresponding content or a summary content of another content.

### [BRIEF DESCRIPTION OF THE DRAWINGS]

FIGs. 1 and 2 are block diagrams of a broadcast receiving apparatus according to an exemplary embodiment;
FIG. 3 is an illustrative view showing a method for determining a content summary section on the basis of an already detected event section in the broadcast receiving apparatus according to an exemplary embodiment;
FIGs. 4 and 5 are illustrative views showing a method for generating a summary content according to an exemplary embodiment;
FIG. 6 is a flowchart showing a method for providing a summary content service in the broadcast receiving apparatus according to an exemplary embodiment;
FIG. 7 is a flowchart showing a method for determining a content summary section to generate a summary content on the basis of an image section corresponding to at least one detected event section in the broadcast receiving apparatus according to an exemplary embodiment;
FIG. 8 is a flowchart showing a method for generating a summary content in the broadcast receiving apparatus according to an exemplary embodiment;
FIG. 9 is an illustrative view showing a method for detecting an event region in the broadcast receiving apparatus according to an exemplary embodiment;
FIG. 10 is an illustrative view showing a variable set to an initial image frame in the broadcast receiving apparatus according to an exemplary embodiment;
FIG. 11 is an illustrative view showing a variable set to an image frame having a pixel difference of less than a preset threshold value on the basis of a plurality of image frames in the broadcast receiving apparatus according to an exemplary embodiment;
FIGs. 12 and 13 are illustrative view showing a method for sensing generation of an event in the broadcast receiving apparatus according to an exemplary embodiment;
FIG. 14 is a flowchart showing a method for providing a summary content service in the broadcast receiving apparatus according to an exemplary embodiment;
FIG. 15 is a flowchart showing a method for detecting an event region in the broadcast receiving apparatus according to an exemplary embodiment;
FIG. 16 is a flowchart showing a method for sensing generation of an event in the broadcast receiving apparatus according to an exemplary embodiment; and
FIG. 17 is a flowchart showing a method for detecting a region corresponding to an event region in the broadcast receiving apparatus according to an exemplary embodiment;
FIG. 18 is an illustrative view showing a method for processing a video image including black images in the broadcast receiving apparatus according to an exemplary embodiment;
FIG. 19 is an illustrative view showing a method for determining a candidate thumbnail image in the broadcast receiving apparatus according to an exemplary embodiment;
FIG. 20 is an illustrative view showing a method for determining a final candidate thumbnail image among the determined candidate thumbnail images on the basis of a scene change rate in the broadcast receiving apparatus according to an exemplary embodiment;
FIGs. 21 and 22 are illustrative views showing a method for generating and replaying a summary content in the broadcast receiving apparatus according to an exemplary embodiment;
FIG. 23 is a flowchart showing a method for providing a summary content service in the broadcast receiving apparatus according to an exemplary embodiment;
FIGs. 24 to 28 are flowcharts showing a method for determining and storing a candidate thumbnail image in the broadcast receiving apparatus according to an exemplary embodiment;
FIG. 29 is a flowchart showing a method for determining a representative thumbnail image in the broadcast receiving apparatus according to an exemplary embodiment.
FIG. 30 is an illustrative view showing a method for determining the validity for generating a summary content on the basis of a detected event section in the broadcast receiving apparatus according to an exemplary embodiment;
FIG. 31 is an illustrative view showing a method for generating a summary content on the basis of an image section of an event section in the broadcast receiving apparatus according to an exemplary embodiment;
FIGs. 32 and 33 are illustrative views showing a method for providing a summary content service in the broadcast receiving apparatus according to an exemplary embodiment;
FIGs. 34 to 44 are block diagrams of a broadcast receiving apparatus to generate and simultaneously replay a summary content regarding a content according to an exemplary embodiment;
FIG. 45 is a flowchart showing a method for providing a summary content service in the broadcast receiving apparatus according to an exemplary embodiment;
FIG. 46 is a flowchart showing a method for generating and replaying a summary content in the broadcast receiving apparatus according to an exemplary embodiment;
FIG. 47 is an illustrative view showing a method for outputting a summary content section in the broadcast receiving apparatus according to an exemplary embodiment;
FIG. 48 is an illustrative view showing a method for outputting a recorded content in the broadcast receiving apparatus according to an exemplary embodiment;
FIGs. 49 to 53 are block diagrams of a broadcast receiving apparatus that provides a summary content service according to an exemplary embodiment;
FIGs. 54 to 58 are block diagrams of a broadcast receiving apparatus that provides a summary content service of a content different from a content that is being viewed, according to an exemplary embodiment;
FIG. 59 is a flowchart showing a method for generating bookmarking information related to a summary content service in the broadcast receiving apparatus according to an exemplary embodiment; and
FIG. 60 is a flowchart showing a method for outputting a recorded content related to a summary content service in the broadcast receiving apparatus according to an exemplary embodiment.

### [BEST MODE FOR CARRYING OUT THE INVENTION]

-

### [MODE FOR THE INVENTION]

Reference will now be made in detail to the present exemplary embodiments of the present invention, examples of which are illustrated in the accompanying drawings, wherein like reference numerals refer to the like elements throughout. The exemplary embodiments are described below in order to explain the present invention by referring to the figures.

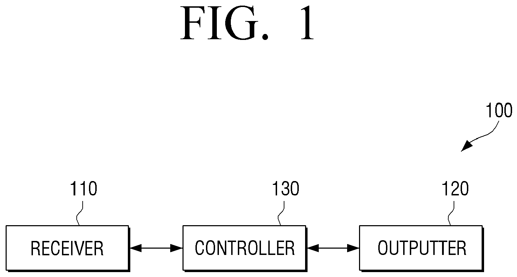

FIG. 1 is a block diagram of a broadcast receiving apparatus according to an exemplary embodiment of the present invention.

With reference to FIG. 1, the broadcast receiving apparatus 100 is a terminal device capable of receiving contents from a broadcast server (not shown), for example a terminal device such as a smart television (TV), a smart phone, and a tablet PC, or a set-top box which outputs contents received from the broadcast server (not shown) to a terminal device such as a smart TV. The broadcast receiving apparatus 100 may include a receiver 110, an outputter 120, and a controller 130.

The receiver 110 receives a content via a channel selected by a user among a plurality of contents provided from the broadcast server (not shown). The outputter 120 outputs the content received by the receiver 110. More specifically, the receiver 110 is tuned into a channel requested by the user using a tuner (not shown), and receives a content such as a terrestrial broadcast or cable broadcast from the broadcast server (not shown) through the tuned channel. The content may include video and audio data, and be processed in such a form that the broadcast receiving apparatus 100 can output. Accordingly, the outputter 120 may output a content including video and audio data processed in such a form that the broadcast receiving apparatus 100 can output. In particular, according to a control command of the controller 130, the outputter 120 may output a summary content related to the content or output the content and the summary content at the same time.

The controller 130 controls overall operation of the components of the broadcast receiving apparatus 100. In particular, the controller 130 detects at least one event section corresponding to a predetermined condition by analyzing at least one of the video and audio data in the content received by the receiver 110, but the present invention is not limited thereto. The controller 130 may detect at least one event section corresponding to a predetermined condition by analyzing at least one of video and audio data in a content pre-stored in a storage 160.

In response to the at least one event section of the broadcast content being detected, the controller 130 generates a summary content on the basis of the at least one detected event section. The summary content may be a highlight image of a content which is streamed by a broadcast server (not shown) in real time or which is recorded and stored in the storage 160.

In response to the summary content of the content being generated, the controller 130 may control the outputter 120 to output the generated summary content in accordance with a user command. Consequently, the outputter 120 may output the generated summary content of the real-time streamed content or the recorded content, or output the content and the summary content at the same time. In addition, the outputter 120 may output the real-time streamed content and simultaneously output a pre-stored summary content related to another content according to a control command of the controller 130.

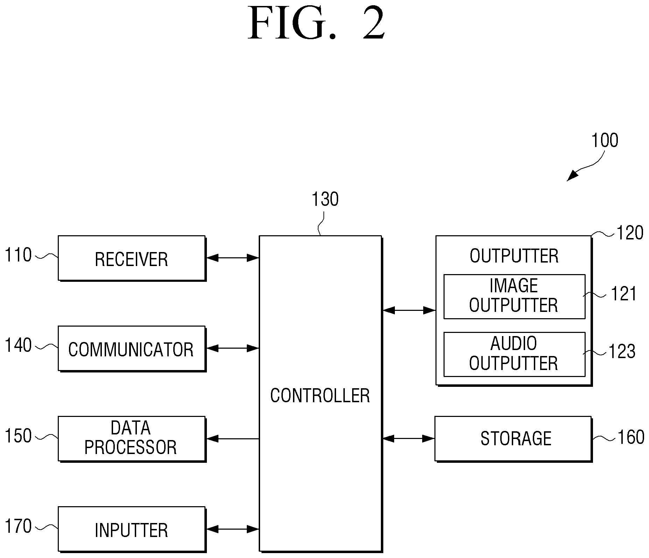

Hereinafter, the configuration of the broadcast receiving apparatus 100 is described in detail below with reference to FIG. 2.

FIG. 2 is a detailed block diagram of the broadcast receiving apparatus 100 according to an exemplary embodiment.

With reference to FIG. 2, the broadcast receiving apparatus 100 may include a receiver 110, an outputter 120, and a controller 130 as described above, and further include a communicator 140, a data processor 150, a storage 160, and an inputter 170.

The communicator 140 may receive a content that the user requests by communicating with a content server (not shown) that provides contents by wire or wirelessly, or may receive a user command by communicating with a remote controller (not shown) that controls operation of the broadcast receiving apparatus 100. More specifically, the communicator 140 may receive a user command such as a channel selection command, a summary content generation command, and a summary content playback command from the remote controller (not shown).

The communicator 140 may include diverse communication modules such as a short distance wireless communication module (not shown) and a wireless communication module (not shown). The short distance wireless communication module is a module that communicates with an external device such as a broadcast receiving apparatus (not shown) and a user terminal device (not shown) in a short distance using a short distance wireless communication method such as Bluetooth, Zigbee, etc. The wireless communication module is a module that performs communication by connecting to an external network using a wireless communication protocol such as Wi-Fi, institute of electrical and electronics engineers (IEEE), etc. The wireless communication module may further include a mobile communication module that performs communication by accessing to a mobile communication network using diverse mobile communication standards such as 3^{rd} generation (3G), 3^{rd} generation partnership project (3GPP), long term evolution (LTE), etc.

The data processor 150 divides the content received by the receiver 110 or the communicator 140 into video and audio data by demultiplexing the content. The content may further include additional data such as text information and EPG information as well as the video and audio data. In this case, the data processor 150 may divide the content into the video and audio data and the additional data by demultiplexing the content.

In response to the content being divided into the video and audio data, the data processor 150 signal-processes the video and audio data in such a form that the broadcast receiving apparatus 100 can output. More specifically, the data processor 150 decodes the video data separated from the content and then converts the decoded video data into outputtable video data. In addition, the data processor 150 decodes the audio data separate from the content and then converts the decoded audio data into analog sound data. Accordingly, the outputter 120 may output the video data and audio data signal-processed by the data processor 150 through an image outputter 121 and an audio outputter 123.

In response to the video and audio data of the content being signal-processed by the data processor 150, the controller 130 analyzes at least one of the signal-processed video and audio data, detects at least one event section corresponding to a predetermined condition, and generates a summary content on the basis of the at least one detected event section. According to an exemplary embodiment, the controller 130 analyzes at least one of the video and audio data in the content, and detects at least one event section corresponding to a predetermined condition using an event detector 131, which will be described later. Subsequently, the controller 130 acquires an image section of the detected event section, and acquires previous and subsequent image sections on the basis of the acquired image section. Subsequently, the controller 130 determines a content summary section including the acquired image section of the event section and the acquired previous and subsequent image sections, and generates a summary content on the basis of the determined content summary section.

According to an exemplary embodiment, the storage 160 may store an event detection module, a content summary module, and a summary content generation module. Accordingly, the controller 130 may detect an event on a content, determine a content summary section, and generate a summary content using the event detection module, the content summary module, and the summary content generation module pre-stored in the storage 160.

The event detection module is a module for detecting at least one event section related to a summary content of a content. The content summary module is a module for determining whether to determine an image section regarding at least one event section detected by the event detection module and acquired previous and subsequent image sections related to the corresponding image section as a content summary section. The summary content generation module is a module for generating a summary content on the basis of the image section regarding the event section and the previous and subsequent image sections which are determined as the content summary section.

Accordingly, the controller 130 may detect an event section, determine whether an image section regarding the detected event section and previous and subsequent image sections related to the image section are valid as a content summary section, and generate a summary content regarding the corresponding content using the event detection module, the content summary module, and the summary content generation module.

The storage 160 does not store only the event detection module, the content summary module, and the summary content generation module but also stores an operating system program that controls operation of the broadcast receiving apparatus 100, and an application program that is managed by the operating system, operates the broadcast receiving apparatus 100 using resources of the operating system, and provides a user interface. The operating system may be a program that is read and compiled from the storage 160 when the broadcast receiving apparatus 100 is turned on, and operates the components of the broadcast receiving apparatus 100. The application program is read out from the storage 160 by the operating system in accordance with an execution command of the user, is transited to an executable form, and thereby performs diverse operations. In addition, the storage 160 may store diverse multimedia data and content data processed by the controller 130, and data received from an external source.

The storage 160 may be implemented with at least one of a read-only memory (ROM), a random-access memory (RAM), a memory card (for example, a secure digital (SD) card and a memory stick) which is removable from the broadcast receiving apparatus 100, a non-volatile memory, a volatile memory, a hard disk drive (HDD), and a solid slate drive (SSD).

The inputter 170 receives a user command input from an input means such as a manipulator (not shown) provided on the broadcast receiving apparatus 100 or a touch panel (not shown), and transmits the user command to the controller 130. The user command may include a channel selection command, a summary content generation command, a summary content playback command, etc. The inputter 170 may include a speech recognition module (not shown) that recognizes the user's speech. The inputter 170 may recognize the user's speech for diverse user commands such as a channel selection command, a summary content generation command, and a summary content playback command using the speech recognition module (not shown), and transmit the result of speech recognition to the controller 130.

Accordingly, in response to a summary content generation command being input or received by the inputter 170 or the communicator 140, the controller 130 detects at least one event section by analyzing at least one of video and audio data included in a content using the pre-stored event detection module. The controller 130 may detect at least one event section from a content using the event detection module as in the following exemplary embodiments.

In an exemplary embodiment, the controller 130 may analyze video data included in a content and detect an image section corresponding to a play situation condition pre-stored in the storage 160 as at least one event section. The play situation condition pre-stored in the storage 160 may be a condition to detect an event section from a sports-related content among diverse genres of contents. For example, when the content is a soccer-related sport content, the play situation condition may include a goal scene, a player entrance scene, a shoot scene, etc. Accordingly, the controller 130 may analyze video data included in the sport-related content and detect an image section corresponding to the play situation condition such as the goal scene, the player entrance scene, and the shoot scene, as at least one event section.

In another exemplary embodiment, the controller 130 may analyze audio data in a content and detect as an event section an image section having an audio signal level which is equal to or higher than a threshold level pre-stored in the storage 160. For example, an audio signal level of audio data corresponding to an image section related to a goal scene may be higher than a general audio signal level. Accordingly, the controller 130 may analyze audio data of the content, and detect as an event section an image section of an audio section having an audio signal level which is equal to or higher than the predetermined threshold level.

In yet another exemplary embodiment of the present invention, the controller 130 may perform speech to text (STT) analysis of audio data in a content, generate text data, and detect an image section including a predetermined term as an event section on the basis of the generated text data. For example, when the content is a soccer-related sport content, the predetermined term may include "goal" and "goal-in", or when the broadcast content is a baseball-related sport content, the predetermined term may include "home-in" and "homerun".

Accordingly, when a sport-related content is received, the controller 130 acquires a predetermined term related to the corresponding sport content from among the predetermined terms which are pre-stored in the storage 160 according to genres of sport. Subsequently, the controller 130 generates text data from audio data in the sport content using an STT analysis algorithm, and acquires text data including the predetermined term related to the sport of the content from among the generated text data. In response to the text data including the predetermined term being acquired, the controller 130 detects as an event section an image section having the text data including the predetermined term.

However, the present invention is not limited thereto. The receiver 110 or the communicator 140 may receive a sport-related content and event information regarding the sport from the broadcast server (not shown) or the content server (not shown). In this case, the controller 130 may analyze video data or audio data included in the sport-related content on the basis of the event information and detect a specific image section as an event section.

In addition, a sport-related content received from the broadcast server (not shown) or the content server (not shown) may further include additional data including subtitle information in a text form as well as video and audio data. In this case, the controller 130 may analyze the additional data added to the sport-related content and detect as an event section an image section related to additional data including a text image including a predetermined term.

In response to at least one event section being detected from the content according to the above exemplary embodiments, the controller 130 analyzes an image section of the at least one detected event section using the content summary module stored in the storage 160 and determine whether the content of the image section is a sport-related content.

According to the exemplary embodiments, the controller 130 determines whether the content is a sport-related content on the basis of color included in image information of the image section of the at least one detected event section and a proportion value of the color.

More specifically, the storage 160 may pre-store a predetermined field color according to genres of sport, and a first threshold value which is predetermined with respect to a proportion value which a color corresponding to the field color accounts for. For example, a field color of soccer or baseball may be predetermined with green, a field color of ice hockey may be predetermined with white, and a field color of swimming may be predetermined with blue. Each field color of each sport may be predetermined, and a first threshold value regarding a proportion of each field color displayed on the screen may be predetermined.

Accordingly, the controller 130 determines whether the predetermined field color is included in color information of image information of the image section of the at least one detected event section on the basis of the field color and the first threshold value of each sport which are pre-stored in the storage 160. For example, when the content is a soccer-related sport content, the controller 130 acquires the field color (green) and the first threshold value of soccer from among the field colors of each sport pre-stored in the storage 160. Subsequently, the controller 130 determines whether a color corresponding to the acquired field color is included in color information of image information of the image section of the detected event section. As a result, when the color corresponding to the acquired field color is included, the controller 130 calculates a proportion value of the color corresponding to the acquired field color. That is, the controller 130 calculates a proportion value which the color corresponding to the predetermined field color accounts for among the colors which are applied to the image section of the at least one detected event section. The proportion value of the color corresponding to the predetermined field color may be calculated using a publicly known calculation algorithm.

In response to the proportion value of the color corresponding to the predetermined field color being calculated, the controller 130 determines whether the calculated proportion value is equal to or higher than the predetermined first threshold value. When the calculated proportion value is equal to or higher than the predetermined first threshold value, the controller 130 determines that the content is a sport-related broadcast content.

When the broadcast content is sport-related broadcast content, the controller 130 determines whether the sport is being played.

In an exemplary embodiment of the present invention, the controller 130 may determine whether the sport is being played according to whether a proportion value of the color corresponding to the predetermined field color among the colors included in image information of an image section which is adjacent to the image section of the at least one detected event section is equal to or higher than a second threshold value. The second threshold value may be equal to the first threshold value, or be a newly set value.

For example, on the basis of image information of a first image section which is detected as an event section, when it is determined that broadcast content related to the first image section is a sport-related broadcast content, the controller 130 acquires image information of a previous image section and a subsequent image section which belong to a predetermined section around the first image section.

As described above, on the basis of image information of each adjacent image section which is adjacent to the image section detected as an event section, the controller 130 determines whether the color corresponding to the predetermined field color is included. As a result, when at least one of the adjacent image sections does not include the color corresponding to the predetermined field color, the controller 130 may determine that the sport is not being played.

However, on the basis of the image information of each adjacent image section which is adjacent to the image section detected as an event section, when the color corresponding to the predetermined field color is included, the controller 130 calculates a proportion value of the color corresponding to the predetermined field color, and compares each calculated proportion value with the predetermined second threshold value. When a proportion value of at least one of the adjacent image sections is lower than the second threshold value, the controller 130 may determine that the sport is not being played. On the other hand, when the proportion values of the color corresponding to the predetermined field color in the adjacent image sections are equal to or higher than the second threshold value, the controller 130 may determine that the sport is being played.

The state in which the sport is not being played may include for example a half time in a soccer game, and a changing time of defense and offense in a baseball game. In the half time or changing time, an advertisement content may be inserted. Accordingly, the controller 130 may determine whether the sport is being played on the basis of the determination conditions.

In another exemplary embodiment, the controller 130 may extract a guide area that indicates the play situation condition from an image of the image section of the at least one detected event section, and determine whether the sport is being played on the basis of the extracted guide area. The guide area may include at least one of the score of the game and the duration of the game.

Accordingly, the controller 130 may determine whether the sport is being played by analyzing the score of the game or the duration of the game in the guide area.

When it is determined that the received content is a sport-related broadcast content and the sport is being played on the basis of the image section of the at least one detected event section, the controller 130 acquires previous and subsequent image sections which exist within a predetermined fixed time on the basis of time regarding the at least one detected event section. Subsequently, the controller 130 determines whether there is a section in which a scene changes among the acquired previous and subsequent image sections. When there is no section in which a scene changes, the controller 130 may determine that the image section of the time regarding the at least one detected event section and the previous and subsequent image sections which exist within the predetermined fixed time are a content summary section.

When there is a section in which a scene changes, the controller 130 acquires previous and subsequent image sections of the image section of the detected event section by changing the fixed time. Subsequently, the controller 130 may determine that the image section of the detected event section and previous and subsequent image sections which belongs to the changed fixed time are a content summary section.

That is, in response to previous and subsequent image sections which exist within the predetermined fixed time from the time when the at least one event section is detected being acquired, the controller 130 determines whether there is a section in which a scene changes among the acquired previous and subsequent image sections. As a result, when there is no section in which a scene changes, the controller 130 may determine that the image section of the time when the at least one event section is detected and the previous and subsequent image sections which belong to the predetermined fixed time are a content summary section.

On the other hand, when there is a section in which a scene changes, the controller 130 changes the predetermined fixed time to a time which belongs to previous and subsequent image sections related to the image section of the time when the at least one event section is detected among the previous and subsequent image sections which belong to the predetermined fixed time. Subsequently, the controller 130 may determine that the image section of the time when the at least one event section is detected and the previous and subsequent image sections which belong to the changed fixed time are a content summary section.

In the present invention, the fixed time may include an absolute fixed time which cannot change. Accordingly, the controller 130 determines whether there is a section in which a scene changes in the remaining previous and subsequent image sections except for previous and subsequent image sections which exist in the absolute fixed time among the previous and subsequent image sections which exist within the fixed time. When there is a section in which a scene changes in the remaining previous and subsequent image sections, the controller 130 may change the fixed time within the remaining fixed time except for the absolute fixed time and acquire previous and subsequent image sections related to the image section of the detected event section.

Subsequently, the controller 130 may determine a content summary section including the image section of the detected event section and the previous and subsequent image sections which exist within the predetermined fixed time or the changed fixed time from the image section of the event section. Subsequently, the controller 130 may generate a summary content on the basis of the determined content summary section using the summary content generation module pre-stored in the storage 160.

The controller 130 acquires a thumbnail image from an image of the image section of the event section among the image sections included in the determined content summary section, matches the acquired thumbnail image with the summary content generated on the basis of the corresponding content summary section, and stores the acquired thumbnail image and the summary content in the storage 160.

In response to a plurality of thumbnail images being acquired from the image section of the event section related to the determined content summary section, the controller 130 may determine that among the plurality of thumbnail image, a thumbnail image having the least color corresponding to the predetermined valid field color or a thumbnail image including the largest object with respect to the same object included in each of the thumbnail images is a representative thumbnail image. However, the present invention is not limited thereto. When the objects included in each of the plurality of thumbnail images are not the same, the controller 130 may determine that a thumbnail image having the least number of objects or a thumbnail image including the largest object is a representative thumbnail image. Subsequently, the controller 130 matches the representative thumbnail image with the summary content, and stores the representative thumbnail image and the summary content in the storage 160. Accordingly, the storage 160 may match and store at least one summary content generated for each content and a thumbnail image of the summary content.

Subsequently, in response to a command to play back a summary content being input by the user, the controller 130 controls the outputter 120 to play back the summary content corresponding to the playback command among the summary contents stored in the storage 160. Accordingly, the outputter 120 may output the summary content corresponding to the playback command of the user and a thumbnail image of the summary content through the image outputter 121.

In response to one of the thumbnail images displayed on the screen being selected by the user, the controller 130 may control the outputter 120 to start playback from a summary content related to the selected thumbnail image. Accordingly, the outputter 120 may sequentially start output from the summary content related to the selected thumbnail image.

The detailed configuration of the broadcast receiving apparatus 100 has been described so far. Hereinafter, the operation of generating a summary content from a sport-related content received by the broadcast receiving apparatus 100 is described in greater detail.

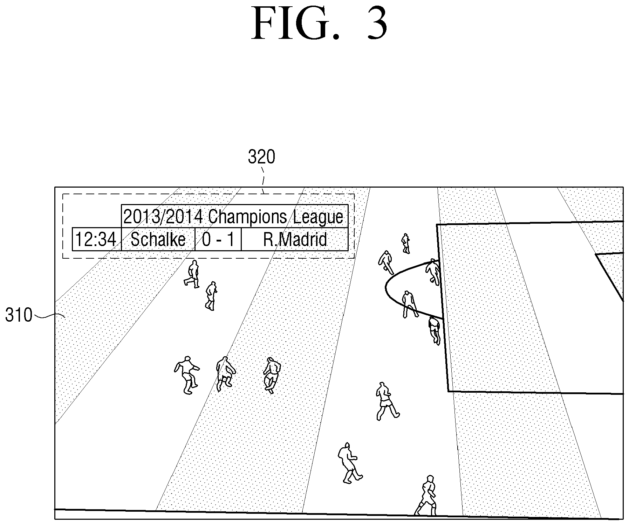

FIG. 3 is an illustrative view showing a method for determining a content summary section on the basis of an already detected event section in the broadcast receiving apparatus according to an exemplary embodiment.

With reference to FIG. 3, the broadcast receiving apparatus 100 may display a soccer-related sport content, and a currently displayed image may be an image section detected as an event section. In response to the event section being detected, the controller 130 determines whether image information of the image section of the detected event section includes a color corresponding to a predetermined field color. When the predetermined field color is green, the controller 130 determines whether the image information of the image section of the detected event section includes green. In FIG. 3, it is shown that green 310 accounts for most of the screen. When the predetermined field color is green, the controller 130 calculates a proportion value of green in the image section, and determines whether the calculated proportion value of green is equal to or higher than a first threshold value. When the calculated proportion value of green is equal to or higher than the first threshold value, the controller 130 may determine that the received content is a soccer-related sport content.

When it is determined that the received content is a soccer-related sport content, the controller 130 determines whether the soccer game is being played. More specifically, the controller 130 determines whether image information of image sections which are adjacent to the image section detected as the event section includes the predetermined field color, green. When at least one of the adjacent image sections does not include green or when a proportion value of green in at least one of the adjacent image sections is lower than a predetermined threshold value, the controller 130 may determine that the soccer game is not being played.

On the other hand, when all the adjacent image sections include green and when a proportion value of green in each adjacent image section is equal to or higher than the predetermined threshold value, the controller 130 may determine that the soccer game is being played.

Alternatively, the controller 130 may determine whether the soccer game is being played by extracting a guide area 320 indicating the play situation condition from an image of the image section detected as the event section and analyzing the score of the game or the duration of the game in the guide area 320.

When it is determined that the image section detected as the event section is a sport-related broadcast content and the sport is being played as described above, the controller 130 may determine that the image section detected as the event section is a valid section to generate a summary content. Subsequently, the controller 130 may acquire previous and subsequent image sections of the image section detected as the event section on the basis of a predetermined fixed time with reference to the time when the event section determined as the valid section is detected, determine a content summary section on the basis of the detected image section and the previous and subsequent image sections, and generate a summary content on the basis of the determined content summary section.

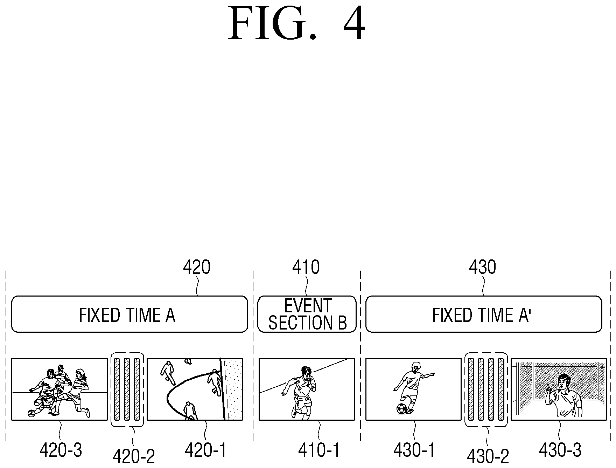

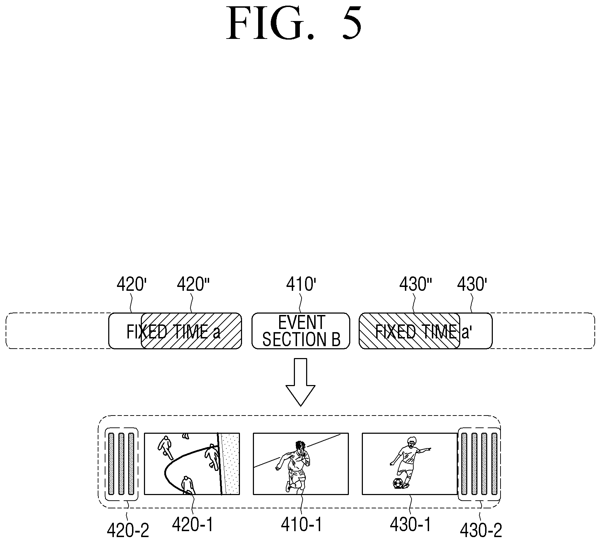

FIG. 4 is an illustrative view showing a method for generating a summary content on the basis of a fixed time according to an exemplary embodiment, and FIG. 5 is an illustrative view showing a method for generating a summary content on the basis of a variable fixed time according to an exemplary embodiment.

With reference to FIG. 4, in response to an image section of an event section being acquired on the basis of time information of the event section detected as a valid section to generate a summary content, the controller 130 may acquire previous and subsequent image sections which exist within a predetermined fixed time from the acquired image section of the event section.

In FIG. 4, an image section 410-1 corresponding to an event section B 410 may be determined to be a valid section to generate a summary content. In response to the image section 410-1 corresponding to the event section B 410 being determined to be a valid section, the controller 130 acquires image sections which are within predetermined fixed time A and A' 420 and 430 from the image section 410-1 corresponding to the event section B 410.

In FIG. 4, the controller 130 may acquire first to third image sections 420-1 to 420-3 which are within the predetermined fixed time A 420 from the time when the image section 410-1 of the event section B 410 is detected among the image sections before the image section 410-1. In addition, the controller 130 may acquire fourth to sixth image sections 430-1 to 430-3 which are within predetermined fixed time A' 430 from the time when the image section 410-1 of the event section B 410 is detected among the image sections after the image section 410-1.

In response to the first to third image sections 420-1 to 420-3 which are within the predetermined fixed time A 420 and the fourth to sixth image sections 430-1 to 430-3 which are within the predetermined fixed time A' 430 being acquired, the controller 130 determines whether there is a section in which a scene changes in the image sections which are within the predetermined fixed time A and A' 420 and 430. It may be determined that the third image section 420-3 and the sixth image section 430-3 are sections in which a scene changes. The third image section 420-3 may be a section in which a scene of the first and second image sections 420-1 and 420-2 starts, and the sixth image section 430-3 may be a section in which a scene of the fourth and fifth image sections 430-1 and 430-2 finishes.

In response to the sections in which a scene changes being detected in the image sections which are within the predetermined fixed time A and A' 420 and 430, the controller 130 changes the predetermined fixed time A and A' 420 and 430 to fixed time a and a' 420' and 430' as shown in FIG. 5. That is, with respect to the predetermined fixed time A 420, the controller 130 changes the fixed time A 420 to the fixed time a 420' in order to include the first and second image sections 420-1 and 420-2 except for the third image section 420-3 in which a scene changes. In addition, with respect to predetermined fixed time A' 430, the controller 130 changes the fixed time A' 430 to the fixed time a' 430' in order to include the fourth and fifth image sections 430-1 and 430-2 except for the sixth image section 430-3 in which a scene changes.

In response to the fixed time A and A' 420 and 430 changing to the fixed time a and a' 420' and 430', the controller 130 may determine a content summary section including the image section 410-1 of the event section B 410', the first and second image sections 420-1 and 420-2 which exist within the changed fixed time a 420', and the fourth and fifth image sections 430-1 and 430-2 which exist within the changed fixed time a' 430' as shown in FIG. 5, and generate a summary content on the basis of the determined content summary section.

However, the present invention is not limited thereto. The fixed time A and A' (420 and 430) may include absolute fixed time 420", 430" such as the slashed area in FIG. 5. The image sections which exist within the absolute fixed time 420" and 430" may be included in the content summary section together with the image section (410-1) of the event section B 410'. That is, the controller 130 may change the fixed time A and A' 420 and 430 within the remaining fixed time except for the absolute fixed time 420" and 430" according to whether a scene changes in the image sections which exist in the remaining fixed time except for the absolute fixed time 420" and 430".

The controller 130 generates a summary content on the basis of the content summary section including the image section of the event section and the image sections which exist within the predetermined fixed time or the changed fixed time so that a more natural summary content regarding an event section such as a goal scene may be generated.

The operation of generating a summary content from a content received by the broadcast receiving apparatus 100 has been described in detail with reference to the diverse exemplary embodiments. Hereinafter, a method for generating a summary content from a content received by the broadcast receiving apparatus 100 is described.

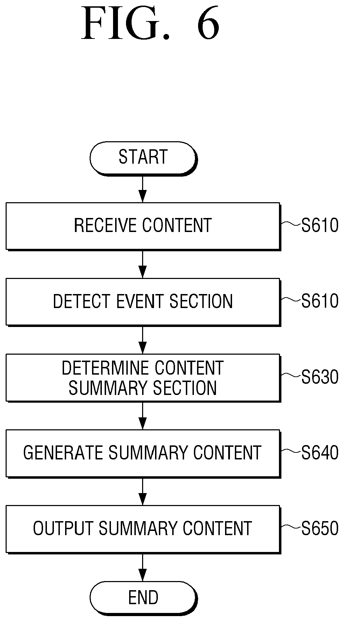

FIG. 6 is a flowchart showing a method for providing a summary content service in the broadcast receiving apparatus according to an exemplary embodiment.

With reference to FIG. 6, in response to the broadcast receiving apparatus 100 receiving a content from a broadcast server (not shown) or a content server (not shown), the broadcast receiving apparatus 100 analyzes at least one of video and audio data in the received content, and detects at least one event section corresponding to a predetermined condition (S610 and S620). However, the present invention is not limited thereto. The broadcast receiving apparatus 100 may analyze at least one of video and audio data in a recorded and stored content, and detect at least one event section corresponding to the predetermined condition.

More specifically, the broadcast receiving apparatus 100 separates video and audio data by demultiplexing the received content or the recorded content. Subsequently, the broadcast receiving apparatus 100 decodes the separate video and audio data and signal-processes the decoded video and audio data in such a form that the broadcast receiving apparatus 100 can output.

In response to the video and audio data included in the content being signal-processed, the broadcast receiving apparatus 100 may analyze at least one of the signal-processed video and audio data, and detect at least one event section corresponding to the predetermined condition. In response to the at least one event section being detected, the broadcast receiving apparatus 100 determines a content summary section on the basis of an image section of the at least one detected event section and previous and subsequent image sections of the image section, and generates a summary content on the basis of the determined content summary section (S630 and S640). According to an exemplary embodiment, the broadcast receiving apparatus 100 may detect an event of the content, determine a content summary section, and generate a summary content using an event detection module, a content summary module, and a summary content generation module. In response to the summary content being generated using these modules, the broadcast receiving apparatus 100 stores the summary content. Subsequently, the broadcast receiving apparatus 100 may output the summary content of the content in accordance with a user command, or output the content and the summary content at the same time (S650).

In operation S620, the broadcast receiving apparatus 100 may detect the at least one event section corresponding to the predetermined condition from the content requested by the user according to the following exemplary embodiments.

In an exemplary embodiment, the broadcast receiving apparatus 100 may analyze video data in a content and detect an image section corresponding to a pre-stored play situation condition as at least one event section. The pre-stored play situation condition may be a condition to detect at least one event section from a sport-related content among diverse genres of contents.

In another exemplary embodiment, the broadcast receiving apparatus 100 may analyze audio data in the content and detect as an event section an image section having an audio signal level which is equal to or higher than a pre-stored threshold level.

In yet another exemplary embodiment, the broadcast receiving apparatus 100 may perform speech to text (STT) analysis of audio data in the content, generate text data, and detect an image section including a predetermined term as an event section on the basis of the generated text data.

However, the present invention is not limited thereto. The broadcast receiving apparatus 100 may receive a sport-related content and event information regarding the sport from a broadcast server (not shown) or a content server (not shown). In this case, the broadcast receiving apparatus 100 may analyze video data or audio data included in the content requested by the user on the basis of the event information and detect a specific image section as an event section. In addition, a sport-related content received from the broadcast server (not shown) or the content server (not shown) may further include additional data including subtitle information in a text form as well as video and audio data. In this case, the broadcast receiving apparatus 100 may analyze the additional data included in the sport-related content and detect as an event section an image section related to the additional data including a text image including a predetermined term.

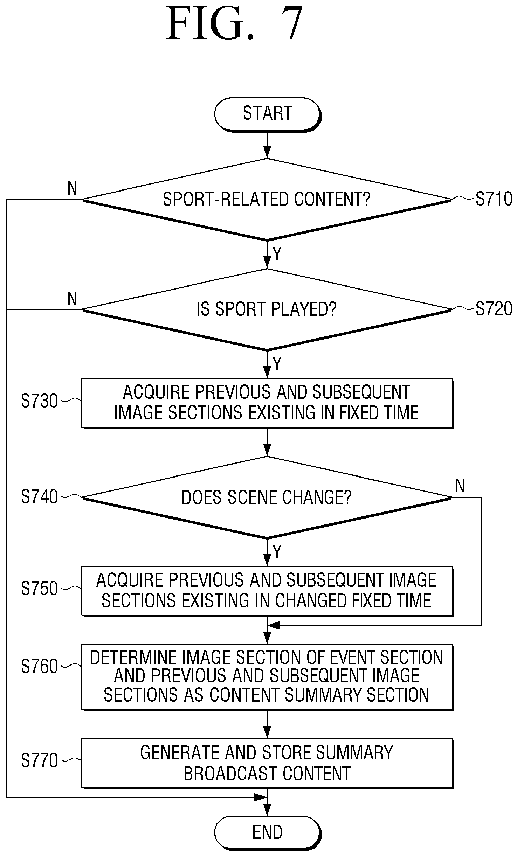

In response to at least one event section being detected from the content according to the above exemplary embodiments, the broadcast receiving apparatus 100 may determine whether the at least one detected event section is a valid section to generate a summary content. When the detected event section is a valid section, the broadcast receiving apparatus 100 may determine a content summary section on the basis of an image section of the event section and previous and subsequent sections of the image section. Hereinafter, a method for determining a content summary section on the basis of at least one detected event section in the broadcast receiving apparatus 100 is described in greater detail with reference to FIG. 7.

FIG. 7 is a flowchart showing a method for determining a content summary section to generate a summary content on the basis of an image section of at least one detected event section in the broadcast receiving apparatus 100 according to an exemplary embodiment.

With reference to FIG. 7, in response to the broadcast receiving apparatus 100 detecting at least one event section from a received content using an event detection module to generate a summary content, the broadcast receiving apparatus 100 determines whether the received content is a sport-related content on the basis of colors and a proportion value of each color included in image information of an image section of the at least one detected event section (S710).

In an exemplary embodiment, the broadcast receiving apparatus 100 may pre-store a predetermined field color according to genres of sport, and a first threshold value which is predetermined with respect to a proportion value which a color corresponding to the field color accounts for. Accordingly, the broadcast receiving apparatus 100 determines whether color corresponding to the predetermined field color is included in color information of image information of the image section of the at least one detected event section on the basis of the field color and the first threshold value which are pre-stored according to each genre of sport. When the color corresponding to the predetermined field color is included, the broadcast receiving apparatus 100 calculates a proportion value of the color corresponding to the predetermined field color, and determines whether the calculated proportion value is equal to or higher than the predetermined first threshold value. When the calculated proportion value is equal to or higher than the predetermined first threshold value, the broadcast receiving apparatus 100 determines that the received content is a sport-related content.

When the received content is a sport-related content, the broadcast receiving apparatus 100 determines whether the sport is being played (S720).

In an exemplary embodiment, the broadcast receiving apparatus 100 may determine whether the sport is being played according to whether a proportion value of the color corresponding to the predetermined field color in the colors included in image information of image sections which are adjacent to the image section of the at least one detected event section is equal to or higher than a second threshold value. The second threshold value may be equal to the first threshold value, or be a newly set value.

More specifically, when at least one of the adjacent image sections which are adjacent to the image section detected as the event section does not include the color corresponding to the predetermined field color or when a proportion value of the color corresponding to the predetermined field color is lower than the predetermined second threshold value, the broadcast receiving apparatus 100 may determine that the sport is not being played. The state in which the sport is not being played may include for example a half time in a soccer game, and a changing time of defense and offense in a baseball game. On the other hand, when the image sections which are adjacent to the image section detected as the event section include all colors corresponding to the predetermined field color, and when a proportion value of each color corresponding to the field color is equal to or higher than the predetermined second threshold value, the broadcast receiving apparatus 100 may determine that the sport is being played.

In another exemplary embodiment, the broadcast receiving apparatus 100 may extract a guide area that indicates the play situation condition from an image of the image section of the at least one detected event section, and determine whether the sport is being played on the basis of the extracted guide area. The guide area may include at least one of the score of the game and the duration of the game.

Accordingly, the broadcast receiving apparatus 100 may determine whether the sport is being played by analyzing the score of the game or the duration of the game in the guide area.

When it is determined that the received content is a sport-related content and the sport is being played on the basis of the image section of the at least one detected event section, the broadcast receiving apparatus 100 acquires previous and subsequent image sections which exist within a predetermined fixed time from the time when the image section of the at least one event section is detected (S730). Subsequently, the broadcast receiving apparatus 100 determines whether a scene changes in at least one of the acquired previous and subsequent image sections existing within the predetermined fixed time (S740).

When a scene changes in the acquired previous and subsequent image sections existing within the predetermined fixed time, the broadcast receiving apparatus 100 acquires previous and subsequent image sections which exist within a changed fixed time from among the previous and subsequent image sections which exist within a predetermined fixed time (S750). That is, the broadcast receiving apparatus 100 changes the predetermined fixed time to a time which belongs to previous and subsequent image sections related to the image section of the time when the at least one event section is detected among the previous and subsequent image sections which belong to the predetermined fixed time. Subsequently, the broadcast receiving apparatus 100 determines that the previous and subsequent image sections which exist in the changed fixed time, and the image section of the at least one event section between the previous and subsequent image sections are a content summary section (S760). In operation S740, when a scene does not change in the acquired previous and subsequent image sections which exist in the predetermined fixed time, the broadcast receiving apparatus 100 determines that the previous and subsequent image sections which exist in the predetermined fixed time, and the image section of the at least one event section between the previous and subsequent image sections are a content summary section.

In the present invention, the fixed time may include an absolute fixed time which cannot change. Accordingly, the broadcast receiving apparatus 100 determines whether there is a section in which a scene changes in the remaining previous and subsequent image sections except for previous and subsequent image sections which exist in the absolute fixed time among the previous and subsequent image sections which exist within the fixed time. When it is determined that there is a section in which a scene changes in the remaining previous and subsequent image sections, the broadcast receiving apparatus 100 may change the fixed time within the remaining fixed time except for the absolute fixed time and acquire previous and subsequent image sections related to the image section of the detected event section.

As described above, the broadcast receiving apparatus 100 determines a content summary section including the image section of the event section and the previous and subsequent image sections which exist within the predetermined fixed time or the changed fixed time from the image section of the event section. Subsequently, the broadcast receiving apparatus 100 generates and store a summary content on the basis of the determined content summary section (S770).

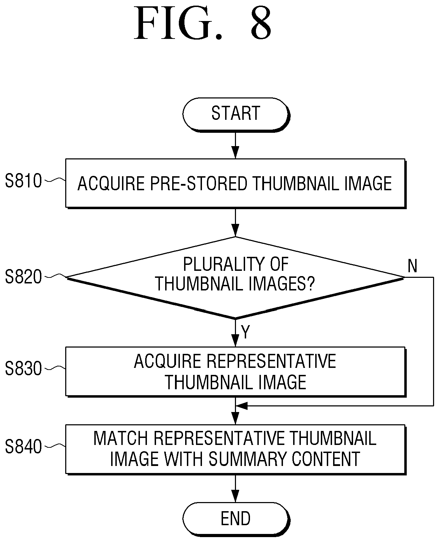

FIG. 8 is a flowchart showing a method for generating a summary content in the broadcast receiving apparatus 100 according to an exemplary embodiment of the present invention.

With reference to FIG. 8, in response to at least one event section being detected, the broadcast receiving apparatus 100 stores thumbnail information regarding the detected event section. At this time, the broadcast receiving apparatus 100 may also store information regarding the time when the event section is detected. Subsequently, in response to a content summary section including the image section of the time when the at least one event section is detected and previous and subsequent image sections which exist within a predetermined fixed time or a changed fixed time being determined, the broadcast receiving apparatus 100 acquires the stored thumbnail image (S810). The thumbnail image is acquired to identify a summary content generated on the basis of the determined content summary section. In response to the thumbnail image being acquired, the broadcast receiving apparatus 100 determines whether there are a plurality of acquired thumbnail images (S820).

In response to a plurality of thumbnail images being acquired, the broadcast receiving apparatus 100 acquires as a representative thumbnail image a thumbnail image satisfying a predetermined condition among the plurality of thumbnail images (S830). More specifically, in response to a plurality of thumbnail images regarding the content summary section to generate a summary content being acquired, the broadcast receiving apparatus 100 may determine that among the plurality of thumbnail image, a thumbnail image having the least color corresponding to a predetermined valid field color or a thumbnail image including the largest object with respect to the same object included in each of the thumbnail images is a representative thumbnail image. However, the present invention is not limited thereto. When the objects included in each of the plurality of thumbnail images are not the same, the broadcast receiving apparatus 100 may determine that a thumbnail image having the least number of objects or a thumbnail image including the largest object is a representative thumbnail image. In response to the representative thumbnail image being determined, the broadcast receiving apparatus 100 generates a summary content on the basis of the determined content summary section, and matches and stores the summary content and the representative thumbnail image (S840).

In operation S820, when there is a single thumbnail image acquired with respect to the content summary section, the broadcast receiving apparatus 100 generates a summary content on the basis of the determined content summary section, and matches and stores the summary content and the single thumbnail image. Subsequently, in response to a command to play back the summary content being input by the user, the broadcast receiving apparatus 100 sequentially plays back at least one summary content corresponding to the playback command among the stored summary contents. At this time, the broadcast receiving apparatus 100 may display a thumbnail image of the at least one summary content corresponding to the playback command. Accordingly, in response to one of the thumbnail images displayed on the screen being selected, the broadcast receiving apparatus 100 may sequentially start playback from a summary content related to the selected thumbnail image.

The method for generating a summary content regarding a received content in the broadcast receiving apparatus 100 has been described so far. Hereinafter, operation and method for generating a summary content on the basis of a pixel value of each of a plurality of image frames constituting a content in the broadcast receiving apparatus 100 will be explained in detail.

In response to a summary content service command for a content being viewed or a recorded content stored in the storage 160 being input from the user, the controller 130 compares pixel values of a plurality of image frames of the content related to the input summary content service command, and detects an event region for the summary content service. At this time, the controller 130 may detect the event region for the summary content service by comparing the pixel values of the plurality of image frames for the content at a point of time when the summary content service command is input. Here, a content related to the summary content service may be a sporting event-related content, and the event region may be a scoreboard region which guides a sporting event situation including time information for guiding a sporting event time, team information, and score information.

In response to the event region being detected, and then an image frame for the corresponding content being input, the controller 130 detects a region corresponding to the detected event region from the input image frame, senses change of characters in the event region and the region corresponding to the event region, and senses generation of an event. Here, the sensing of the change of the character may include, for example, in response to a football game, sensing whether or not a number related to a score is changed after a goal is scored. Therefore, the controller 130 may sense the generation of the event according to whether or not the number related to the score is changed. In response to the generation of the event being sensed, the controller 130 generates a summary content such as a highlight image on the basis of an image frame period at a point of time when the event is generated, and stores the generated summary content in the storage 160. In embodiments, in response to an image frame at a point of time when the event is generated being acquired, the controller 130 may generate the summary content on the basis of the image frame at the point of time when the event is generated, and previous image frame and subsequent image frame existing in a predetermined fixed time among previous image frames and subsequent image frames of the image frame.

In response to the summary content being generated on the basis of the image frame period at the point of time when the event is generated, the controller 130 may determine a video image for one image frame among the plurality of image frames including the generated summary content to a representative thumbnail image for identifying the summary content. In embodiments, the controller 130 may analyze video images for the plurality of image frames including summary contents, and determine a video image of the image frame corresponding to a zoom-in shot image to the representative thumbnail image. In response to the representative thumbnail image for identifying the summary content being determined, the controller 130 may match the previously generated summary content with the video image determined as the representative thumbnail image for identifying the summary content, and store a matching result in the storage 160.

The controller 130 detects an event region on the basis of pixel differences of a plurality of image frames constituting a content, and determines whether or not a region corresponding to the event region exists in the image frame on the basis of the detected event region. Thereafter, the controller 130 analyzes the event region and the region corresponding to the event region, and senses generation of an event according to change of a character.

Specifically, the controller 130 may detect the event region through an event detector 131 which will be described later. Specifically, the event detector 131 compares pixel differences between corresponding pixel regions of first and second image frames among the plurality of image frames constituting the content with a preset threshold value, and calculates the number of pixel regions having a pixel difference of lower than the preset threshold value. Next, in response to the number of pixel regions having the pixel difference of lower than the preset threshold value being less than the preset threshold number of pixels, the event detector 131 determines whether or not the pixel region having the pixel difference of lower than the preset threshold value is continuously detected the preset threshold number of times or more. As a determination result, in response to the pixel region having the pixel difference of lower than the preset threshold value being continuously detected the preset threshold number of times or more, the event detector 131 detects the event region on the basis of the pixel region having the pixel difference of lower than the preset threshold value, and stores the detected event region in the storage 160.

More specifically, after a summary content generation command is input from the user, an image frame of a content corresponding to the summary content generation command may be input. In response to at least two image frames being input, the event detector 131 calculates a pixel difference Dₙ₋₁ between each pixel region of a first input image frame (hereinafter, referred to as a first image frame) Iₙ₋₁ and each pixel region of a subsequent image frame (hereinafter, referred to as a second image frame) Iₙ. In response to the pixel difference Dₙ₋₁ for each pixel region being calculated, the event detector 131 compares each calculated pixel difference Dₙ₋₁ with the preset threshold value, and calculates the number of pixel regions having a pixel difference Dₙ₋₁ of lower than the preset threshold value.

In embodiments, the event detector 131 may apply different variables to the pixel regions having the pixel difference of lower than the threshold value and the remaining pixel regions, and calculate the number of pixel regions having the pixel difference of lower than the threshold value from a number of the variables applied to the pixel regions having the pixel difference of lower than the threshold value. Specifically, the event detector 131 initializes the variables of the pixel regions of the first image frame Iₙ₋₁ to 1. Then, the event detector 131 maintains the variables of the pixel regions having the pixel difference Dₙ₋₁ of lower than the threshold value to 1 on the basis of the first and second image frames Inland Iₙ, and changes variables of pixel regions having pixel difference Dₙ₋₁ of larger than the threshold value from 1 to 0 (zero). Thus, the event detector 131 may calculate the number of pixel regions of which the variables are maintained to 1 among the variables of the pixel regions of the first image frames Iₙ₋₁.

In response to the number of pixel regions being calculated, the event detector 131 compares the number of pixel regions of which the variables are maintained to 1 with the preset threshold number of pixels, and determines whether or not the number of pixel regions of which the variables are maintained to 1 is less than the preset threshold number of pixels. As a determination result, in response to the number of pixel regions of which the variables are maintained to 1 being less than the preset threshold number of pixels, the event detector 131 increases Static_Count by 1. Subsequently, the event detector 131 compares pixel differences between the first image frame Iₙ₋₁ of which the variables are changed, and a third image frame Iₙ₊₁ after the second image frame Iₙ, and the present threshold value. Afterward, the event detector 131 maintains variables of the pixel regions having the pixel difference Dₙ₋₁ of lower than the preset threshold value to 1 and changes variables of pixel regions having the pixel difference Dₙ₋₁ of larger than the preset threshold value to 0. Next, the event detector 131 compares the number of pixel regions of which the variables are maintained to 1 with the preset threshold number of pixels, and in response to the number of pixel regions of which the variables are maintained to 1 being less than the preset threshold number of pixels, the event detector 131 further increases Static_Count, which has been increased by 1, by 1. In response to the value of Static_Count being larger than a preset value (the preset threshold number of times) through the series of processes, the event detector 131 may detect the pixel regions of which the variables are maintained to 1 among the variables of the first image frame Iₙ₋₁ as an event region for a summary content service.

In embodiments, the event detector 131 may detect the event region from the pixel regions of which the variables are maintained to 1 among the variables of the first image frame Iₙ₋₁ using a connected component algorithm such as a flood fill algorithm. The algorithm is known technology, and thus detailed description thereof will be omitted.

In other embodiments, the event detector 131 analyzes the previously detected event region, generates source information for determining generation of an event, and stores the generated source information in the storage 160. Here, the event region may be a scoreboard region related to a sporting event, and the source information may include at least one of a playing time section, a score section, and a team section.

In one embodiment, the event detector 131 may generate source information including the playing time section on the basis of the pixel region set to a variable indicating generation of a pixel difference among the variables set according to the pixel regions within the detected event region, and stores the generated source information in the storage 160.

For example, in response to soccer-related sports, the event region detected as the scoreboard region may include a playing time section indicating a playing time, and the playing time section may include a time of minute units and a time of second units. Therefore, of the playing time section, a variable of a pixel region in a region indicating the time of second units may be different from a variable of a pixel region in the remaining event region. That is, of the pixel region of the event region, the variable of the pixel region indicating the time of second units may be 0 (zero), and the variable of the remaining event region other than the pixel region indicating the time of second units may be 1. Therefore, in response to the pixel region having not the variable of 1 but the variable of 0 being detected from the variables for the pixel regions of the event region, the event detector 131 may determine the preset pixel region on the basis of the pixel region having the variable of 0 to the playing time section. At this time, the event detector 131 may determine a preset left region on the basis of the pixel region having the variable of 0 to the playing time section.

In response to the playing time section being determined, the event detector 131 may match the previously detected event region with source information including the determined playing time section, and store a matching result in the storage 160.

In other embodiments, the event detector 131 may detect a number from the previously detected event region using a number recognition algorithm, generate source information including the playing time section on the basis of a pixel region in which the number is detected in response to the detected number continuously existing at least twice, and store the source information in the storage 160. Here, the number recognition algorithm is an optical digit recognition (ODR) algorithm. The number recognition algorithm is known technology, and thus detailed description thereof will be omitted.

For example, in response to soccer-related sports, the event region detected as the scoreboard region may include regions indicating a score and a playing time, and a number image may be displayed through each region. In particular, in the response to the region indicating the score, a single number image may be displayed, and in response to the region indicating the playing time, a plurality of number images may be displayed.

In response to the numbers being detected from the previously detected event region using the number recognition algorithm, the event detector 131 may detect a number which continuously exists at least twice among the detected numbers, and determine a preset pixel region on the basis of the pixel region in which the number is detected as the playing time section. At this time, the event detector 131 may determine the preset pixel region as the score section, on the basis of the pixel region in which the number is detected in connection with the remaining numbers other than the number which continuously exists at least twice. In response to the playing time section, or the playing time section and the score section being determined, the event detector 131 may generate source information including the playing time section or source information including the playing time section and the score section, match the generated source information with the previously detected event region, and store a matching result in the stored 160.

In other embodiments, the event detector 131 may generate source information including at least one of the playing time section, the score section, and the team section using a character recognition algorithm, and store the source information in the storage 160. Here, the character recognition algorithm is an optical character recognition (OCR) algorithm. The character recognition algorithm is known technology, and thus detailed description thereof will be omitted.

For example, in response to soccer-related sports, the event region detected as the scoreboard region may include regions indicating a score, a team name, and a playing time, and a number image and a character image may be displayed through each region. In the response to the number image and the character image being displayed from the previously detected event region using a character recognition algorithm, the event detector 131 may determine the region indicating the character image to the team section, and determine the regions indicating the number image to the regions indicating the score and the playing time. As described above, in response to the region indicating the score, a single number image may be displayed, and in response to the region indicating the playing time, a plurality of number images may be displayed.

Therefore, in response to the numbers being detected from the previously detected event region, the event detector 131 may determine the preset pixel region to the playing time section, on the basis of the pixel region in which a number continuously existing at least twice is detected at least twice among the detected numbers. Further, the event detector 131 may determine the preset pixel region to the score section, on the basis of a pixel region in which a corresponding number is detected in connection with the remaining numbers other than a number continuously existing least twice or more. Therefore, in response to the team section, the score section, and the playing time section being determined, the event detector 131 may generate source information including the team section, the score section, and the playing time section, match the generated source information with the previously detected event region, and store a matching result in the storage 160.

In response to the event region being detected through the event detector 131, the controller 130 analyzes a pixel region corresponding to the event region among pixel regions an image frame input after the event region is detected, and determines whether or not a region corresponding to the event region exists.

Specifically, the controller 130 acquires the number of pixel regions of an image frame having a pixel difference of lower than a preset threshold value among pixel differences calculated from the remaining pixel regions of the previously detected event region other than the playing time section, and pixel regions of the image frame corresponding to the remaining pixel regions. Next, in response to a ratio value of the number of pixel regions of the image frame having the pixel difference of lower than the preset threshold value to the number of remaining pixel regions of the previously detected event regions other than the playing time section being less than a preset pixel ratio, the controller 130 determines the region corresponding to the event region to the event region.

More specifically, in response to an image frame being input after the event region is detected through the event detector 131, the controller 130 acquires pixel regions (hereinafter, referred to as an event candidate region) corresponding the pixel regions of the previously detected event region among the pixel regions of the input image frame.

In response to the event candidate region of the image frame being acquired, the controller 130 acquires pixel regions (hereinafter, referred to as second remaining pixel regions) corresponding to pixel regions of the remaining region other than the playing time section included in the previously generated source information in connection with the previously detected event region among pixel regions of the event candidate region. Next, the controller 130 calculates pixel differences for pixel regions from pixel regions of the remaining region other than the playing time section among the pixel regions of the event region and the second remaining pixel regions acquired from the event candidate region. The controller 130 compares the pixel differences calculated according to the pixel regions and a preset threshold value, and acquires the number of the second remaining pixel regions having a pixel difference of lower than the preset threshold value. The controller 130 calculates a ratio value of the number of pixel regions of the image frame having the pixel difference of lower than the preset threshold value to the number of the remaining pixel regions of the event region.

In embodiments, variables of the remaining pixel regions of the pixel regions of the event region other than the playing time section may be 1. Variables of the second remaining pixel regions of the event candidate region may be 1. Therefore, the controller 130 acquires the number of pixel regions for the remaining region of the event region having the variables of 1. Next, the controller 130 may change variables of the second remaining pixel regions having the pixel difference of lower than the preset threshold value from 1 to 0, and maintains variables of the second remaining pixel regions having the pixel difference of larger than the preset threshold value to 1. The controller 130 calculates a ratio value of the number of pixel regions of which the variables are maintained to 1 among the second remaining pixel regions to the number of pixel regions for the remaining region of the previously acquired event region. The controller 130 may compare the calculated ratio value with a preset threshold value, and determine the event candidate region corresponding to the event region to the event region in response to the previously calculated ratio value being less than the preset threshold value.

In response to the region corresponding to the event region existing, the controller 130 analyzes the event region and the region corresponding to the event region on the basis of the source information for the previously detected event region, and senses generation of an event.

Specifically, the controller 130 determines whether or not a score section is included in the pre-stored source information in connection with the previously detected event region. As a determination result, in response to the score section being not included in the source information, the controller 130 determines a score section on the basis of variables of pixel regions corresponding to the remaining pixel regions other than the playing time section included in the source information, among pixel regions of the region corresponding to the event region. Next, the controller 130 determines a score section from the previously detected event region on the basis of the previously detected score section. The controller 130 recognizes numbers from the score sections using a number recognition algorithm, and senses generation of an event according to change of the numbers.

As described above, a variable of the region (hereinafter, referred to as a second event region) corresponding to the event region (hereinafter, referred to as a first event region) may be changed from 1 to 0 or maintained to 1 according to the pixel differences between pixel regions of the first and second event regions. As described above, variables of pixel regions having a pixel difference of larger than the preset threshold value between pixel regions of the first and second event regions among the second remaining pixel regions of the second event region may be 1, and variables of remaining pixel regions may be 0.

Therefore, the controller 130 acquires a pixel region of which a variable is 1 among pixel regions for a remaining region of the second event region other than the playing time section. The controller 130 determines whether or not the pixel region of which the variable is 1 is continuously arranged a preset number of times or more, and determines the score section from the pixel region of which the variable is 1 using a connected component algorithm in response to the pixel region of which the variable is 1 being continuously arranged. Next, the controller 130 may determine a score section of the first event region on the basis of the score section determined from the second event region. In response to the score sections of the first and second event regions being determined, the controller 130 recognizes numbers from the score sections using a number recognition algorithm. Next, the controller 130 may compare the numbers recognized from the score sections, and determine that the event is generated in response to the numbers being different from each other.

For example, the number recognized from the score section of the first event region may be 0, and the number recognized from the score section of the second event region may be 1. Like this, in response to determining that two numbers are different from each other, the controller 130 may determine that the event is generated.

In response to the score section being included in the source information, the controller detects a score section from the second event region on the basis of the score section. Next, the controller 130 may recognize numbers from the score sections of the first and second event regions using a number recognition algorithm, compare the recognized numbers, and determines that the event is generated in response to the recognized numbers being different from each other. As described above, in response to determining that the event is generated through the numbers recognized from two score sections, the controller 130 updates the first event region and the source information pre-stored in the storage 160 with the second event region and source information related to the second event region.

Therefore, in response to an image frame being input after the event region and the source information are updated, the controller 131 may detect a new event region on the basis of the updated event region and source information, and sense generation of an event on the basis of the region detected through the event detector 131.

In response to determining that the event is generated, the controller 130 generates a summary content on the basis of an image frame at a point of time when the generation of the event is sensed, and a previous image frame and a subsequent image frame which exist with a fixed period of time on the basis of the image frame. The controller 130 determines a video image of an image frame corresponding to a zoon-in shot image among a plurality of image frames including the generated summary content to a representative thumbnail image for identifying the summary content, match the video image determined to the representative thumbnail image with the previously generated summary content, and store a matching result in the storage 160.

Until now, the components of the broadcast receiving apparatus 100 which determines event generation to provide a summary content service according to an exemplary embodiment have been described. An operation of determining event generation in the broadcast receiving apparatus 100 according to various exemplary embodiments will be described in more detail.

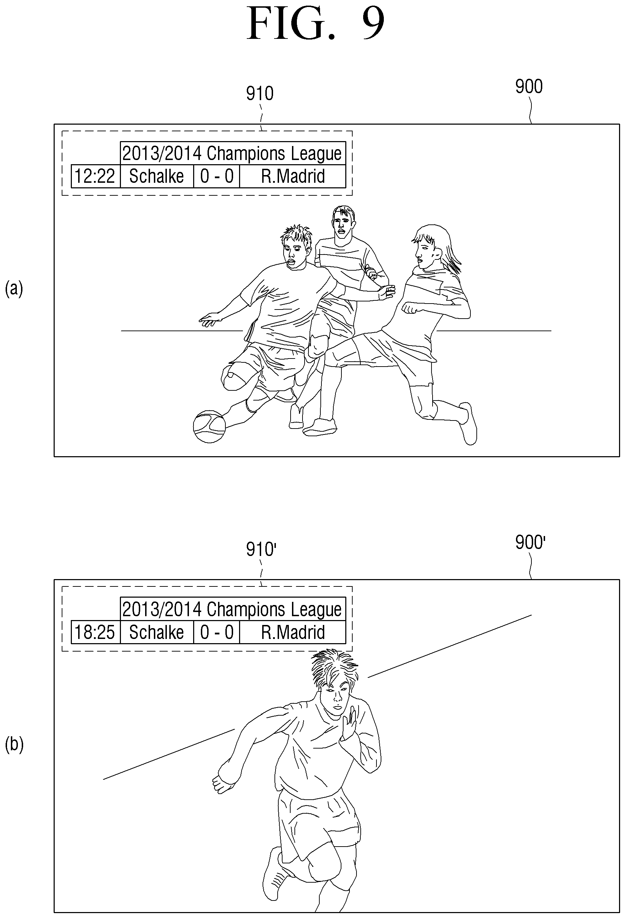

FIG. 9 is an illustrative view illustrating a method of detecting an event region in the broadcast receiving apparatus according to an exemplary embodiment.

As illustrated in views (a) and (b) of FIG. 9, in response to first and second image frames being input, the controller 130 detects an event region through the event detector 131. As described above, the event detector 131 calculates pixel differences of pixel regions of the first and second image frames, compares the calculated pixel differences with a preset threshold value, and extracts pixel regions having the pixel difference of lower than the preset threshold value.

As illustrated in views (a) and (b) of FIG. 9, scoreboards 910 and 910' may be displayed in upper left ends of first and second images 900 and 900' corresponding to the first and second image frames. At this time, pixel regions corresponding to the scoreboards 910 and 910' may have a pixel difference of lower than a preset threshold value. Therefore, the event detector 131 may detect the pixel regions corresponding to the scoreboards 910 and 910' displayed on the upper left ends of the first and second images 900 and 900' as event regions.

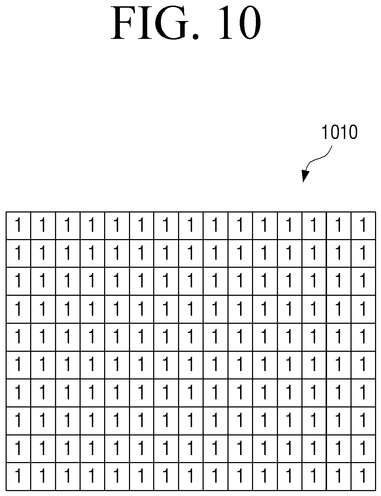

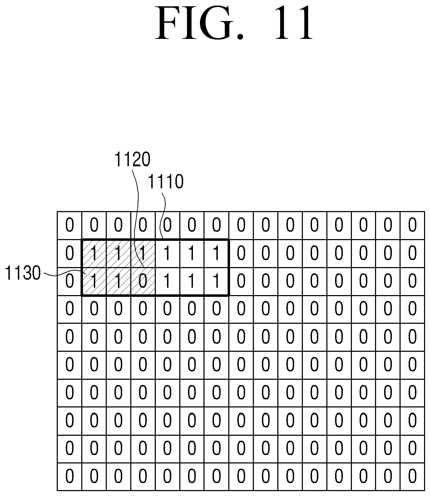

FIG. 10 is an illustrative view illustrating a variable set to an initial image frame in the broadcast receiving apparatus according to an exemplary embodiment, and FIG. 11 is an illustrative view illustrating a variable set to an image frame having a pixel difference of lower than a preset threshold value on the basis of a plurality of image frames in the broadcast receiving apparatus according to an exemplary embodiment.

In response to the first image frame as illustrated in view (a) of FIG. 9 being input, the event detector 131 sets variables of the pixel regions of the first image frame to 1 in an initial state. That is, as illustrated in FIG. 10, the event detector 131 generates an image frame 1010 in which variables of pixel regions in connection with the first image frame are set to 1 in the initial state. In response to a second image frame corresponding to the second image 900' as illustrated in view (b) of FIG. 9 being input in a state that the image frame 1010 in which the variables of the pixel regions are set to 1 in the initial state is generated, the event detector 131 calculates pixel differences between the pixel regions of the first and second image frames. Next, the event detector 131 compares the calculated pixel difference for each pixel region with a preset threshold value, and changes variables of remaining pixel regions other than pixel regions having the pixel difference of lower than the preset threshold value from 1 to 0.

As described above, scoreboards 910 and 910' may be displayed in the upper left ends of the first and second images 900 and 900' corresponding to the first and second image frames. Therefore, remaining pixel regions other than pixel regions corresponding to the scoreboards 910 and 910' may have the pixel difference of larger than the preset threshold value. At this time, as illustrated in FIG. 11, among the variables of the pixel regions of the image frame 1010 generated in connection with the first image frame, the event detector 131 changes the variables of the pixel regions having the pixel difference of larger than the preset threshold value from 1 to 0, and maintains the variables of the pixel regions having the pixel difference of lower than the preset threshold value to the preset value of 1. That is, the event detector 131 may maintain the variables of the pixel regions corresponding to the scoreboards 910 and 910' to the preset value of 1, and change the variables of the remaining pixel regions from the preset value of 1 to 0.

The event detector 131 may detect an event region 1110 from the pixel regions of which the variables are maintained to the preset value of 1 using a connected component algorithm. Time information indicating a playing time may be included in the scoreboard 910 corresponding to the first image frame as illustrated in view (a) of FIG. 9, the time information may include a time of minute units and a time of second units. Therefore, a region in which the time of second units is displayed may have a pixel difference of larger than the preset threshold value between the first and second frames. Therefore, the variable of a pixel region corresponding to the region in which the time of second units is displayed among the pixel regions in the previously detected event region 2210 may be 0. Thus, in response to the pixel region having the variable of 0 being detected in the previously detected event region 1110, the event detector 131 determines the pixel region having the variable of 0 to a region related to a playing time. Thus, the event detector 131 may determine preset pixel regions in the previously detected event region 1110 on the basis of the pixel region 1120 having the variable of 0 to a playing time section 1130.

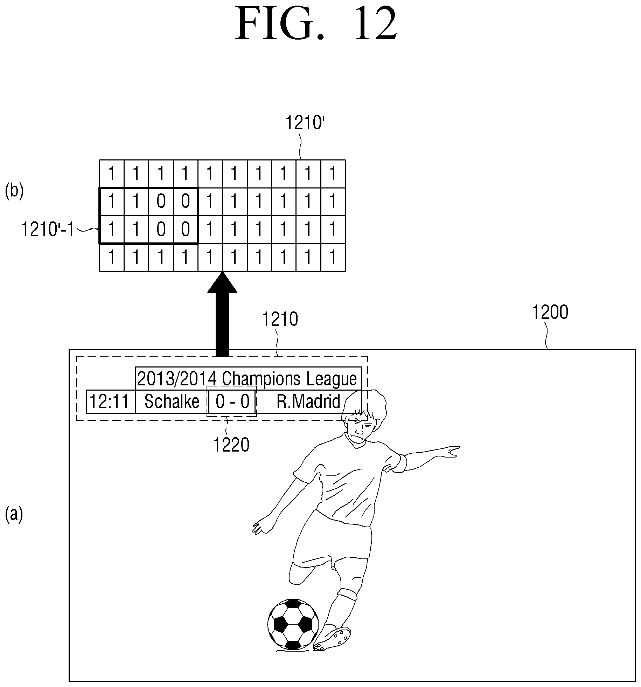

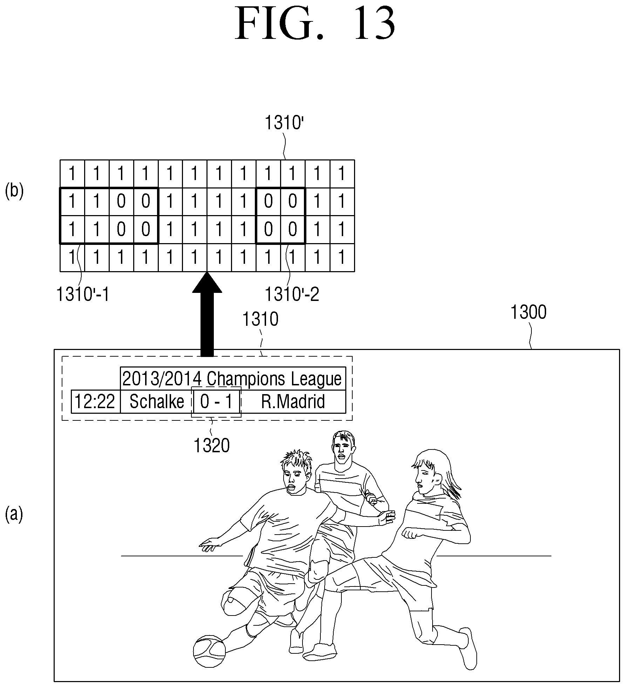

FIG. 12 is a first illustrative view illustrating a method for sensing generation of an event in the broadcast receiving apparatus according to an exemplary embodiment, and FIG. 13 is a second illustrative view illustrating a method for sensing generation of an event in the broadcast receiving apparatus according to another exemplary embodiment.

As illustrated in FIG. 12, in response to an input image frame being detected as a region corresponding to an event region in a state that the event region is detected, the controller 130 may sense whether an event is generated from variables set on the basis of pixel differences between pixel regions of the previously detected event region and pixel regions of a region corresponding to the event region.

Specifically, as illustrated in view (a) of FIG. 12, a scoreboard 1210 may be displayed in an upper left end in connection with a video image 1200 for an input image frame, and a region in which the scoreboard 1210 is displayed may be determined as a region corresponding to the event region. At this time, the controller 130 determines whether or not the event is generated on the basis of the variables set to the pixel regions of the event region and the variables of the pixel regions of the region in which the scoreboard 1210 is displayed. The variables of the pixel regions of the remaining region other than pixel regions of a playing time section 1210'-1 among pixel regions 1210' of the event region may be equally maintained on the basis of the variables of the pixel regions of two regions.

That is, a score image 1220 may be displayed in the scoreboard 1210 displayed on a video image 1200 for the input image frame, and numbers displayed on the score image 1220 may be the same as those displayed on a score image of a previous video image. At this time, as shown in view (b) of FIG. 12, variables of the pixel regions of the remaining region among the pixel regions 1210' of the event region other than pixel regions 1210'-1 of the playing time section may be equally maintained. In response to the variables of the pixel regions of the remaining region other than pixel regions 1210'-1 of the playing time section being equally maintained, the controller 130 may determine that the event is not generated.

As illustrated in view (a) of FIG. 13, a score image 1320 may be displayed in a scoreboard 1310 displayed on a upper left end in connection with a video image 1300 for the input image frame, and numbers displayed on the score image 1320 may be different from those displayed on the scoreboard of the previous video image.

For example, score-related numbers "0:0" may be displayed on the score image 1220 included in the scoreboard 1210 of the video image 1200 as described in FIG. 12. That is, the score-related numbers "0:0" may be displayed on the score image 1220 included in the scoreboard of the video image before the video image 1200 is input. After the video image 1200 is input, the video image 1300 illustrated in FIG. 13 may be input, and score-related numbers "0:1" may be displayed on the score image 1320 included in the scoreboard 1310 of the video image 1300.

In this case, as shown in view (b) of FIG. 13, variables of partial pixel regions 1310'-2 in pixel regions of the remaining region among pixel regions 1310' of the event region other than pixel regions 1320' of the playing time section may be changed from 1 to 0. In response to the variables of partial pixel regions 1310'-2 among the remaining pixel regions other than pixel regions 1310'-1 of the playing time section being changed, the controller 130 recognizes numbers from the score section for the pixel regions 1320'-2 of which the variables are changed and a score section for pixel regions corresponding to a score image 1320 included in the scoreboard 1310 using a number recognition algorithm. In response to the numbers recognized from the score sections being different from each other, the controller 130 may determine that the event is generated.

Until now, the operation of the broadcast receiving apparatus 100 according to the exemplary embodiment has been described in detail through various exemplary embodiments. Hereinafter, a method for providing a summary content service in the broadcast receiving apparatus 100 according to an exemplary embodiment will be described in detail.

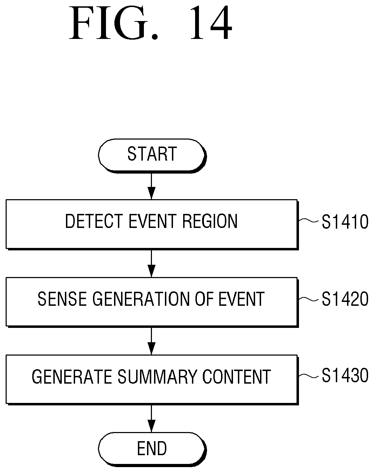

FIG. 14 is a flowchart illustrating a method for providing a summary content service in the broadcast receiving apparatus according to an exemplary embodiment.

As illustrated in FIG. 14, the broadcast receiving apparatus 100 receives an image frame for a content requested by a user according to a summary content service command of the user. In response to a plurality of image frames being input, the broadcast receiving apparatus 100 compares pixel values between a first input image frame and a subsequent input image frame among the plurality of input image frames, and detects an event region for a summary content service (S1410). Here, a content related to the summary content service may be a content for a sporting event, and the event region may be a scoreboard region for guiding a sporting event situation, which includes time information for guiding a sporting playing time, team information, and score information.

In response to the event region being detected, and then an image frame for a corresponding content being input, the broadcast receiving apparatus 100 detects a region corresponding to the previously detected event region from the input image frame, senses change in characters of the event region and the region corresponding to the event region, and sense whether the event is generated (S1420). Here, the sensing of change in the characters may include, for example, sensing whether score-related numbers are changed after a goal is scored in response to soccer-related sports. Therefore, the broadcast receiving apparatus 100 may determine that the event is generated according to change in the score-related numbers. In response to determining that the event is generated, the broadcast receiving apparatus 100 generates a summary content such as a highlight image on the basis of an image frame period at a point of time when the event is generated, and store the generated summary content (S1430). In response to the summary content being generated on the basis of the image frame period at the point of time when the event is generated, the broadcast receiving apparatus 100 may determine a video image for one image frame among the plurality of image frames including the generated summary content to a representative thumbnail image for identifying corresponding summary content. Next, the broadcast receiving apparatus 100 may match the previously generated summary content with the video image determined as the representative thumbnail image for identifying the summary content, and store a matching result.

Hereinafter, a method for detecting an event region in the broadcast receiving apparatus 100 will be described in detail.

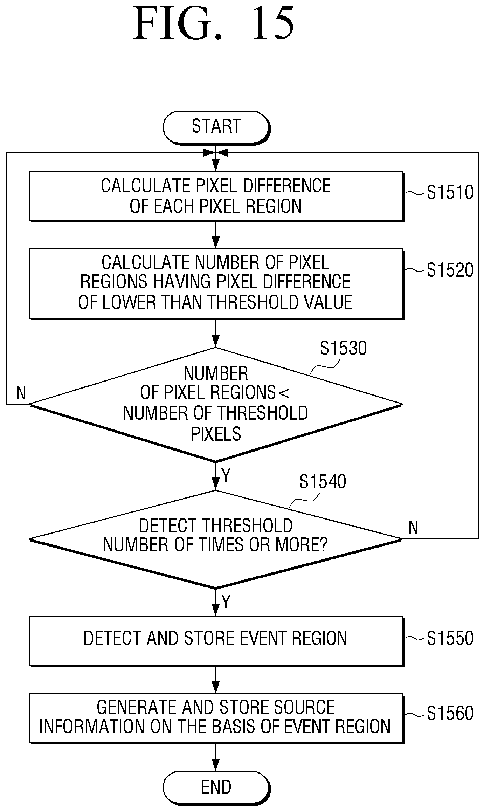

FIG. 15 is a flowchart illustrating a method for detecting an event region in the broadcast receiving apparatus according to an exemplary embodiment.

As illustrated in FIG. 15, the broadcast receiving apparatus 100 calculates pixel differences between corresponding pixel regions of a first image frame firstly input and a second image frame input after the first image frame is input, among a plurality of image frames (S1510).

In response to the pixel differences of the pixel regions being calculated, the broadcast receiving apparatus 100 compares the calculated pixel difference of each pixel region with a preset threshold value, and calculates the number of pixel regions having the pixel difference of lower than the preset threshold value (S1520). In response to the number of pixel regions having the pixel difference of lower than the preset threshold value being calculated, the broadcast receiving apparatus 100 determines whether the number of pixel regions having the pixel difference of lower than the preset threshold value is less than the preset threshold number of pixels (S1530). In response to the number of pixel regions having the pixel difference of lower than the preset threshold value being larger than the preset threshold number of pixels, the broadcast receiving apparatus 100 determines whether the number of pixel regions having the pixel difference of lower than the preset threshold value is less than the preset threshold number of pixels on the basis of pixel differences between the second image frame and an image frame input next to the second image through operations S1510 to S1530.

In response to the number of pixel regions having the pixel difference of lower than the preset threshold value being less than the preset threshold number of pixels in operation S1530, the broadcast receiving apparatus 100 determines whether the number of pixel regions having the pixel difference of lower than the preset threshold value is continuously detected the preset threshold number of times or more (S1540). As a determination result, in response to determining that the number of pixel regions having the pixel difference of lower than the preset threshold value is detected lower than the preset threshold number of times, the broadcast receiving apparatus 100 repeatedly performs the above-described operations S1510 to S1540 until the pixel region having the pixel difference of lower than the preset threshold value is continuously detected the preset threshold number of times or more.

In response to the pixel region having the pixel difference of lower than the preset threshold value being continuously detected the preset threshold number of times or more through a series of processes as described above, the broadcast receiving apparatus 100 detects an event region on the basis of the pixel region having the pixel difference of lower than the preset threshold value, and store the detected event region (S1550). Next, the broadcast receiving apparatus 100 analyzes the detected event region, generates source information for determining whether or not an event is generated, and store the source information (S1560). The event region may be a scoreboard region related to a sporting event, and the source information may include at least one of a playing time section, a score section, and a team section.

In an embodiment, the broadcast receiving apparatus 100 may generate source information including the playing time section on the basis of a pixel region of which a variable is set to a value indicating generation of the pixel difference among variables set according to the pixel regions in the detected event region, and store the generated source information. In another embodiment, the broadcast receiving apparatus 100 may detect a number from the detected event region using a number recognition algorithm, generate source information including the playing time section on the basis of a pixel region in which the number is detected in response to the detected number continuously existing twice or more, and store the generated source information. In another embodiment, the broadcast receiving apparatus 100 may generate source information including at least one of the playing time section, the score section, and the team section using a character recognition algorithm, and store the generated source information.

In response to the playing time section, the score section, and the team section being determined, the broadcast receiving apparatus 100 may generate source information including the playing time section, the score section, and the team section, match the generated source information with the detected event region, and store a matching result.

Until now, the method for detecting an event region for a summary content service in the broadcast receiving apparatus 100 according to an exemplary embodiment has been described in detail. Hereinafter, a method for sensing whether an event is generated on the basis of the detected event region in the broadcast receiving apparatus 100 will be described in detail.

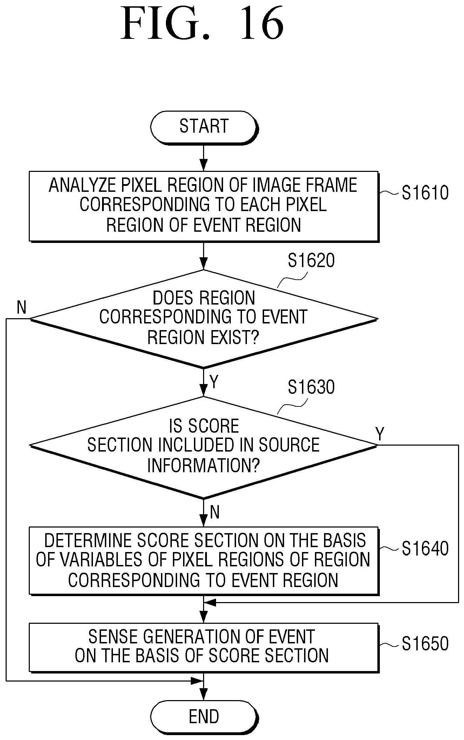

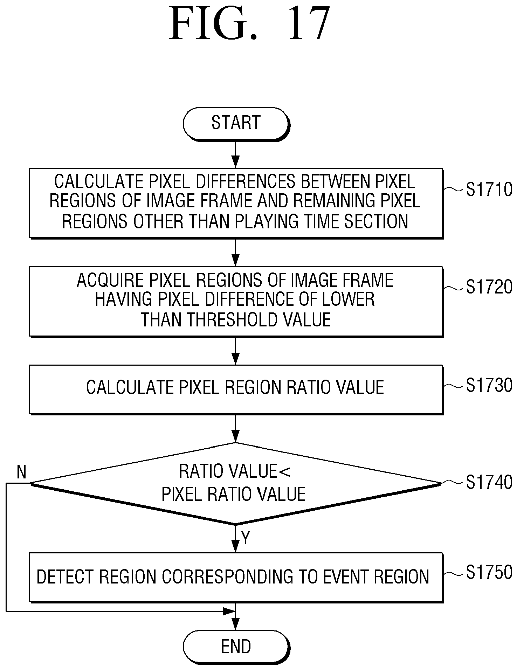

FIG. 16 is a flowchart illustrating a method for sensing whether an event is generated in the broadcast receiving apparatus according to the exemplary embodiment, and FIG. 17 is a flowchart illustrating a method for detecting a region corresponding to an event region in the broadcast receiving apparatus according to the exemplary embodiment.

As illustrated in FIG. 16, in response to an image frame being input after an event region is detected, the broadcast receiving apparatus 100 analyzes pixel regions corresponding to the event region among pixel regions of the input image frame, and determines whether or not the region corresponding to the event region exists (S1610 and S1620).

More specifically, as illustrated in FIG. 17, the broadcast receiving apparatus 100 calculates pixel differences between remaining pixel regions of the detected event region other than playing time section and pixel regions of the image frame corresponding to the remaining pixel regions (S1710). The broadcast receiving apparatus 100 acquires the number of pixel regions of the image frame having a pixel difference of lower than a preset threshold value among the pixel differences calculated from the pixel regions (S1720).

The broadcast receiving apparatus 100 calculate a ratio value of the number of pixel regions of the image frame having the pixel difference of lower than the preset threshold value to the number of the remaining pixel regions of the detected event region other than the playing time section (S1730). In response to the ratio value being calculated, the broadcast receiving apparatus 100 compares the calculated ratio value with a preset pixel ratio value, and determines whether or not the calculated ratio value is less than the preset pixel ratio value (S1740). As a determination result, in response to the calculated ratio value being less than the preset pixel ratio value, the broadcast receiving apparatus 100 detects that the region corresponding to event region is the same as the event region (S1750).

In response to the region corresponding to the event region being detected as described in FIG. 17, the broadcast receiving apparatus 100 determines that a score section is included in the source information stored in connection with the detected event region (S1630). As a determination result, in response to the score section being not included in the source information, the broadcast receiving apparatus 100 determines a score section on the basis of variables of pixel regions corresponding to remaining pixel regions other than the playing time section included in the source information, among the pixel regions of the region corresponding to the event region (S1640).

In embodiments, the variables of the region (hereinafter, referred to as a second event region) corresponding to the event region (Hereinafter, referred to as a first event region) may be changed from 1 to 0 or maintained to 1 according to pixel differences between pixel regions of the first and second event regions. Therefore, the broadcast receiving apparatus 100 acquires pixel regions having the variable of 1 from pixel regions of remaining sections other than the playing time section of the second event region. Next, the broadcast receiving apparatus 100 determines whether or not the pixel region having the variable of 1 is continuously arranged the preset number of times or more, and determines a score section from the pixel regions having the variable of 1 using a connected component algorithm in response to the pixel regions having the variable of 1 being continuously arranged. The broadcast receiving apparatus 100 determines a score section from the previously detected event region on the basis of the previously detected score section.

In response to the score sections being determined from the event region and the region corresponding to the event region, the broadcast receiving apparatus 100 recognizes numbers from the score sections using a number recognition algorithm, and determines whether an event is generated according to change in the number (S1650).

In response to the score section being included in the source information in operation S1630, the broadcast receiving apparatus 100 detects a score section from the region corresponding to the event region on the basis of the score section. Next, as illustrated in operation S1650, the broadcast receiving apparatus 100 may recognize the numbers from the score sections using a number recognition algorithm, compare the recognized numbers, and determine that the event is generated in response to the number being different from each other. In response to determining that the event is generated through the numbers recognized from the score sections, the broadcast receiving apparatus 100 updates the pre-stored event region and source information with the region corresponding to the event region and the source information for the region.

Therefore, in response to the image frame being input after the event information and source information is updated, the broadcast receiving apparatus 100 may detect a new event region on the basis of the updated event region and source information, and sense whether an event is generated on the basis of the detected event region.

Hereinafter, a method for generating a summary content regarding a received content and determining a thumbnail image regarding the corresponding summary content in the above-described broadcast receiving apparatus 100 according to another exemplary embodiment will be explained.

The above-described data processor 150 may include a decoder 151 to decode video and audio data included in a content. Accordingly, in response to a content of a channel requested by the user being received, the decoder 151 decodes video and audio data included in the content. However, the present inventive step is not limited thereto, and the decoder 151 may decode video and audio data of a content corresponding to a user command among the contents which have been stored in the storage 160.

The storage 160 may store a content which is being viewed or a recorded content which has been recorded in connection with a content reserved, according to a request of a user. Further, the storage 160 may store a summary content for the content which is being viewed or the recorded content and a representative thumbnail image for identifying the summary content. Here, the summary content may be a highlight image for a content streamed in real time or the content which has been recorded and then stored, and a representative thumbnail image may be a JPEG (Joint Photographic Experts Group) video image. However, the present general inventive concept is not limited thereto, and a representative thumbnail image may be a video image such as BMP (Bitmap), GIF (Graphic Interchange Format), etc.

Therefore, according to a control command of the controller 130, the outputter 120 may output not only the audio and video data of the content of the channel requested by the user or of the recorded content which have been stored in the storage 160 but also the audio and video data on the summary content, through the image outputter 121 and the audio outputter 123.

In the case of outputting video and audio data for a summary content, the image outputter 121 may display a summary content and a representative thumbnail image for identifying the summary content on the screen together. Thus, in response to the representative thumbnail image being selected by the user, the image outputter 121 may sequentially display a summary content which correspond to the representative thumbnail image selected by a control command of the controller 130. Such an operation of displaying a summary content and a representative thumbnail image will be explained in detail below.

The above-described controller 130 analyzes at least one of decoded video and audio data and generates a summary content when any event occurs. Further, the controller 130 analyzes a video image of decoded video data associated with a content being currently played back, determines a video image corresponding to a preset condition as a candidate thumbnail image, and stores the determined candidate thumbnail image in the storage 160. That is, from a point of time synchronized with a point of time when a content is played back, the controller 130 analyzes a video image of video data for the content, determines a video image corresponding to a preset condition as a candidate thumbnail image, and stores the determined candidate thumbnail image in the storage 160.

In response to the summary content being generated, the controller 130 obtains a candidate thumbnail image corresponding to the summary content among at least one of the candidate thumbnail images previously stored in the storage 160 on the basis of time information contained in the summary content, determines the obtained candidate thumbnail image as a representative thumbnail image for the summary content, and then stores the representative thumbnail image in the storage 160. Herein, time information contained in the summary content may indicate a time when the summary content is played back with reference to a time synchronized with a time when the content related to the summary content is played back. The controller 130 may convert the candidate thumbnail image determined as the representative thumbnail image of the summary content into a JPEG video image and then store it in the storage 160.

Prior to determining the candidate thumbnail image by analyzing the video image of the decoded video data, the controller 130 analyzes the video image of the decoded video data and previous and subsequent video images of the video image, and determines whether block images are consecutively detected in at least one region of upper/lower/left/right sides.

In general, in the case of a content created in a SD video format or a HD video format, an output screen ratio of displayed video data may be different from that of video data in a typical video format. As a result, the video data in the SD video format or the HD video format may include a black image in at least one region of upper/lower/left/right sides. Thus, in response to the playback of the content being initiated, the controller 130 analyzes a predetermined number of video data among successive video data, staring from video data to be first output through the video outputter 121, and thereby determines whether block images are consecutively detected in at least one of upper/lower/left/right regions. In response to determining that black images are consecutively detected in at least one region in upper/lower/left/right sides, the controller 130 removes at least one region including the black image and then resizes the video image as much as a region including the black image is removed.

The controller 130 may determine a video image which corresponds to a zoom-in shot image as a candidate thumbnail image by analyzing the resized video image or the original video image, and then store the video image corresponding to the zoom-in shot image in the storage 160. Therefore, the storage 160 may store at least one candidate thumbnail image on the content which is currently played back.

As described above, the controller 130 which determines a zoom-in shot image as a candidate thumbnail image by analyzing video image of decoded video data may determine a candidate thumbnail image by determining whether a video image is a zoom-in shot image, through embodiments described below in detail.

According to an exemplary embodiment, the controller 130 may determine, as a candidate thumbnail image, a video image of video data which is determined as a zoom-in shot image on the basis of a pixel ratio value of color which corresponds to an effective field color by analyzing video images for each of the decoded video data.

To be specific, the storage 160 may store a ratio of an effective field color which indicates a representative color to colors which indicate video images for each of sports items, and a reference pixel ratio value which represents the ratio of the pixels of the effective field color to the pixels of all of the colors of the video image.

Therefore, the controller 130 calculates a ratio value of the pixels of the color which corresponds to the effective field color by analyzing video images for each of the decoded video data. Thereafter, the controller 130 may compare the calculated pixel ratio value of the color and the reference pixel ratio value on the effective field color predetermined and then stored in the storage 160, and determine, as a zoon-in shot image, a video image having a pixel ratio value which is lower than the reference pixel ratio value. Therefore, the controller 130 may determine a video image which has been determined as a zoom-in shot image as a candidate thumbnail image and store the video image in the storage 160.

For instance, effective field colors of soccer, baseball, rugby and golf may be set to be green, and an effective field color of swimming may be set to be blue, and effective field colors of ice hockey and speed skating may be set to be white. As shown above, the storage 160 may set an effective field color which indicates a representative color of each of the sports item by sport item. Further, the storage 160 may store a reference pixel ratio value which indicates the ratio of the pixels of an effective field color for a sport with respect to the pixels of all of the colors which indicate video images for video data of a sport-related content.

For instance, when the content which is being played back is a soccer-related content, the controller 130 analyzes video images for each of the video data of the content which is being played back, and calculate a pixel ratio value of the green color on the basis of the pixel values of the green color, which is the effective field color of soccer sport, and the pixel values of the colors which indicate a whole video image. Thereafter, the controller 130 compares the calculated pixel ratio value of the green color with a predetermined and stored reference pixel ratio value related to soccer sport, reads out a video image having a pixel ratio value lower than the reference pixel ratio value, determines the read-out video image as a candidate thumbnail image and temporarily stores the read-out video image in the storage 160. Here, the controller 130 stores time information on a time when the video image determined as the candidate thumbnail image is played back in the storage 160 along with the determined video image. Accordingly, the storage 160 may store at least one candidate thumbnail image related to the content which is being played back and time information on the candidate thumbnail image.

According to another exemplary embodiment, the controller 130 analyzes the video images for each of the decoded video data and compares the number of pixels which indicate the video images and a predetermined threshold pixel number. Thereafter, the controller 130 determines, as a zoom-in shot image, a video image including a number of pixels lower than the predetermined threshold pixel number among the video images for each of the decoded video data, determines the video image which has been determined as a zoom-in shot image as a candidate thumbnail image, and then stores the video image in the storage 160. Here, the controller 130 obtains time information on a time when the video image determined as the candidate thumbnail image is played back and stores the time information in the storage 160 along with video image determined as the candidate thumbnail image. Thus, the storage 160 may store at least one candidate thumbnail image related to the content which is being played back and time information on the candidate thumbnail image.

For instance, a first video image among the video images for each of the decoded video data may include the number of pixels of 5 colors, and a second video image may include the number for pixels of 10 colors. Here, the predetermined threshold pixel number may be set to be 7. In this case, the controller 130 may compare the number of pixels of each of the first and second video images with the threshold pixel number, and determine, as a candidate thumbnail image, the first video image including the number of pixels lower than the threshold pixel number. In response to the candidate thumbnail image being determined, the controller 130 may store in the storage 160 the first video image determined as the candidate thumbnail image and the time information on the time when the first video image is played back.

According to still another embodiment, the controller 130 determines, as a zoom-in shot image, a video image including an object which is larger than a preset threshold object size among objects included in video images for each of the decoded video data, determines, as a candidate thumbnail image, a video image determined as a zoom-shot image and stores the determined video image in the storage 160. Here, the controller 130 obtains time information on a time when the video image determined as the candidate thumbnail image is played back and stores, in the storage 160, the time information along with the video image determined as the candidate thumbnail image. Accordingly, the storage 160 may store at least one candidate thumbnail image related to the content which is being played back and time information on the corresponding candidate thumbnail image.

According to still another exemplary embodiment, the controller 130 compares and analyzes video images for each of decoded video data. Here, the controller 130 may compare and analyze video images for each of decoded video data through the above-described various exemplary embodiments. Thereafter, the controller 130 may determine, as a candidate thumbnail image, one video image among the video images which were compared, and store the video image determined as the candidate thumbnail image.

In response to at least one candidate thumbnail image related to the content which is being played back being determined through various exemplary embodiments, the controller 130 determines a rate of scene change on the basis of histograms of the at least one candidate thumbnail image which has been determined and a previous video image. Afterwards, the controller 130 compares the determined scene change ratio with a predetermined reference scene change ratio and deletes, from the storage 160, candidate thumbnail images other than candidate thumbnail images having scene change ratios lower than the predetermined reference scene change ratio. Accordingly, the storage 160 may store only the candidate thumbnail images having scene change ratios lower than the predetermined reference scene change ratio.

To be specific, the controller 130 generates histograms on the video image for the at least one candidate thumbnail image which has been determined and the respective previous video images of the video image. Thereafter, the controller 130 may calculate differences between the histograms by using a Euclidean Distance and determine a scene change ratio for the candidate thumbnail images according to the degree of the calculated differences. As shown above, in response to the scene change ratio of the candidate thumbnail image being determined, the controller 130 may determine whether to delete the candidate thumbnail image from the storage 160, according to whether the determined scene change ratio of the candidate thumbnail image is lower than the predetermined reference change ratio.

As described above, in response to the at least one candidate thumbnail image being stored in the storage 160 in connection with the content which is being played back, the controller 130 determines whether the candidate thumbnail image which is included in the playback section of the corresponding summary content is stored in the storage 160 on the basis of the time information of the at least one pre-stored candidate thumbnail image and the time information on the playback of the summary content. As a result of the determination, in response to determining that the candidate thumbnail image which is included in the playback section of the previously generated summary content is stored in the storage 160, the controller 130 may determine the candidate thumbnail image as a representative thumbnail image for the previously generated summary content.

When the candidate thumbnail image which is included in the playback section of the previously generated summary content is not stored in the storage 160, the controller 149 may determine, as a representative thumbnail image, a video image of a section where the playback of the previously generated summary content ends. However, the embodiment is not limited thereto, and the controller 130 may determine, as a representative thumbnail image, a video image of a section where the playback of the previously generated summary content is played back or a video image related to a zoom-in shot image among a plurality of video images of the summary content. As shown above, in response to the representative thumbnail image for the generated summary content being determined, the controller 130 may match the determined representative thumbnail image and the corresponding summary content, and may store a matching result in the storage 160.

According to the above-described exemplary embodiments, the controller 130 may detect an event section caused by generation of an event by analyzing at least one of decoded video and audio data, and may generate a summary content on the basis of the detected event section. Specifically, the controller 130 may generate a summary content on the basis of an image section corresponding to the detected event section and previous and subsequent image sections of the image section. The previous and subsequent image sections may be image sections corresponding to a preset condition. According to an exemplary embodiment, in response to an event section being detected, the controller 130 may obtain previous and subsequent image sections existing within a preset fixed time with reference to an image section corresponding to the detected event section. In response to the previous and subsequent image sections existing within the preset fixed time being obtained, the controller 130 may generate a summary content on the basis of the image section corresponding to the event section and the previous and subsequent image sections existing within the preset fixed time.

In this case, the controller 130 may generate the summary content on the basis of a partial image section of the obtained previous and subsequent image sections and the image section corresponding to the event section, according to whether there is an image section where a scene is changed by analyzing the video images of the previous and subsequent image sections existing within the fixed time.

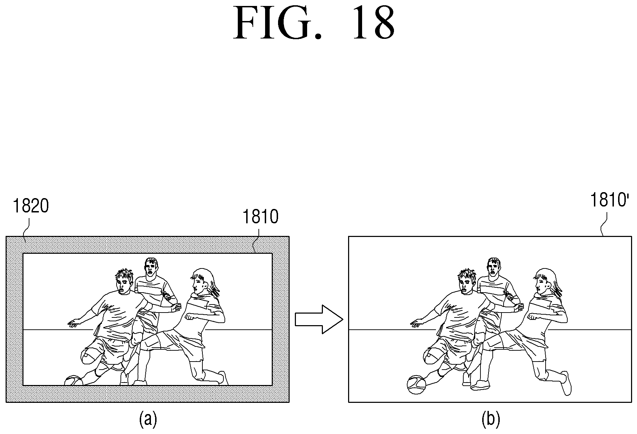

FIG. 18 is an illustrative view showing a method for processing a video image including a black image in the broadcast receiving apparatus according to an exemplary embodiment.

View (a) of FIG. 18 illustrates that a video image 1810 of video data included in a content consisting of SD video format or HD video format may include a black image in the regions in the up/down/left/right sides 1820. As shown above, when a black image is included in the regions in the up/down/left/right side 1820 of the video image 1810, the controller 130 removes the black image included in the regions in the up/down/left/right side 1820 and then resizes the video image 1810. That is, after removing the black image included in the regions in the up/down/left/right side 1820 of the video image 1810, the controller 130 resizes the video image 1810 as much as the black image is removed. Therefore, as illustrated in view (b) of FIG. 18, the controller 130 may generate a video image 1810' a size of which is enlarged as much as the size of the region 1820 including the black image.

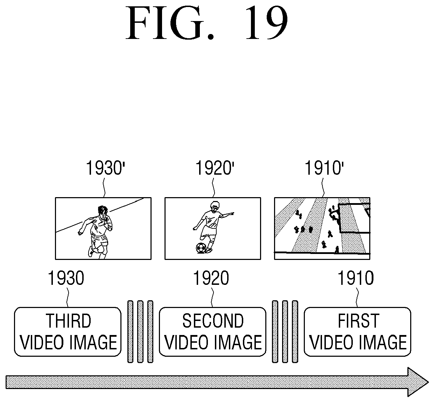

FIG. 19 is an illustrative view showing a method for determining a candidate thumbnail image in the broadcast receiving apparatus according to an exemplary embodiment.

As illustrated in FIG. 19, from a point of time synchronized with a point of time when a content is played back, the controller 130 analyzes video images of video data included in the content. In response to the content being played back, the content may be displayed on a screen, sequentially starting from a first video image 1910. Accordingly, the controller 130 may start analysis from the first video image 1910. As illustrated, a first output video image 1910' is a video image corresponding to the first video image 1910, and the controller 130 calculates a pixel ratio value of the color which corresponds to an effective field color for the first output video image 1910'. For instance, when a color corresponding to the effective field color is green, the controller 130 may calculate a pixel ratio value from pixels of the green color corresponding to the effective field color, with respect to the pixels of the colors indicating the first output video image 1910'. In response to the pixel ratio value being calculated, the controller 130 determines whether the pixel ratio value of the green color corresponding to the effective field color of the first output video image 1910' is lower than a predetermined pixel ratio value. As a result of determination, in response to determining that the pixel ratio value of the green color corresponding to the effective field color of the first output video image 1910' is higher than the predetermined pixel ratio value, the controller 130 determines that the first output video image 1910' corresponding to the first video image 1910 is not a zoom-in shot image.

Though the above method, the controller 130 may determine, as zoom-in shot images, a second video image 1920 and a third video image 1930 among the video images which are sequentially displayed on the screen, including the first video image 1910 which is first displayed. Here, second and third output video image 1920' and 1930', which respectively correspond to the second and the third video image 1920 and 1930 determined as zoom-in shot images, may be video images in which the pixel ratio values of the green color corresponding to the effective field color are lower than the predetermined reference pixel ratio value. Therefore, the controller 130 may determine, as zoom-in shot images, the second video image and the third video image 1920 and 1930 pixel ratio values of which are lower than the predetermined reference pixel ratio value in connection with effective field color, and may determine as representative candidate thumbnail images the second and the third video images 1920 and 1930 which correspond to zoom-in shot images.

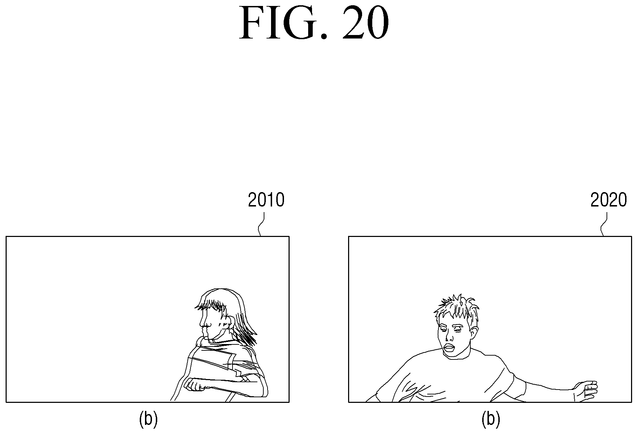

FIG. 20 is an illustrative view of a method for determining a final candidate thumbnail image among determined candidate thumbnail images on the basis of a scene change ratio in the broadcast receiving apparatus according to an exemplary embodiment.

The first and second video images 2010 and 2020 illustrated in views (a) and (b) of FIG. 20 may be video images determined as candidate thumbnail images on the basis a predetermined condition. In response to such first and second video images 2010 and 2020 being determined as candidate thumbnail images, the controller 130 determines a scene change ration on the basis of histograms of the first video image 2010, which was determined as a candidate thumbnail image, and its previous video image. Further, the controller 130 determines a scene change ration on the basis of histograms of the second video image 2020, which was determined as a candidate thumbnail image, and its previous video image. Thereafter, the controller 130 compares the scene change ratios of the first and second video images 2010 and 2020 which was determined as the candidate thumbnail images with a predetermined reference change ratio, respectively, and determines, as a final candidate thumbnail image, a candidate thumbnail image a scene change ratio of which is lower than the predetermined reference change ratio.

As illustrated above, the first video image 2010 among the first and second video images 2010 and 2020 may be a video image in which a blurring phenomenon occurs due to a drastic movement of a camera angle. Thus, the first video image 2010 in which such a blurring phenomenon has occurred may have a high scene change ratio compared with its previous video images, and thus may have a scene change ratio higher than the predetermined reference change ratio. Therefore, the controller 130 may exclude the first video image among the first and second video images 2010 and 2020, from a list of candidate thumbnail images, and determine only the second video image 2020 as a final candidate thumbnail image.

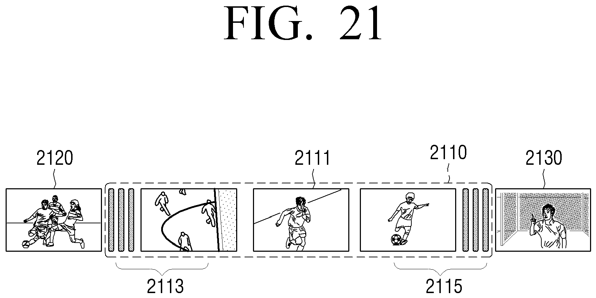

FIG. 21 is an illustrative view of a method for generating a summary content in the broadcast receiving apparatus according to an exemplary embodiment.

As illustrated in FIG. 21, the controller 130 may detect an event section which corresponds to a predetermined condition by analyzing at least one of decoded video and audio data. As illustrated, the controller 130 may detect an event section corresponding to a predetermined condition by analyzing at least one of decoded video and audio data through the event detector 131.

As shown, in response to a first video section 2111 being detected as an event section, the controller 130 obtains previous and subsequent video sections which exists within a predetermined fixed time, with reference to the first video section 2111 detected as the event section. Thus, a second video section 2113, among the previous video sections 2113 and 2120 which come before the first video section 2111, may exist within the predetermined fixed time, and a third video section 215, among the subsequent video sections 2115 and 2130 which come after the first video section 2111, may exist within the predetermined fixed time.

As shown above, in response to the second and third video sections 2113 and 2115 being obtained which exist within the predetermined fixed time with reference to the first video section 2111, the controller 130 may generate a summary content 2110 on the basis of the first to third video sections 2111, 2113, and 2115.

Here, the controller 130 may determine whether there is a video section where a scene changes by analyzing video images included in the second and third video sections 2113 and 2115. In response to there being a video section where a scene changes, the controller 130 may generate a summary content on the basis of video sections other than the video section where a scene changes and the first video section 2111 which is the previously detected event section.

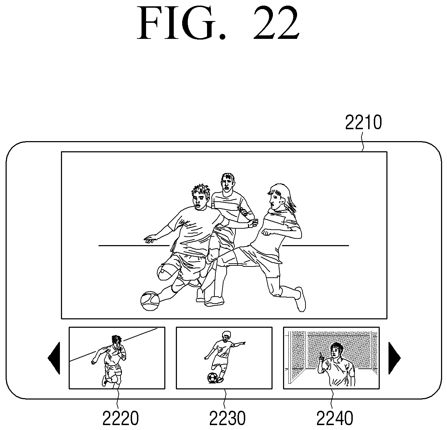

FIG. 22 is an illustrative view of a method for playing back a summary content in the broadcast receiving apparatus according to an exemplary embodiment.

As illustrated in FIG. 22, in response to a user command on a summary content service being input, the broadcast receiving apparatus 100 displays a summary content 2210 corresponding to the input summary content service command on the upper region of a screen, and may display first to third representative thumbnail images 2220-2240 which have been previously generated in connection with the corresponding summary content on the lower region of the screen. Here, the first representative thumbnail image 2220 may be an image for identifying a summary content when an event occurs first, among the contents related to the summary content 2210, and the third representative thumbnail image 2230 may be an image for identifying a summary content when an event last occurs, among the contents related to the summary content.

Therefore, in response to no additional command being input after the user's summary content service command is input, the broadcast receiving apparatus 100 may serially output the contents, starting from the summary content 2210 which matches with the first representative thumbnail image 2210.

In response to a selection command on the second representative thumbnail image 2220 being input after the user's summary content service command is input, the broadcast receiving apparatus 100 may stop playing back the summary content 2210 which are currently being played back and serially output the content, starting from the summary content 2210 which matches with the second representative thumbnail image 2220 through the image outputter 121.

Until now, operations of the broadcast receiving apparatus 100 according to various exemplary embodiments have been explained in detail. Hereinafter, a method for providing a summary content service in the broadcast receiving apparatus 100 according to the present general inventive concept will be explained in detail.

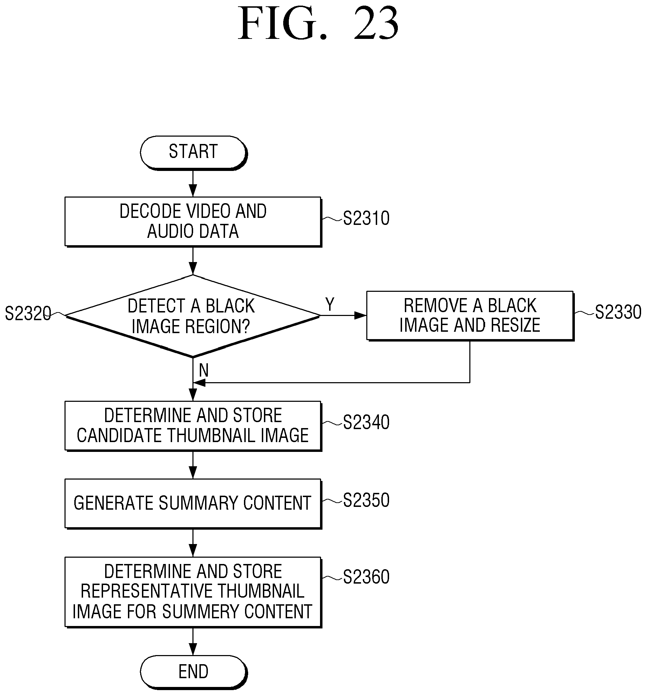

FIG. 23 is a flowchart of a method for providing a summary content in the broadcast receiving apparatus according to an exemplary embodiment.

As illustrated in FIG. 23, the broadcast receiving apparatus 100 decodes video and audio data of at least one content requested by a user (S2310). Here, the content requested by the user may be a content which is streamed in real time through a broadcast server (not illustrated) or a recorded content which is previously stored.

In response to the video and audio data of the content being decoded, the broadcast receiving apparatus 100 analyzes a video image of the decoded video data and previous and subsequent video images of the video image, and determines whether black images are consecutively detected in at least one of the regions in upper/lower/left/right sides (S2320).

In general, in the case of a content created in a SD video format or a HD video format, an output screen ratio of displayed video data may be different from that of video data in a typical video format. As a result, the video data in the SD video format or the HD video format may include a black image in at least one region in upper/lower/left/right sides. Thus, in response to the playback of the content being initiated, the broadcast receiving apparatus 100 analyzes a predetermined number of video data among successive video data, staring from the initially decoded video data, and determines whether block images are consecutively detected in at least one region of in upper/lower/left/right sides.

In response to a region including a black image being detected as a result of the determination, the broadcast receiving apparatus 100 removes the at least one region including the black image and then resizes the video image as much as a region including the black image is removed (S2330).

The broadcast receiving apparatus 100 analyzes video images of the decoded video data, determines and stores at least one candidate thumbnail image (S2340). Here, a video image of the decoded video data may be an original video image that does not include a black image or a resized video image. Exemplary embodiments of determining and storing a candidate thumbnail image will be explained in detail through the following drawings.

The broadcast receiving apparatus 100 analyzes at least one of the decoded and audio data and generates a summary content when an event occurs (S2350). Thereafter, the broadcast receiving apparatus 100 determines a candidate thumbnail image which corresponds to the summary content as a representative thumbnail image for the summary content on the basis of time information included in the summary content, and matches and then stores in the storage 150 the determined representative thumbnail image and the corresponding summary content (S2360). Here, the determining the candidate thumbnail image (S2340) and the generating the summary content (S2350) may be carried out simultaneously. That is, from a point of time when the content is played back according to a user command, the broadcast receiving apparatus 100 may analyze at least one of video and audio data of the corresponding content and generate a candidate thumbnail image and its corresponding summary content.

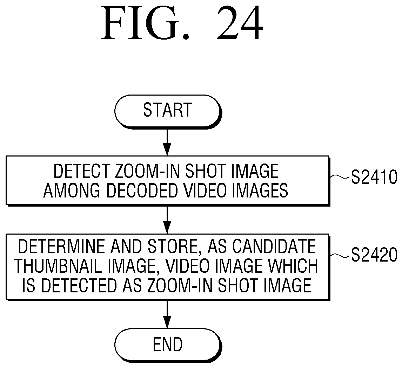

In order to determine at least one video image as a candidate thumbnail image in the above-described step S2340, the broadcast receiving apparatus 100 may determine the candidate thumbnail image by determining whether the video image is a zoom-in shot image, through the following embodiments. Hereinafter, a method for determining, as a candidate thumbnail image, a video image of at least one decoded video data in the broadcast receiving apparatus 100 will be explained in detail through FIGs. 24 to 28.

FIG. 24 is a first flowchart of a method for determining and storing a candidate thumbnail image in the broadcast receiving apparatus according to an exemplary embodiment.

As illustrated in FIG. 24, in response to video and audio data of a content being decoded, the broadcast receiving apparatus 100 analyzes video images for each of the decoded video data and detects a video image determined as a zoom-in shot image (S2410). Afterwards, the broadcast receiving apparatus 100 determines the video image determined as the zoom-in shot image as a candidate thumbnail image and stores the video image determined as the candidate thumbnail image (S2420). Here, the broadcast receiving apparatus 100 obtains time information on the time when the video image determined as the candidate thumbnail image is played back and stores the time information along with the video image determined as the candidate thumbnail image.

As described above, in response to the video image determined as the zoom-in shot image being determined and stored as the candidate thumbnail image, the broadcast receiving apparatus 100 may determine a candidate thumbnail image corresponding to a summary content among the previously stored candidate thumbnail images, as a representative candidate thumbnail image for the corresponding summary content, on the basis of the time information which is included in the summary content through the above-described step S2360.

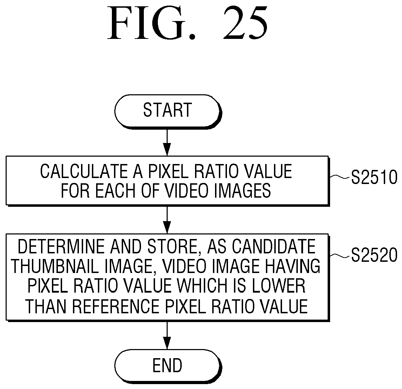

FIG. 25 is a second flowchart of a method for determining and storing a candidate thumbnail image in the broadcast receiving apparatus according to another exemplary embodiment.

As illustrated in FIG. 25, the broadcast receiving apparatus 100 analyzes video images for each of decoded video data and calculates a pixel ratio value of a color which corresponds to an effective field color (S2510). Then, the broadcast receiving apparatus 100 compares the calculated pixel ratio value for each of the data with a predetermined reference pixel ratio value and determines and stores as a candidate thumbnail image a video image having a pixel ratio value which is lower than the reference pixel ratio value (S2520). Here, the broadcast receiving apparatus 100 obtains time information on the time when the video image determined as a candidate thumbnail image is played back and stores the time information along with the video image determined as a candidate thumbnail image.

To be specific, the broadcast receiving apparatus 100 may store a reference pixel ratio value which indicates a ratio of an effective field color which indicates a representative color among colors which indicate images for each kind of sports, and a ratio of the pixels of the effective field color to the pixels of all of the colors of images. Accordingly, the broadcast receiving apparatus 100 may analyze video images for each of the decoded video data and calculate a pixel ratio value of a color which corresponds to an effective field color. Then, the broadcast receiving apparatus 100 may compare the calculated pixel ratio value with a predetermined and stored reference pixel ratio value for the effective field color and then determines and stores a video image having a pixel ratio value which is lower than the reference pixel ratio value as a candidate thumbnail image. Here, the broadcast receiving apparatus 100 obtains time information on the time when the video image determined as a candidate thumbnail image is played back and stores the time information along with the video image determined as a candidate thumbnail image.

The broadcast receiving apparatus 100 may determine a candidate thumbnail image corresponding to a summary content among the previously stored candidate thumbnail images as a representative thumbnail image on the corresponding summary content, on the basis of the time information included in the summary content through the above-described step S2360.

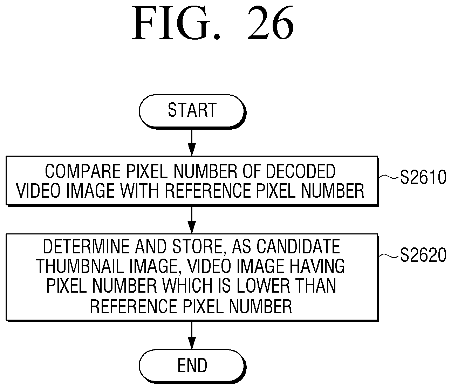

FIG. 26 is a third flowchart of a method for determining and storing a candidate thumbnail image in the broadcast receiving apparatus according to another exemplary embodiment.

As illustrated in FIG. 26, the broadcast receiving apparatus 100 analyzes video images for each of the decoded video data and compares the number of pixels which indicate video images and a predetermined threshold pixel number (S2610). Thereafter, the broadcast receiving apparatus 100 determines and stores, as a candidate thumbnail image, a video image which includes a number of pixels lower than a predetermined threshold pixel number, among video images for each of the decoded video data (S2620). Here, the broadcast receiving apparatus 100 obtains time information on the time when the video image determined as a candidate thumbnail image is played back and stores the time information along with the video image determined as a candidate thumbnail image.

The broadcast receiving apparatus 100 may determine a candidate thumbnail image corresponding to a summary content among the previously stored candidate thumbnail images, as a representative thumbnail image on the corresponding summary content, on the basis of the time information included in the summary content through the above-described step S2360.

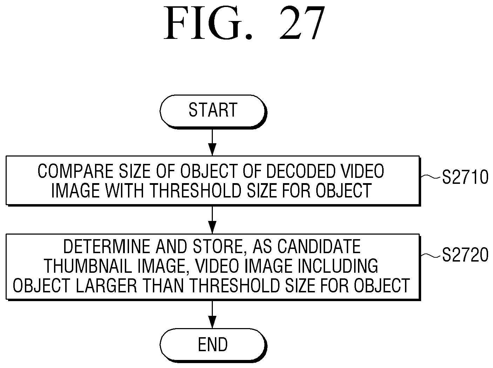

FIG. 27 is a fourth flowchart of a method for determining and storing a candidate thumbnail image in the broadcast receiving apparatus according to another exemplary embodiment.

As illustrated in FIG. 27, the broadcast receiving apparatus 100 compares the size of objects included in video images for each of decided video data with a predetermined threshold size (S2710). The broadcast receiving apparatus 100 determines and stores, as a candidate thumbnail image, a video image including an object which is larger in size than the predetermined threshold size (S2720). Here, the broadcast receiving apparatus 100 obtains time information on the time when the video image determined as a candidate thumbnail image is played back and stores the time information along with the video image determined as a candidate thumbnail image.

The broadcast receiving apparatus 100 may determine a candidate thumbnail image corresponding to a summary content among the previously stored candidate thumbnail images as a representative thumbnail image on the corresponding summary content, on the basis of the time information included in the summary content through the above-described step S2360.

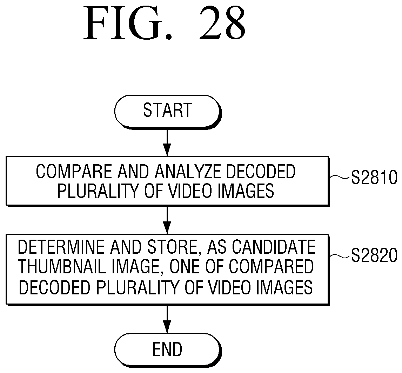

FIG. 28 is a fifth flowchart of a method for determining and storing a candidate thumbnail image in the broadcast receiving apparatus according to another exemplary embodiment.

As illustrated in FIG. 28, the broadcast receiving apparatus 100 compares and analyzes video images for each of decoded video data (S2810). Here, the broadcast receiving apparatus 100 may compare and analyze the video images for each of the decoded video data through at least one of the exemplary embodiments of FIG. 24 to FIG. 27. Then, the broadcast receiving apparatus 100 determines one video image among the compared video images as a candidate thumbnail image and stores the video image determined as a candidate thumbnail image (S2820).

The broadcast receiving apparatus 100 may determine a candidate thumbnail image corresponding to a summary content among the previously stored candidate thumbnail images as a representative thumbnail image for the corresponding summary content, on the basis of the time information included in the summary content through the above-described step S2360.

In response to at least one candidate thumbnail image related to the content which is being played back being determined according to various exemplary embodiments, the broadcast receiving apparatus 100 determines a scene change ratio on the basis of histograms of the at least one determined candidate thumbnail image and the previous video images. Then, the broadcast receiving apparatus 100 compares the determined scene change ratio with a predetermined reference change ratio and deletes previously stored candidate thumbnail images other than a candidate thumbnail image a scene change ratio of which is lower than the predetermined reference change ratio. Accordingly, the broadcast receiving apparatus 100 may store only the candidate thumbnail images scene change ratios of which are lower than the predetermined reference change ratio.

Hereinafter, a method for determining one of the candidate thumbnail images which have been previously stored in the broadcast receiving apparatus 100 through the above-described step 2360, as a representative thumbnail image of the previously generated summary content will be explained.

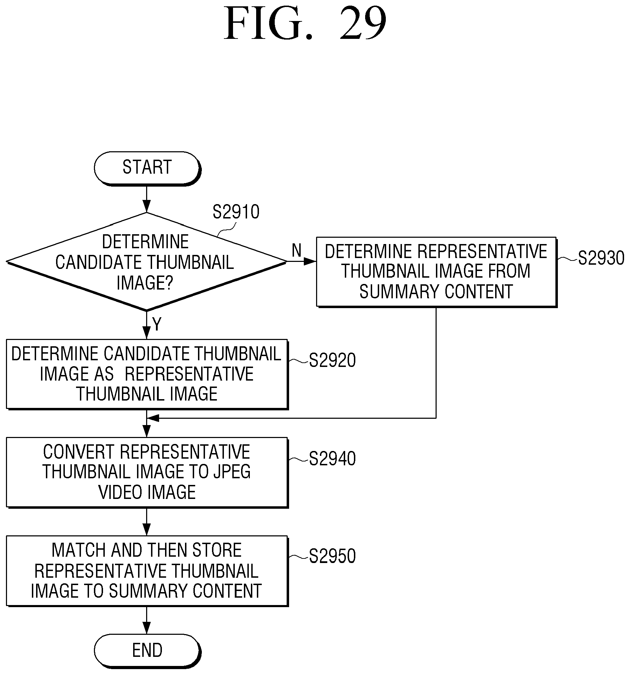

FIG. 29 is a flowchart of a method for determining a representative thumbnail image in the broadcast receiving apparatus according to an exemplary embodiment.

As illustrated in FIG. 29, in response to a summary content being generated when an event occurs by analyzing at least one of video and audio data of a content, the broadcast receiving apparatus 100 determines whether a candidate thumbnail image which is included in a playback section of the corresponding summary content has been stored, on the basis of time information of at least one of the pre-stored candidate thumbnail images and time information related to playback of the summary content (S2910). As a result of the determination, in response to determining that the candidate thumbnail image which is included in the playback section of the previously generated summary content has been stored, the broadcast receiving apparatus 100 may determine the candidate thumbnail image as a representative thumbnail image for the previously generated summary content (S2920).

As a result of the determination, in response to determining that the candidate thumbnail image which is included in the playback section of the previously generated summary content has not been stored, the broadcast receiving apparatus 100 determines, as a representative thumbnail image, one of the video images constituting the summary content (S2930). According to an exemplary embodiment, in response to determining that the candidate thumbnail image which is included in the playback section of the previously generated summary content has not been stored, the broadcast receiving apparatus 100 may determine, as a representative thumbnail image, a video image of a section where the playback of the summary content ends. As described above, in response to the representative thumbnail image for the previously generated summary content being determined, the broadcast receiving apparatus 100 converts the video image determined as a representative thumbnail image to a JPEG video image and matches the representative thumbnail image which has been converted to a JPEG video image to the corresponding summary content and stores a matching result (S2940 and S2950).

Hereinafter, an operation and method for outputting a decoded content and a summary content simultaneously in the broadcast receiving apparatus 100 will be explained in detail.

As described above, the receiver 110 to receive contents from a broadcast server (not shown) through a tuned channel may include a tuner 113 and a demux 111. The tuner 113 receives a plurality of contents per channel provided from the broadcast server (not illustrated), and the demux 111 extracts a content of the channel requested by a user among the plurality of the received contents per channel. In response to the content of the channel requested by the user being extracted, the data processor 150 decodes video and audio data included in the extracted content through the decoder 151, and signal-processes the decoded video and audio data into a format that can be outputted. Accordingly, the outputter 120 may output the signal-processed video and audio data through the image ouputter 121 and the audio outputter 123.

As described above, the controller 130 generates a summary content regarding the content on the basis of an event section detected through the event detector 131, and stores the summary content in the storage 160. In addition, the controller 130 may control the outputter 120 to output the content of the channel requested by the user and the summary content pre-stored in the storage 160 simultaneously. The summary content may be a highlight image regarding a content which is streamed in real time or a recorded content.

According to an exemplary embodiment, when a user command is a first user command, the controller 130 may control the outputter 120 to simultaneously output a currently-viewed content and a summary content regarding the corresponding content. Meanwhile, when a user command is a second user command, the controller 130 may control the outputter 120 to simultaneously output a currently-viewed content and a summary content regarding a content of another channel which is different from the corresponding content.

Herein, the first user command may be a command to request a summary content service regarding a currently-viewed content, and the second user command may be a command to request a summary content service of another channel which is different from the currently-viewed content. Thus, the controller 130 generates a summary content regarding the currently-viewed content in response to the first user command being input, and stores the summary content in the storage 160. Thereafter, the controller 130 may simultaneously output the currently-viewed content and the summary content regarding the corresponding content which is previously stored. Meanwhile, in response to the second user command being input, the controller 130 generates a summary content regarding a content of a channel corresponding to the input second user command, and stores the summary content in the storage 160. Thereafter, the controller 130 may simultaneously output the currently-viewed content and the summary content regarding the content corresponding to the second user command.

Meanwhile, the storage 160 stores summary contents regarding a recorded content and a currently-viewed content related to the currently-viewed content according to a user request. Further, the storage 160 may store various pieces of establishing information to detect at least one event section from the content and generate a summary content on the basis of the detected event section.

The storage 160 may store preset game situation conditions and threshold level values in order to detect an event section from the video and audio data of a sport-related content, or store preset word information in order to detect an event section from additional data of the sport-related content. Further, the storage 160 may store a field color to determine whether a video section of the pre-detected event section is effective or not and a threshold value to determine a ratio of the field color.

The controller 130 controls the event detector 131 to analyze at least one of video and audio data of a content requested by the user and detect at least one event section corresponding to a preset condition. According to such a control command, the event detector 131 analyzes at least one of the video and audio data of the content requested by the user on the basis of the preset condition stored in the storage 160, and detects at least one event section corresponding to the preset condition.

The method for analyzing video and audio data of a content and detecting an event section has been described in the above explanation and thus detailed description thereof is omitted.

In response to an event section being detected, the event detector 131 delivers time information regarding the at least one detected event section to the controller 130. Therefore, the controller 130 may obtain a video section regarding the event section on the basis of time information in which the corresponding event section is detected among video sections of a recorded content previously stored in the storage 160 or a real-time content previously stored on a preset time basis. Herein, the time information when the event section is detected may be an outputting time when the video section regarding the corresponding event section is outputted through the outputter 120 or a total playback time when the video section regarding the corresponding event section is played back.

According to an exemplary embodiment, the storage 160 may store a recorded content regarding a content related to a summary content. In this case, the event detector 131 may deliver time information of the event section in which an event corresponding to a preset condition occurs among the contents output through the outputter 120 to the controller 130. Accordingly, the controller 130 may obtain a video section of a time corresponding to the time information when the event section is detected by the event detector 131 among video sections of the recorded content previously stored in the storage 160.

For example, the event detector 131 may detect a video section from 30 min. 15 sec. to 30 min. 20 sec. with reference to a time when the content is output, as an event section in which an event corresponding to a preset condition occurs among video sections of the content output through the outputter 120. Further, the storage 160 may record and store the corresponding content at the time of outputting through the outputter 120 and at the time of synchronizing. In this case, the controller 130 may obtain a video section from 30 min. 15 sec to 30 min. 20 sec. among video sections of the content previously stored in the storage 160 on the basis of the time information detected as the event section.

According to another embodiment, the storage 160 may temporarily store a video section of a real-time content related to a summary content on a preset time basis. In this case, the event detector 131 may deliver time information taken by an event section in which an event corresponding to a preset condition occurs among contents output through the outputter 120 to the controller 130. Herein, the time information taken by the event section may be a total playback time when the video section regarding the event section is played back as described above. Therefore, the controller 130 may obtain a video section temporarily stored at a time corresponding to the time taken by the event section among video sections temporarily stored in the storage 160 on the basis of the time information taken by the event section.

For example, the storage 160 may temporarily store the video section regarding the content per 1 minute. Meanwhile, the time taken by the event section detected through the event detector 131 may be 5 seconds. In this case, the controller 130 may obtain the temporarily stored video sections within 5 second from the first temporarily stored video section among the video sections temporarily stored in the storage 160 during the time taken by the event section, and determine the obtained video section to be a video section regarding the event section.

Thus, in response to the video section regarding the corresponding event section being obtained on the basis of a time point of extracting the event section, the controller 150 determines whether the content regarding the corresponding video section is a sport-related content or not by analyzing the obtained video sections.

In response to determining that video section regarding the at least one detected event section is a sport-related content, the controller 130 obtains previous and subsequent video sections existing within a preset fixed time with reference to the video section of the detected event section. Thereafter, the controller 130 determines whether there is a section where a scene changes among the obtained previous and subsequent sections. As a determining result, in response to there being no section where a scene changes, the controller 130 may determine the video section at the time when the at least one event section is detected and the previous and subsequent video sections existing within the preset fixed time as a content summary section.

Meanwhile, as a determining result, in response to there being a section where a scene changes, the controller 130 obtains previous and subsequent video sections related to the video section regarding the detected event section by changing the preset fixed time. Thereafter, the controller 130 may determine the video section regarding the detected event section and the previous and subsequent video sections existing within the changed fixed time as the content summary section.

Meanwhile, the fixed time may include an absolute fixed time as described above, and such an absolute fixed time cannot be changed. Thus, the controller 130 determines whether there is a section where a scene changes among the previous and subsequent video sections except for the previous and subsequent video sections existing within the absolute fixed time from the previous and subsequent video sections existing within the fixed time. As a determining result, in response to there being a section where a scene changes, the controller 130 may obtain previous and subsequent video sections related to the video section of the detected event section by changing the fixed time within the fixed time except for the absolute fixed time.

Thereafter, the controller 130 determines a content summary section including the video section regarding the previously obtained event section and the previous and subsequent video sections existing within the preset fixed time with reference to the corresponding video section, and generates and stores a summary content on the basis of the determined content summary section in the storage 160. At this process, the controller 130 determines a video image of one video section corresponding to a preset condition to be a thumbnail image among video sections constituting the previously generated summary content, matches the determined thumbnail images with the pre-generated summary content, and stores a matching result in the storage 160.

The method for determining a thumbnail image from a video section of a summary content, matching the determined thumbnail image with the corresponding summary content, and storing a matching result has been described in the above explanation, and thus detailed description thereof is omitted.

Hereinafter, an operation for determining a content summary section from a detected event section in the above-described controller 130 will be explained.

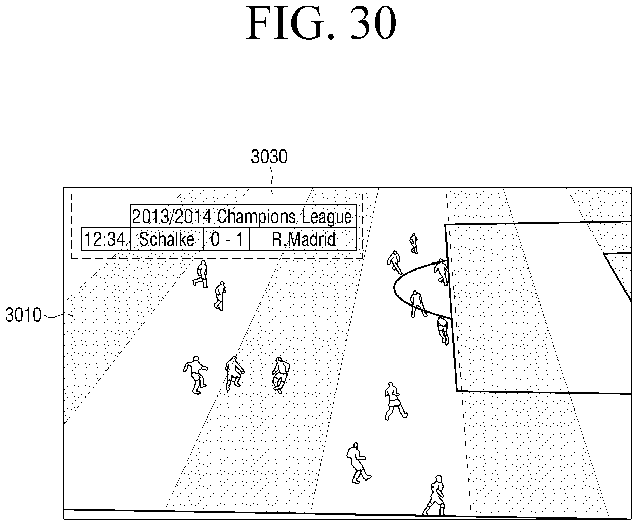

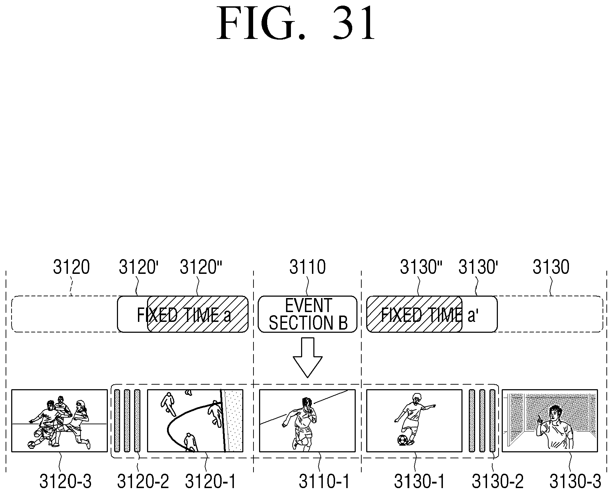

FIG. 30 is an illustrative view showing a method for determining the validity for generating a summary content on the basis of a detected event section in the broadcast receiving apparatus according to an exemplary embodiment. FIG. 31 is an illustrative view showing a method for generating a summary content on the basis of a video section regarding an event section in the broadcast receiving apparatus according to an exemplary embodiment.

Referring to FIG. 30, the broadcast receiving apparatus 100 may display a soccer-related sport content, and a currently display video image may be a video section that is obtained on the basis of the time when an event section corresponding to a preset condition is detected through the event detector 120. In response to the video section regarding the event section being obtained, the controller 130 determines whether green color corresponding to a predefined field color is included or not in colors applied to the video section of the event section. It can be seen that green color 3010 of the colors expressing the video section expresses most of the whole image. When green color which is the predefined field color is included in colors expressing the corresponding video section, the controller 130 calculates a ratio value of the green color on the corresponding video section, and determines whether the calculated ratio value of the green color is greater than or equal to a preset threshold value. As a determining result, in response to the ratio value being greater than or equal to the preset threshold value, the event detector 131 may determine that the currently displayed content is a soccer-related sport content.

Further, the controller 130 may extract a guide area 3030 informing a game situation from the video image regarding the video image detected as the event section. In response to the guide area 3030 being extracted, the controller 130 may analyze a game score or a game processing time displayed on the extracted guide area 3030, and determine that the currently displayed content is a soccer-related sport content.

Thus, in response to determining that the currently viewed content is a sport-related content from the detected event section regarding the displayed video section, the controller 130 may obtain previous and subsequent video sections existing within a preset fixed time with reference to the video section regarding the corresponding event section.

Specifically, as illustrated in FIG. 31, in response to a video section 3110-1 regarding an event section B 3110 being determined to be a sport-related content, the controller 130 obtains first to third video sections 3120-1 - 3120-3 belonging to a first fixed time 3120, and fourth to sixth video sections 3130-1 - 3130-3 belonging to a second fixed time 3130 with reference to the video section 3110-1.

Thereafter, the controller 130 changes the first and second fixed times 3120 and 3130 on the basis of video sections except for the sections where a scene changes among the video sections belonging to the first and second fixed times 3120 and 3130. That is, the controller 130 changes the first and second fixed times 3120 and 3130 to fixed time corresponding to the video sections except for the third and sixth video sections 3120-3 and 3130-3 where a scene changes. Accordingly, the first fixed time 3120 is changed to fixed time a 3120' and the second fixed time 3130 is changed to fixed time b 3130'.

In response to the preset first and second fixed times 3120 and 3130 being changed, the controller 130 may determine a content summary section including the video section 3110-1 regarding the event section B 3110, the first and the second video sections 3120-1 and 3120-2 regarding the changed fixed time a 3120', and the fourth and the fifth video sections 3130-1 and 3130-2 regarding the changed fixed time b 3130', and generate a summary content on the basis of the determined content summary section.

However, the present disclosure is not limited to the above. The first and the second fixed times 3120 and 3130 may include absolute fixed times 3120" and 3130" like the shaded area, and the video section within each of the absolute fixed times 3120" and 3130" may be included in the content summary section along with the video section regarding the event section B 3110 regardless of whether a scene changes or not.

Meanwhile, as described above, the controller 130 controls the outputter 120 to simultaneously output the content requested by the user and the pre-generated summary content regarding the corresponding content, or simultaneously output the content requested by the user and the pre-generated summary content regarding another content according to a first or second user command. Herein, the first user command may be a requesting command regarding a summary content service related to a currently-viewed content, and the second user command may be a requesting command regarding a summary content service related to another content different from the currently-viewed content.

Therefore, the outputter 120 adjusts video data of the content requested by the user to be proper for a first screen size through the image outputter 121, adjusts video data of the summary content to be proper for a second screen size, and adjusts a thumbnail image regarding the corresponding summary content to be proper for a third screen size. Further, the outputter 120 outputs audio data of the content requested by the user or audio data of the summary content to the speaker through the audio outputter 123. According to an exemplary embodiment, in response to the first or the second user command being input, the controller 150 may control the outputter 120 to stop outputting the audio data of the content requested by the user and output the audio data of the summary content. Accordingly, the outputter 120 may output the audio data of the summary content output through the audio outputter 123. Thus, the speaker may stop outputting audio signals regarding the content, and output audio signals regarding the summary content output through the audio outputter 123.

Meanwhile, according to a user command, the controller 130 may control the outputter 120 to selectively output at least one of a plurality of summary contents which are consecutively generated regarding the content. Specifically, as described above, according to the first or the second user command, first to third screen areas of the broadcast receiving apparatus 100 may display the content, the summary content and the thumbnail image, which are outputted through the image outputter 121. Meanwhile, the user may select one thumbnail image among a plurality of thumbnail images displayed on the third screen area. In response to a selecting command being input or received, the controller 130 may determine a thumbnail image corresponding to the selecting command, and control the outputter 120 to consecutively output the summary contents matched with the determined thumbnail image. Accordingly, the outputter 120 may consecutively output the summary content matched with the thumbnail image corresponding to the selecting command of the user through the image outputter 121 and the audio outputter 123 among the summary contents matched with the plurality of thumbnail images.

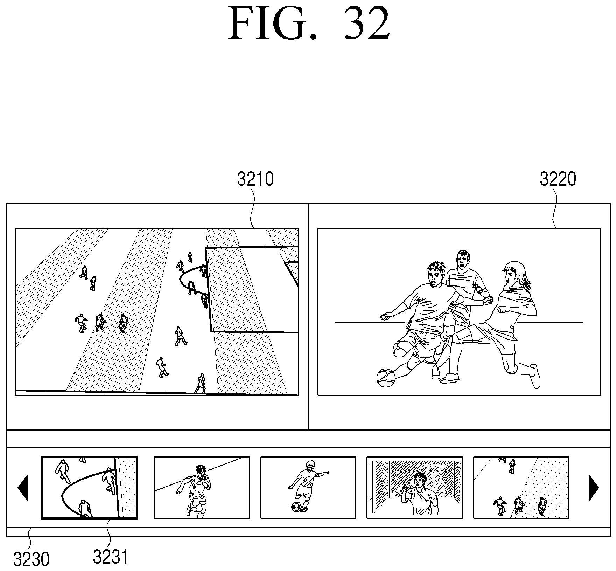

FIG. 32 is an illustrative view showing a method for providing a summary content service regarding a content in the broadcast receiving apparatus according to an exemplary embodiment.

Referring to FIG. 32, the broadcast receiving apparatus 100 may display a content requested by the user on a whole screen. In response to a summary content service requesting command (first user command) regarding the same content being input while the content is being displayed, the broadcast receiving apparatus 100 may consecutively display the content requested by the user on a first area 3210 of the screen, and a pre-generated summary content related to the content displayed on the first area 3210 on a second area 3220 of the screen. Additionally, the broadcast receiving apparatus 100 may display thumbnail images regarding the generated summary content consecutively on a third area 3230 of the screen. Thus, in response to a command to select a first thumbnail image 3231 among the thumbnail images displayed on the third area 3230 being input, the broadcast receiving apparatus 100 may consecutively display the summary content matched with the first thumbnail image 3231 on the second area 420.

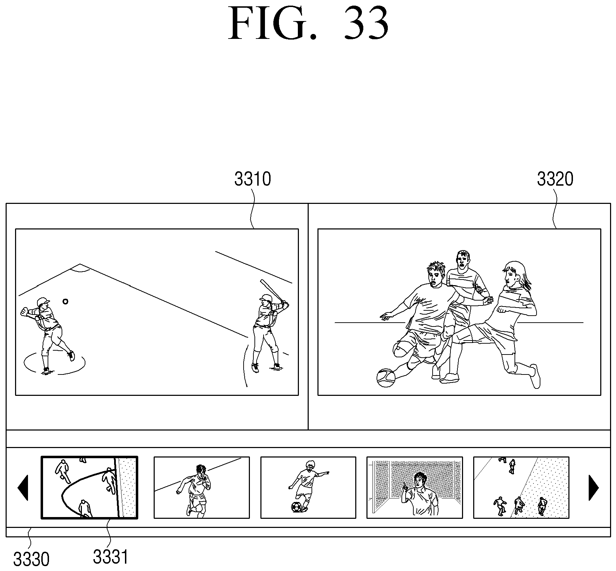

FIG. 33 is an illustrative view showing a method for providing a summary content service regarding another content different from the content in the broadcast receiving apparatus.

Referring to FIG. 33, the broadcast receiving apparatus 100 may display the content requested by the user on the whole screen. In response to a summary content service requesting command regarding another content different from the currently displayed content (second user command) being input while the content is being displayed, the broadcast receiving apparatus 100 may consecutively display the content requested by the user on a first area 3310 of the screen, and a pre-generated summary content related to another content, which is different from the content displayed on the first area 3310, on a second area 3320 of the screen. Additionally, the broadcast receiving apparatus 100 may consecutively display thumbnail images regarding the generated summary content on a third area 3330 of the screen. Therefore, in response to a command to select a first thumbnail image 3331 among the thumbnail images displayed on the third area 3330 being input, the broadcast receiving apparatus 100 may consecutively display the summary content matched with the first thumbnail image 3331 on the second area 3320.

Each component of the broadcast receiving apparatus 100 according to the exemplary embodiments has been described in the above explanation. Hereinafter, a configuration of the broadcast receiving apparatus 100 for providing a summary content service according to various exemplary embodiments will be explained in detail. However, because operation of each component related with the summary content service has been specifically explained above, a configuration method of the broadcast receiving apparatus 100 to provide the summary content service will be specifically described below.

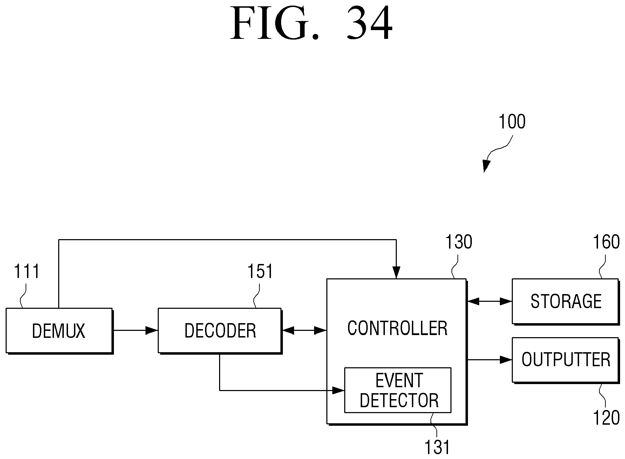

FIG. 34 is a first block diagram of a broadcast receiving apparatus generating a summary content regarding a content according to an exemplary embodiment.

Specifically, referring to FIG. 34, the broadcast receiving apparatus 100 may generate a summary content regarding a content which is viewed, and play back the generated summary content with only a minimum configuration. To achieve this, the broadcast receiving apparatus 100 may include the demux 111, the decoder 151, the outputter 120, the event detector 131, the controller 130 and the storage 160, all of which may be integrated into a single constitution.

In this case, the demux 111 extracts a content of a channel corresponding to a user command from a plurality of contents per channel, and outputs the content to the decoder 151 and the controller 130. The decoder 151 decodes video data and audio data included in the content output from the demux 111, and thus, the controller 130 outputs the decoded content through the outputter 120. Further, the controller 130 stores the content output from the demux 110 in the storage 160. However, the present disclosure is not limited to the above. The controller 130 may store the content decoded by the decoder 151 in the storage 160.

Meanwhile, the event detector 131 detects at least one event section corresponding to a preset condition by analyzing at least one of video and audio data of the content output from the decoder 151. In response to the at least one event section corresponding to the preset condition being detected by analyzing at least one of the video and audio data of the decoded content, the event detector 131 delivers time information regarding the at least one detected event section to the controller 130.

Thus, the controller 130 obtains a video section regarding the event section on the basis of the time information regarding the pre-detected event section among video sections regarding a prestored recoded broadcasting content or a content which is temporarily stored on a preset time basis. Thereafter, the controller 130 may obtain previous and subsequent video sections existing within a preset fixed time with reference to the video section in response to the obtained video section being a sport-related content, and generate a summary content on the basis of the content summary section including the video section regarding the obtained event section and the previous and subsequent video sections. In response to the summary content being generated, the controller 130 determines one video section corresponding to a preset condition among the video sections constituting the generated summary content as a thumbnail image, matches and stores the pre-generated summary contents with the thumbnail image in the storage 160.

In response to a user command to play back the summary content being input, the controller 130 controls the decoder 151 to decode the video and audio data of the prestored summary content, and the outputter 120 outputs the video and audio data decoded by the decoder 151. In this case, the outputter 120 may display the thumbnail image matched with the summary content on the display along with the video and audio data decoded by the decoder 151. Meanwhile, in response to one of the thumbnail images displayed on the screen being selected, the controller 130 may first decode the summary content matched with the selected thumbnail image through the decoder 120 and consecutively plays back the summary content.

Thus, the broadcast receiving apparatus 100 according to an exemplary embodiment may generate a summary contents regarding a content and play back the generated summary content with only the above-described minimum configuration.

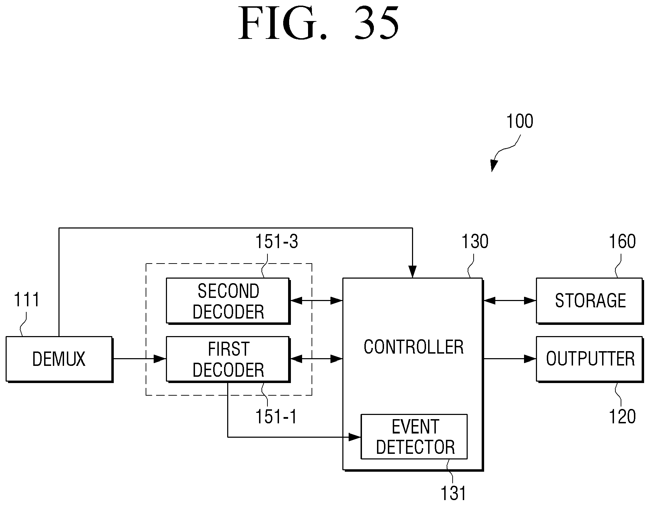

FIG. 35 is a first block diagram of the broadcast receiving apparatus simultaneously playing back a content and a summary content of the same content according to an exemplary embodiment.

Referring to FIG. 35, the broadcast receiving apparatus 100 may simultaneously play back a content which is viewed and a summary content related to the same content with only a minimum configuration. To achieve this, the broadcast receiving apparatus 100 may include a demux 111, first and second decoders 151-1 and 151-2, an outputter 120, an event detector 131, a controller 130 and a storage 160.

In this case, the demux 111 extracts a content of a channel corresponding to a user command from a plurality of contents per channel, and outputs result to the first decoder 151-1 and the controller 130. The first decoder 151-1 decodes video and audio data included in the content output from the demux 111, and the controller 130 may play back the decoded contents through the outputter 120.

Meanwhile, the controller 130 stores the content output through the demux 111 in the storage 160. However, the present disclosure is not limited to the above. The controller 130 may store the content decoded by the first decoder 151-1 in the storage 160. Meanwhile, the first decoder 151-1 outputs the decoded content to the event detector 131, and the event detector 131 detects at least one event section corresponding to a preset condition by analyzing at least one of the video and audio data of the content decoded by the first decoder 151-1. Thus, in response to the at least one event section corresponding to the preset condition being detected by analyzing at least one of the video and audio data of the decoded content, the event detector 131 delivers time information regarding the at least one detected event section to the controller 130.

Thus, the controller 130 obtains a video section regarding the event section on the basis of the time information regarding the pre-detected event section among video sections regarding the content pre-stored in the storage 160. Thereafter, in response to the obtained video section being a sport-related content, the controller 130 may obtain previous and subsequent video sections existing within a preset fixed time with reference to the video section, and generate a summary content on the basis of a content summary section including the video section of the obtained event section and the previous and subsequent video sections. In response to the summary content being generated, the controller 130 determines one video section corresponding to a preset condition among the video sections constituting the generated summary content as a thumbnail image, matches and stores the pre-generated summary content with the thumbnail image in the storage 160.

Meanwhile, in response to a summary content service command being input, the controller 130 controls the outputter 120 to output the video data regarding the currently played-back content on a first area of the screen. Further, the controller 130 controls the second decoder 151-3 to decode the video and audio data regarding the summary content prestored in the storage 160, and the outputter 120 to consecutively output the video data of the decoded summary content on a second area of the screen. Further, the controller 130 controls the outputter 120 to display the thumbnail images matched per a prestored summary content on a third area of the screen. Accordingly, the first area of the broadcast receiving apparatus 100 may play back the content of the channel requested by the user, the second area may play back the summary content related to the content of the corresponding channel, and the third area may display the thumbnail images regarding the summary content.

Meanwhile, in response to one of the thumbnail images displayed on the third area being selected, the controller 130 controls the outputter 120 to consecutively output the video data regarding the summary content matched with the selected thumbnail image on the second area of the screen. Accordingly, the second area of the broadcast receiving apparatus 100 may consecutively play back the summary content matched with the thumbnail image selected by the user.

As described, the broadcast receiving apparatus 100 according to an exemplary embodiment may simultaneously play back the content and the summary content related to the same content with only the above-described minimum configuration.

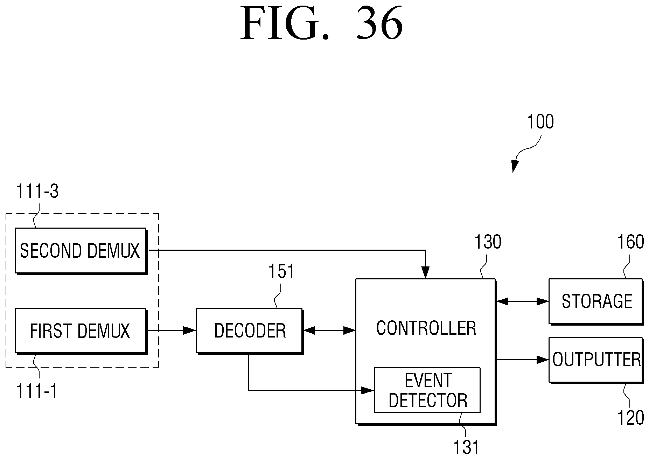

FIG. 36 is a second block diagram of the broadcast receiving apparatus generating a summary content regarding a content according to another exemplary embodiment.

Specifically, referring to FIG. 36, the broadcast receiving apparatus 100 may include first and second demuxes 111-1 and 111-3, a decoder 151, an outputter 120, a event detector 131, a controller 130, and a storage 160.

In this case, the first demux 111-1 extracts a content of a channel corresponding to a user command from a plurality of contents per channel, and outputs the content the decoder 151, and the second demux 111-3 extracts a content of the same channel as the first demux 111-1, and outputs the content to the controller 130. The decoder 151 receiving the content output from the first demux 111-1 decodes video and audio data included in the received content, and the controller 130 may output the decoded content through the outputter 120. The controller 130 stores the content output from the second demux 111-3 in the storage 160. However, the present disclosure is not limited to herein. The controller 130 may decode the content output from the second demux 111-3 through the decoder 151 and store the content in the storage 160.

Meanwhile, the decoder 151 outputs the decoded content to the event detector 131, and the event detector 131 detects at least one event section corresponding to a preset condition by analyzing at least one of the video and audio data regarding the content decoded by the decoder 151. Thus, in response to the at least one event section corresponding to the preset condition being extracted by analyzing at least one of video and audio data of the decoded content, the event detector 131 delivers time information regarding the at least one detected event section to the controller 130.

Accordingly, the controller 130 obtains a video section of the event section on the basis of the time information regarding the pre-detected event section among video sections regarding a prestored recorded content or a content which is temporarily stored on a preset time basis. Further, in response to the obtained video section is a sport-related content, the controller 130 may obtain previous and subsequent video sections existing within a preset fixed time with reference to the video section, and generate a summary content on the basis of a content summary section including the video section of the obtained event section and the previous and subsequent video sections. In response to the summary content being generated, the controller 130 determines one video section corresponding to the preset condition among the video sections constituting the generated summary content as a thumbnail image, matches and stores the pre-generated summary content with the thumbnail image in the storage 160.

In response to a user command to play back the summary content being input, the controller 130 may decode and play back the video and the audio data of the prestored summary content through the decoder 151, and display the thumbnail images matched per summary content on the screen. Meanwhile, in response to one of the thumbnail images displayed on the screen being selected, the controller 130 may decode the summary content matched with the selected thumbnail image through the decoder 151, and consecutively play back the summary content.

As described, the broadcast receiving apparatus 100 according to an exemplary embodiment may extract a content requested by the user through the first and the second demuxes 111-1 and 111-3, and play back the content requested by the user and generate the summary content related to the corresponding content more efficiently compared to the broadcast receiving apparatus 100 having a minimum configuration.

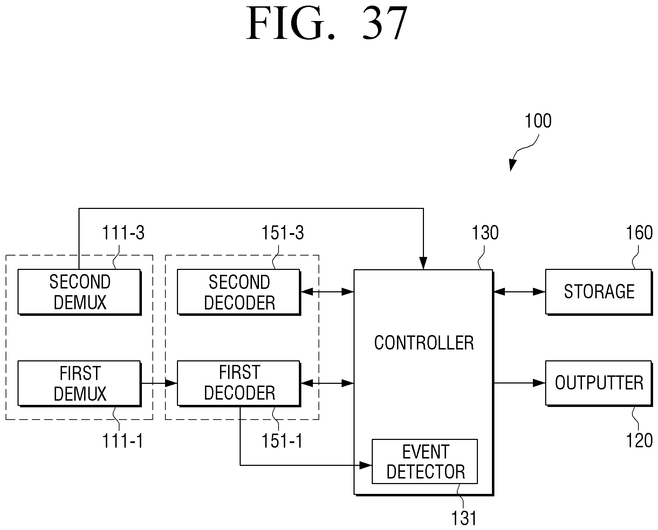

FIG. 37 is a second block diagram of the broadcast receiving apparatus simultaneously playing back a content and a summary content regarding the same content according to another embodiment.

Referring to FIG. 37, the broadcast receiving apparatus 100 may include first and the second demuxes 111-1 and 111-3, first and second decoders 151-1 and 151-3, an outputter 120, an event detector 131, a controller 130, and a storage 160.

In this case, the first demux 111-1 extracts a content of a channel corresponding to a user command from a plurality of contents per channel, and outputs the content to the first decoder 151-1. The second demux 111-3 extracts a content of the same channel as the first demux 111-1, and outputs the content to the controller 130.

The first decoder 151-1 may decode video and audio data included in the content output from the first demux 111-1, and the controller 130 may play back the decoded content through the outputter 120. Meanwhile, the controller 130 stores the content outputted through the second demux 111-3 in the storage 160. However, the present disclosure is not limited to herein. The controller 130 may store the content decoded by the first decoder 151-1 in the storage 160.

Meanwhile, the first decoder 151-1 outputs the decoded content to the event detector 131, and the event detector 131 detects at least one event section corresponding to a preset condition by analyzing at least one of video and audio data regarding the contents decoded by the first decoder 151-1. Thus, in response to the at least one event section corresponding to the preset condition being detected by analyzing at least one of the video and audio data of the decoded content, the event detector 131 delivers time information regarding the at least one detected event section to the controller 130.

Thus, the controller 130 obtains a video section regarding the event section on the basis of the time information regarding the pre-detected event section among video sections regarding the content which is previously stored in the storage 160. Thereafter, in response to the obtained video section being a sport-related content, the controller 130 may obtain previous and subsequent video sections existing within a preset fixed time with reference to the corresponding video section, and generate a summary content on the basis of a content summary section including the video section of the obtained event section and the previous and subsequent video sections. In response to the summary content being generated, the controller 130 determines one video section corresponding to a preset condition among the video sections constituting the generated summary content as a thumbnail image, matches and stores the pre-generated summary content with the thumbnail image in the storage 160.

Meanwhile, in response to a summary content service command being input, the controller 130 controls the outputter 120 to output the video data of the content which is currently played back on a first area of the screen. Further, the controller 130 decodes the video and audio data regarding the summary content prestored in the storage 160 through the second decoder 151-3, and controls the outputter 120 to consecutively output the video data of the summary content decoded by the second decoder 151-3 on a second area of the screen. Further, the controller 130 controls the outputter 120 to display the thumbnail image matched per prestored summary content on a third area of the screen. Thus, the first area of the broadcast receiving apparatus 100 may play back the content of the channel requested by the user, the second area may play back the summary content related with the content of the corresponding channel, and the third area may display the thumbnail image regarding the summary content.

Meanwhile, in response to one of the thumbnail images displayed on the third area being selected, the controller 130 controls the outputter 120 to consecutively output the video data regarding the summary content matched with the selected thumbnail image on the second area. Accordingly, the second area of the broadcast receiving apparatus 100 may consecutively play back the summary content matched with the thumbnail image selected by the user.

Thus, since the broadcast receiving apparatus 100 according to an exemplary embodiment includes the first and the second demuxes 111-1 and 111-3, and the first and the second decoders 151-1 and 151-3, it can simultaneously play back the content requested by the user and the summary content related to the same content more efficiently compared to the broadcast receiving apparatus 100 constituted with the minimum configuration.

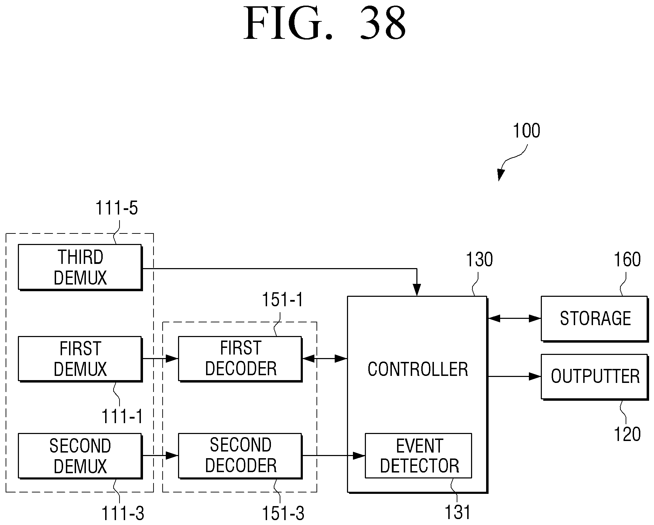

FIG. 38 is a third block diagram of the broadcast receiving apparatus generating a summary content regarding a content according to another embodiment.

Specifically, referring to FIG. 38, the broadcast receiving apparatus 100 may include first to third demuxes 111-1 ∼ 111-5, first and second decoders 151-1 and 151-3, an outputter 120, an event detector 131, a controller 130, and a storage 160.

In this case, the first demux 111-1 extracts a content of a channel corresponding to a user command from a plurality of contents per channel, and outputs the content to the first decoder 151-1. The second demux 111-3 extracts the content of the same channel as the first demux 111-1, and outputs the content to the second decoder 151-3. Further, the third demux 111-5 extracts the content of the same channel as the first and the second demuxes 111-1 and 111-3, and outputs the content to the controller 130.

The first decoder 151-1 receiving the content output from the first demux 111-1 may decode video and audio data included in the received content, and the controller 130 outputs the decoded content through the outputter 120. Further, the controller 130 stores the content output from the third demux 111-5 in the storage 160. However, the present disclosure is not limited to herein. The controller 130 may decode the content output from the third demux 111-5 through the first decoder 151-1, and store the content in the storage 160.

Meanwhile, the second decoder 151-3 decodes the content output from the second demux 111-3, and outputs the decoded content to the event detector 131. Accordingly, the event detector 131 detects at least one event section corresponding to a preset condition by analyzing at least one of the video and audio data of the content decoded by the second decoder 151-3. Thus, in response to the at least one event section corresponding to the preset condition being detected by analyzing at least one of the video and audio data of the decoded content, the event detector 131 delivers time information regarding the at least one event section to the controller 130.

The controller 130 obtains a video section regarding the event section on the basis of the time information of the pre-detected event section among the video sections of the prestored recorded content or the content temporarily stored on a preset time basis in the storage 160. In response to the obtained video section being a sport-related content, the controller 130 may obtain previous and subsequent video sections existing within a preset fixed time with reference to the corresponding video section, and generate a summary content on the basis of an event summary section including the video section of the obtained event section and the previous an subsequent video sections. In response to the summary content being generated, the controller 130 determines one video section corresponding to a preset condition among video sections constituting the generated summary content as a thumbnail image, matches and stores the pre-generated summary content with the thumbnail image in the storage 160.

In response to a user command to play back the summary content being input, the controller 130 may decode and play back the video and audio data of the prestored summary content through the first or the second decoder 151-1 or 151-3, and display the thumbnail image matched per summary content on the screen. Meanwhile, in response to one of the thumbnail images displayed on the screen being selected, the controller 130 may decode the summary content matched with the selected thumbnail image through the first decoder 151-1 and consecutively play back the summary content.

The broadcast receiving apparatus 100 according to an exemplary embodiment may most stably and efficiently play back the content requested by the user and generate the summary content related to the corresponding content by including the first to the third demuxes 111-1 ∼ 111-5 and the first and second decoders 151-1 and 151-3, compared to the broadcast receiving apparatus 100 described in FIG. 34 or FIG. 36.

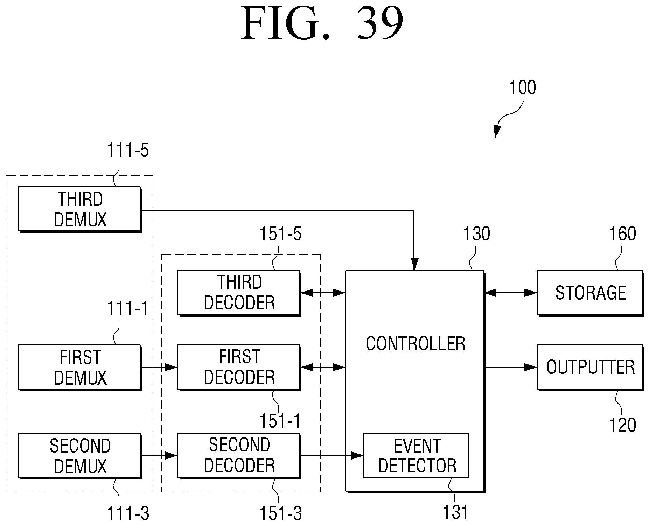

FIG. 39 is a third block diagram of the broadcast receiving apparatus simultaneously playing back a content and a summary content regarding the same content according to another exemplary embodiment.

Referring to FIG. 39, the broadcast receiving apparatus 100 may include first to third demuxes 111-1- 111-5, first to third decoders 151-1 ∼ 151-5, an outputter 120, an event detector 131, a controller 130 and a storage 160.

In this case, the first demux 111-1 extracts a content of a channel corresponding to a user command from a plurality of contents per channel, and outputs the content to the first decoder 151-1. The second demux 111-3 extracts the content of the same channel as the first demux 111-1, and outputs the content to the second decoder 151-3. Further, the third demux 111-5 extracts the content of the same channel as the first and the second demuxes 111-1 and 111-3, and outputs the content to the controller 130.

The first decoder 151-1 may decode video and audio data included in the content output from the first demux 111-1, and the controller 130 may play back the content decoded by the first decoder 151-1 through the outputter 120. Meanwhile, the controller 130 stores the content output from the third demux 111-5 in the storage 160. However, the present disclosure is not limited to the above. The controller 130 may store the content decoded by any one of the first to the third decoders 151-1 ∼ 151-5 in the storage 160.

Meanwhile, the second decoder 151-3 outputs the decoded content to the event detector 131, and the event detector 131 detects at least one event section corresponding to a preset condition by analyzing at least one of the video and audio data of the content decoded by the second decoder 151-3. In response to the at least one event section corresponding to the preset condition being detected by analyzing at least one of the video and audio data of the decoded content, the event detector 131 delivers time information regarding the at least one detected event section to the controller 130.

Accordingly, the controller 130 obtains a video section regarding the event section on the basis of the time information of the pre-detected event section among video sections regarding the prestored content in the storage 160. In response to the obtained video section being a sport-related content, the controller 130 may obtain previous and subsequent video sections existing within a preset fixed time with reference to the corresponding video section, and generate a summary content on the basis of an event summary section including the video section regarding the obtained event section and the previous and subsequent video sections. In response to the summary content being generated, the controller 130 determines one video section corresponding to a preset condition among video sections constituting the generated summary content as a thumbnail image, matches and stores the pre-generated summary content with the thumbnail image in the storage 160.

Meanwhile, in response to a summary content service command being input, the controller 130 controls the outputter 120 to output the video data regarding the currently played back content on a first area of the screen. Further, the controller 130 controls the third decoder 151-5 to decode video and audio data regarding the summary content prestored in the storage 160, and controls the outputter 120 to consecutively output the video data of the summary content decoded by the third decoder 151-5 on a second area of the screen. Further, the controller 130 controls the outputter 120 to display the thumbnail images matched per prestored summary contents on a third area of the screen. Thus, the first area of the broadcast receiving apparatus 100 may play back the content of the channel requested by the user, the second area may play back the summary content related to the content of the corresponding channel, and the third area may display the thumbnail images regarding the summary content.

Meanwhile, when one of the thumbnail images displayed on the third area being selected, the controller 130 controls the outputter 120 to consecutively output the video data of the summary content matched with the selected thumbnail image on the second area of the screen. Thus, the second area of the broadcast receiving apparatus 100 may consecutively play back the summary content matched with the thumbnail image selected by the user.

Thus, the broadcast receiving apparatus 100 may more stably and efficiently play back the content requested by the user and the summary content related to the same content simultaneously compared to the broadcast receiving apparatus 100 described FIG. 35 or FIG. 37, by including the first to the third demuxes 111-1 ∼ 111-5 and the first to the third decoders 151-1 ∼ 151-5,

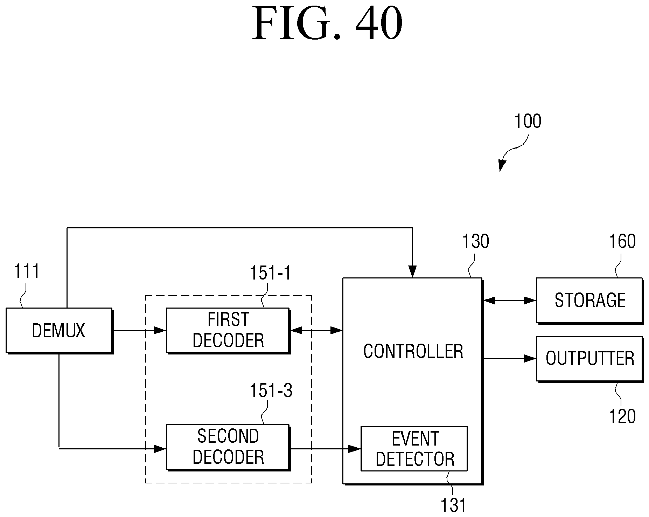

FIG. 40 is a fourth block diagram of the broadcast receiving apparatus generating a summary content regarding a content according to another exemplary embodiment.

Specifically, referring to FIG. 40, the broadcast receiving apparatus 100 may include a demux 111, first and second decoders 151-1 and 151-3, an outputter 120, an event detector 131, a controller 130 and a storage 160.

In this case, the demux 111 extracts a content of a channel corresponding to a user command from a plurality of contents per channel, and outputs the content to the first and the second decoders 151-1 and 151-3, and the controller 130.

The first decoder 151-1 receiving the content output from the demux 111 may decode video and audio data included in the received content, and the controller 130 may output the decoded content through the outputter 120.

Further, the controller 130 stores the content output from the demux 111 in the storage 160. However, the present disclosure is not limited to the above. The controller 130 may decode the content output from the demux 111 through the first decoder 151-1, and store the content in the storage 160.

Meanwhile, the second decoder 151-3 decodes the content outputted from the demux 111, and outputs the decoded content to the event detector 131. Accordingly, the event detector 131 detects at least one event section corresponding to a preset condition by analyzing at least one of video and audio data regarding the content decoded by the second decoder 151-3, and delivers time information regarding the detected event section to the controller 130.

Thus, the controller 130 obtains a video section regarding the event section on the basis of the time information regarding the pre-detected event section among video sections of a recorded content prestored in the storage 160 or a content temporarily stored on a preset time basis. In response to the obtained video section being a sport-related content, the controller 130 may obtain previous and subsequent video sections existing within a preset fixed time with reference to the corresponding video section, and generate a summary content on the basis of a content summary section including the video section of the obtained event section and the previous and subsequent video sections. In response to the summary content being generated, the controller 130 determines one video section corresponding to a preset condition among video sections constituting the generated summary content as a thumbnail image, matches and stores the pre-generated summary content with the thumbnail imagesin the storage 160.

In response to a user command to play back the summary content being input, the controller 130 may decode and play back the video and audio data of the prestored summary content through the first decoder 151-1, and display the thumbnail images matched per summary content on the screen. Meanwhile, in response to one of the thumbnail images displayed on the screen being selected, the controller 130 may decode the summary content matched with the selected thumbnail image through the first decoder 151-1, and consecutively play back the content.

Therefore, the broadcast receiving apparatus 100 according to an exemplary embodiment may more stably and efficiently play back the content requested by the user and generate the summary content related to the corresponding content compared to the broadcast receiving apparatus 100 constituted with the minimum configuration, by including the first and second decoders 151-1 and 151-3 and decoding the content requested by the user through the first and second decoders 151-1 and 151-3.

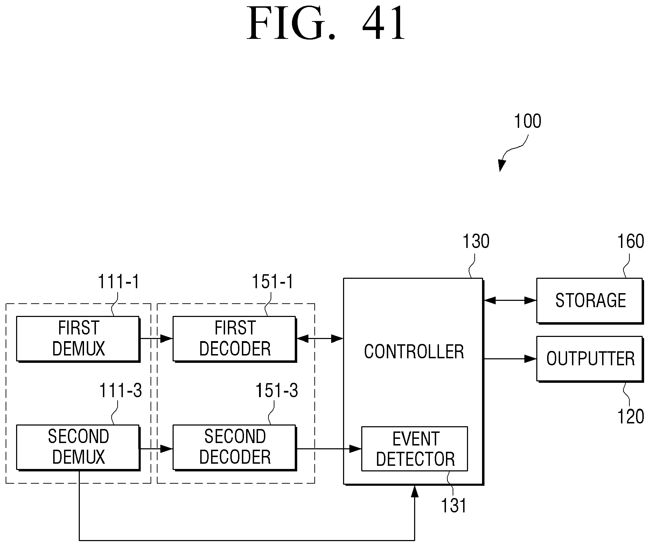

FIG. 41 is a first block diagram of the broadcast receiving apparatus generating a summary content regarding another content different from the content which is viewed according to an exemplary embodiment.

Referring to FIG. 41, the broadcast receiving apparatus 100 may include first and second demuxes 111-1 and 111-3, first and second decoders 151-1 and 151-3, an outputter 120, an event detector 131, a controller 130 and a storage 160.

In this case, the first demux 111-1 extracts a first content of a first channel corresponding to a user command from a plurality of contents per channel, and outputs the first content to the first decoder 151-1. Further, the second demux 111-3 extracts a second content of a second channel from a plurality of contents per channel, and outputs the second content to the second decoder 151-3 and the controller 130.

The first decoder 151-1 may decode video and audio data included in the first contents output from the first demux 111-1, and the controller 130 may output the first content decoded by the first decoder 151-1 through the outputter 120. Further, the controller 130 stores the second content output from the second demux 111-3 in the storage 160.

Meanwhile, the second decoder 151-3 decodes the second content output from the second demux 111-3, and outputs the decoded second content to the event detector 131. Accordingly, the event detector 131 detects at least one event section corresponding to a preset condition by analyzing at least one of video and audio data of the second content decoded through the second decoder 151-3, and delivers time information regarding the detected event section to the controller 130.

Thus, the controller 130 obtains a video section regarding the event section on the basis of the time information of the pre-detected event section among video sections of a recorded content of the second content prestored in the storage 160 or the second content temporarily stored on a preset time basis. In response to the obtained video section being a sport-related content, the controller 130 may obtain previous and subsequent video sections existing within a preset fixed time with reference to the corresponding video section, and generate a summary content on the basis of a content summary section including the video section of the obtained event section and the previous and subsequent video sections. In response to the summary content being generated, the controller 130 determines one video section corresponding to a preset condition among video sections constituting the generated summary content as a thumbnail image, matches the pre-generated summary content with the thumbnail image, and stores a matching result in the storage 160.

In response to a user command to play back the summary content being input, the controller 130 may decode and play back the video and audio data of the prestored summary content through the first decoder 151-1, and display the thumbnail images matched per summary content on the screen. Meanwhile, in response to one of the thumbnail images displayed on the screen being selected, the controller 130 may decode the summary content matched with the selected thumbnail image through the first decoder 151-1, and consecutively play back the summary content.

Thus, the broadcast receiving apparatus 100 according to an exemplary embodiment may play back the first content requested by the user and generate the summary content related to the second content with only the minimum configuration.

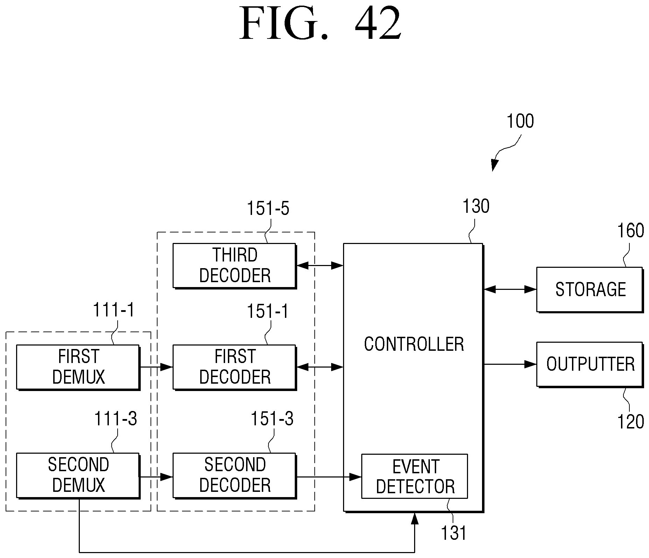

FIG. 42 is a first block diagram of the broadcast receiving apparatus simultaneously playing back a currently-viewed content and a summary content regarding a different content from the content according to an exemplary embodiment.

Referring to FIG. 42, the broadcast receiving apparatus 100 may include first and second demuxes 111-1 and 111-3, first to third decoders 151-1 ∼ 151-5, an outputter 120, an event detector 131, a controller 130 and a storage 160.

In this case, the first demux 111-1 extracts a first content of a first channel corresponding to a user command from a plurality of contents per channel, and outputs the first content to the first decoder 151-1. The second demux 111-3 extracts a second content of a second channel corresponding to a user command, and outputs the second content to the second decoder 151-3 and the controller 130.

The first decoder 151-1 may decode video and audio data included in the first contents output from the first demux 111-1, and the controller 130 may output the first content decoded by the first decoder 151-1 through the outputter 120. Further, the controller 130 stores the second content output from the second demux 111-3 in the storage 160. However, the present disclosure is not limited thereto. The controller 130 may store the second content decoded by the second or third decoders 151-3 or 151-5 in the storage 160.

Meanwhile, the second decoder 151-3 outputs the decoded second content to the event detector 131, and the event detector 131 detects at least one event section corresponding to a preset condition by analyzing at least one of video and audio data of the second content decoded through the second decoder 151-3. In response to the at least one event section corresponding to the preset condition being detected by analyzing at least one of the video and audio data of the decoded content, the event detector 131 delivers time information regarding the at least one detected event section to the controller 130.

Accordingly, the controller 130 obtains a video section regarding the event section on the basis of the time information of the pre-detected event section among video sections regarding the prestored second content in the storage 160. In response to the obtained video section being a sport-related content, the controller 130 may obtain previous and subsequent video sections existing within a preset fixed time with reference to the corresponding video section, and generate a summary content on the basis of a content summary section including the video section regarding the obtained event section and the previous and subsequent video sections. In response to the summary content being generated, the controller 130 determines one video section corresponding to a preset condition among video sections constituting the generated summary content as a thumbnail image, matches and stores the pre-generated summary content with the thumbnail image in the storage 160.

Meanwhile, in response to a summary content service command being input, the controller 130 controls the outputter 120 to output the video data regarding the currently played back first content on a first area of the screen. Further, the controller 130 controls the third decoder 151-5 to decode video and audio data regarding the summary content related to the second content prestored in the storage 160, and controls the outputter 120 to consecutively output the video data of the summary content decoded by the third decoder 151-5 on a second area of the screen. Further, the controller 130 controls the outputter 120 to display the thumbnail images matched per prestored summary content on a third area of the screen. Thus, the first area of the broadcast receiving apparatus 100 may play back the first content of the first channel requested by the user, the second area may play back the summary content related to the second content of the second channel, and the third area may display the thumbnail images regarding the summary content.

Meanwhile, when one of the thumbnail images displayed on the third area being selected, the controller 130 controls the outputter 120 to consecutively output the video data of the summary content matched with the selected thumbnail image on the second area of the screen. Thus, the second area of the broadcast receiving apparatus 100 may consecutively play back the summary content matched with the thumbnail image selected by the user.

Thus, the broadcast receiving apparatus 100 may more stably and efficiently play back the first content requested by the user and the summary content related to the second content simultaneously with only the minimum configuration.

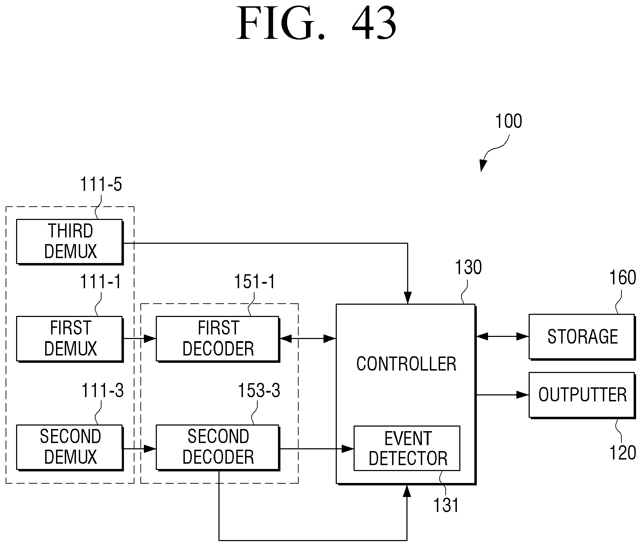

FIG. 43 is a second block diagram of the broadcast receiving apparatus generating a summary content regarding another content different from the content which is viewed according to an exemplary embodiment.

Referring to FIG. 43, the broadcast receiving apparatus 100 may include first to third demuxes 111-1 to 111-5, first and second decoders 151-1 and 151-3, an outputter 120, an event detector 131, a controller 130 and a storage 160.

In this case, the first demux 111-1 extracts a first content of a first channel corresponding to a user command from a plurality of contents per channel, and outputs the first content to the first decoder 151-1. Further, the second demux 111-3 extracts a second content of a second channel from a plurality of contents per channel, and outputs the second content to the second decoder 151-3, and the third demux 111-5 extracts the second content of the same second channel as the second demux 111-3 and outputs the second content to the controller 130.

The first decoder 151-1 may decode video and audio data included in the first contents output from the first demux 111-1, and the controller 130 may output the first content decoded by the first decoder 151-1 through the outputter 120. Further, the controller 130 stores the second content output from the third demux 111-5 in the storage 160.

Meanwhile, the second decoder 151-3 decodes the second content output from the second demux 111-3, and outputs the decoded second content to the event detector 131. Accordingly, the event detector 131 detects at least one event section corresponding to a preset condition by analyzing at least one of video and audio data of the second content decoded through the second decoder 151-3, and delivers time information regarding the detected event section to the controller 130.

Thus, the controller 130 obtains a video section regarding the event section on the basis of the time information of the pre-detected event section among video sections of a recorded content of the second content prestored in the storage 160 or the second content temporarily stored on a preset time basis. In response to the obtained video section being a sport-related content, the controller 130 may obtain previous and subsequent video sections existing within a preset fixed time with reference to the corresponding video section, and generate a summary content on the basis of a content summary section including the video section of the obtained event section and the previous and subsequent video sections. In response to the summary content being generated, the controller 130 determines one video section corresponding to a preset condition among video sections constituting the generated summary content as a thumbnail image, matches the pre-generated summary content with the thumbnail image, and stores a matching result in the storage 160.

In response to a user command to play back the summary content being input, the controller 130 may decode and play back the video and audio data of the prestored summary content through the first decoder 151-1, and display the thumbnail images matched per summary content on the screen. Meanwhile, in response to one of the thumbnail images displayed on the screen being selected, the controller 130 may decode the summary content matched with the selected thumbnail image through the first decoder 151-1, and consecutively play back the summary content.

Thus, the broadcast receiving apparatus 100 according to an exemplary embodiment may play back the first content requested by the user and generate the summary content related to the second content more stably and more efficiently by including the first to third demuxes 111-1 to 111-5 and the first and second decoder 151-1 and 151-3.

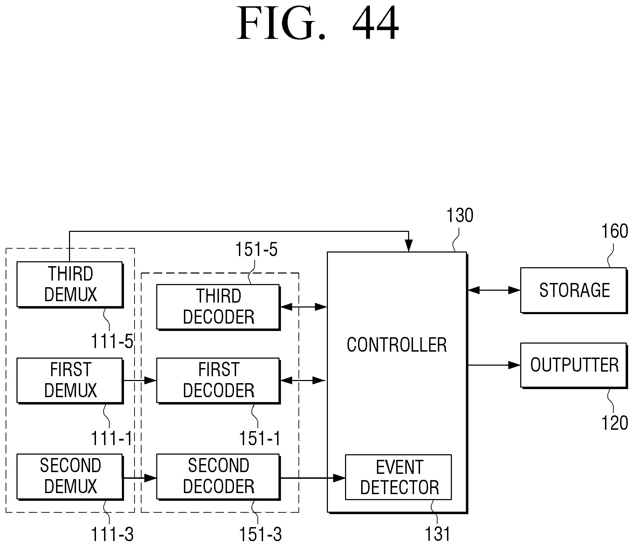

FIG. 44 is a second block diagram of the broadcast receiving apparatus generating a summary content regarding another content different from the content which is viewed according to an exemplary embodiment.

Referring to FIG. 44, the broadcast receiving apparatus 100 may include first to third demuxes 111-1 to 111-5, first to third decoders 151-1 to 151-5, an outputter 120, an event detector 131, a controller 130 and a storage 160.

In this case, the first demux 111-1 extracts a first content of a first channel corresponding to a user command from a plurality of contents per channel, and outputs the first content to the first decoder 151-1. Further, the second demux 111-3 extracts a second content of a second channel corresponding to a user command, and outputs the second content to the second decoder 151-3, and the third demux 111-5 extracts the second content of the same second channel as the second demux 111-3 and outputs the second content to the controller 130.

The first decoder 151-1 may decode video and audio data included in the first contents output from the first demux 111-1, and the controller 130 may play back the first content decoded by the first decoder 151-1 through the outputter 120. Further, the controller 130 stores the second content output from the third demux 111-5 in the storage 160. However, the present disclosure is not limited thereto. The controller 130 may store the second content decoded by the third decoder 151-3 in the storage 160.

Meanwhile, the second decoder 151-3 outputs the decoded second content to the event detector 131, and the event detector 131 detects at least one event section corresponding to a preset condition by analyzing at least one of video and audio data of the second content decoded through the second decoder 151-3. In response to the at least one event section corresponding to the preset condition being detected by analyzing at least one of the video and audio data of the decoded content, the event detector 131 delivers time information regarding the at least one detected event section to the controller 130.

Accordingly, the controller 130 obtains a video section regarding the event section on the basis of the time information of the pre-detected event section among video sections regarding the prestored second content in the storage 160. In response to the obtained video section being a sport-related content, the controller 130 may obtain previous and subsequent video sections existing within a preset fixed time with reference to the corresponding video section, and generate a summary content on the basis of a content summary section including the video section regarding the obtained event section and the previous and subsequent video sections. In response to the summary content being generated, the controller 130 determines one video section corresponding to a preset condition among video sections constituting the generated summary content as a thumbnail image, matches and stores the pre-generated summary content with the thumbnail image in the storage 160.

Meanwhile, in response to a summary content service command being input, the controller 130 controls the outputter 120 to output the video data regarding the currently played back first content on a first area of the screen. Further, the controller 130 controls the third decoder 151-5 to decode video and audio data regarding the summary content related to the second content prestored in the storage 160, and controls the outputter 120 to consecutively output the video data of the summary content decoded by the third decoder 151-5 on a second area of the screen. Further, the controller 130 controls the outputter 120 to display the thumbnail images matched per prestored summary content on a third area of the screen. Thus, the first area of the broadcast receiving apparatus 100 may play back the first content of the first channel requested by the user, the second area may play back the summary content related to the second content of the second channel, and the third area may display the thumbnail images regarding the summary content.

Meanwhile, when one of the thumbnail images displayed on the third area being selected, the controller 130 controls the outputter 120 to consecutively output the video data of the summary content matched with the selected thumbnail image on the second area of the screen. Thus, the second area of the broadcast receiving apparatus 100 may consecutively play back the summary content matched with the thumbnail image selected by the user.

Thus, the broadcast receiving apparatus 100 may more stably and efficiently play back the first content requested by the user and the summary content related to the second content simultaneously by including the first to third demuxes 111-1 to 111-5 and the first to third decoders 151-1 to 151-5.

The operation of providing a summary content service regarding a content in the broadcast receiving apparatus according to an exemplary embodiment has been described in the above explanation. Hereinafter, a method for providing a summary content service in the broadcast receiving apparatus according to an exemplary embodiment will be explained in detail.

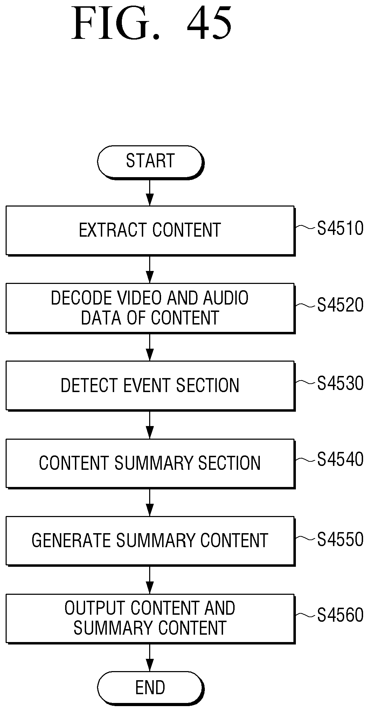

FIG. 45 is a flowchart explaining a method for providing a summary content service in the display apparatus according to an exemplary embodiment.

Referring to FIG. 45, the broadcast receiving apparatus 100 extracts a content of a channel corresponding to a user command among a plurality of channels through the demux (S4510). In response to the content being extracted, the broadcast receiving apparatus 100 decodes video and audio data included in the extracted content (S4520). Thereafter, the broadcast receiving apparatus 100 detects at least one event section corresponding to a preset condition by analyzing at least one of the video and audio data of the decoded content (4530).

The method for detecting an event section has been described in the above explanation and thus detailed description thereof is omitted.

In response to the at least one event section being detected on the basis of the preset condition, the broadcast receiving apparatus 100 determines a content summary section on the basis of the detected event section, and generate a summary content on the basis of the determined content summary section (S4540 and S4550). Specifically, in response to an event section being detected, the broadcast receiving apparatus 100 obtains a video section regarding the event section among video sections regarding a prestored recorded content or a real-time content prestored on a preset time basis based on the time information when the event section is detected. The broadcast receiving apparatus 100 determines whether the content regarding the corresponding video section is a sport-related content by analyzing the obtained video sections. As a determining result, in response to the obtained video section being a sport-related content, the broadcast receiving apparatus 100 obtains previous and subsequent video sections existing within a preset fixed time with reference to the video section of the pre-detected event section.

The broadcast receiving apparatus 100 determines whether there is a section where a scene changes among the obtained previous and subsequent video sections. In response to determining that there is no section where a scene changes, the broadcast receiving apparatus 100 determines the video section of the detected event section and the previous and subsequent video sections existing within the fixed time with reference to the corresponding video section as a content summary section.

Meanwhile, in response to a scene being determined to change in at least one of the obtained previous and subsequent video sections, the broadcast receiving apparatus 100 obtains previous and subsequent video sections related to the video section of the detected event section by changing the preset fixed time. Further, the broadcast receiving apparatus 100 may determine the video section of the detected event section and the previous and subsequent video sections existing within the changed fixed time as a content summary section.

Meanwhile, the fixed time according to an exemplary embodiment may include an absolute fixed time, and the absolute fixed time cannot be changed. Thus, the broadcast receiving apparatus 100 determines whether there is a section where a scene changes among the previous and subsequent video sections except for the previous and subsequent video sections existing within the absolute fixed time. As a determining result, in response to there being a section where a scene changes, the broadcast receiving apparatus 100 may obtain the previous and subsequent video sections related to the video section regarding the pre-detected event section by changing the fixed time within the fixed time except for the absolute fixed time.

The broadcast receiving apparatus 100 determines a content summary section including the video section of the event section and the previous and subsequent video sections existing within the preset fixed time with reference to the corresponding video section or changed fixed time, and generates a summary content on the basis of the determined content summary section. In response to the summary content being generated, the broadcast receiving apparatus 100 determines a video image of one video section corresponding to a preset condition among video sections constituting the corresponding summary content as a thumbnail image, matches and stores the summary contents with the determined thumbnail image.

Thereafter, the broadcast receiving apparatus 100 simultaneously plays back the content requested by the user and the prestored summary content according to a user command (S4560). Herein, the summary content may be a content related to the currently-viewed content, or a content related to another content different from the currently-viewed content. Thus, in response to the user command being a summary content service command regarding the same content as the currently-viewed content, the broadcast receiving apparatus 100 simultaneously plays back the currently-viewed content and the summary content related to the corresponding content. Meanwhile, in response to the user command being a summary content service command regarding a content different from the currently-viewed content, the broadcast receiving apparatus 100 simultaneously plays back the currently-viewed content and the summary content related to the different content.

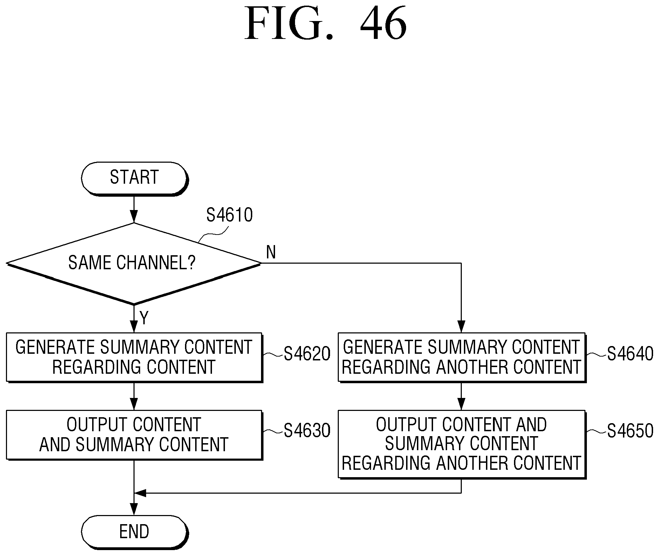

FIG. 46 is a flowchart provided to explain a method for generating and playing back a summary content in the broadcast receiving apparatus according to an exemplary embodiment.

Referring to FIG. 46, in response to a user command being input, the broadcast receiving apparatus 100 determines whether the input user command is a summary content service request regarding the same channel. As a determining result, in response to the user command being a summary content service request regarding the same channel, the broadcast receiving apparatus 100 generates a summary content from the content which is currently played back (S4610). As described above, the broadcast receiving apparatus 100 detects an event section corresponding to a preset condition from the content which is currently played back, and obtains a video section regarding the event section on the basis of time information when the event section is detected. Further, the broadcast receiving apparatus 100 obtains previous and subsequent video sections existing within a preset fixed time with reference to the obtained video section, and generates a summary content regarding the content which is currently played back on the basis of the video section regarding the obtained event section and the previous and subsequent video sections (S4620). Thereafter, the broadcast receiving apparatus 100 simultaneously outputs the content requested by the user and the summary content related to the corresponding content (S4630). Thus, the broadcast receiving apparatus 100 displays the content which is currently played back on a first area and the summary content related to the corresponding content on a second area.

Meanwhile, the broadcast receiving apparatus 100 may display thumbnail images regarding the generated summary content related to the corresponding content on a third area. In response to one of the thumbnail images being selected, the broadcast receiving apparatus 100 may consecutively display the summary content matched with the selected thumbnail image on the second area.

Meanwhile, in response to the user command being a summary content service request regarding another content (referred to as a second content) different from the currently played-back content (referred to as a first content) at S4610, the broadcast receiving apparatus 100 generates a summary content related to the second content (S4640). Thereafter, the broadcast receiving apparatus 100 simultaneously outputs the first content and the summary content related to the second content (S4650).

Specifically, the broadcast receiving apparatus 100 extracts the first content through the first demux, decodes the first content through the first decoder, and displays the decoded first content on the first area. Further, the broadcast receiving apparatus 100 extracts the second content through the second demux, and detects an event section corresponding to a preset condition from the extracted second content. Further, the broadcast receiving apparatus 100 obtains a video section regarding the event section on the basis of time information of the event section detected from the second content. The broadcast receiving apparatus 100 obtains previous and subsequent video sections existing within a preset fixed time with reference to the obtained video section, and generates a summary content regarding the second content on the basis of the the video section regarding the obtained event section and the previous and subsequent video sections.

Thus, the broadcast receiving apparatus 100 may play back the first content on the first area and the summary content related to the second content on the second area. Meanwhile, the broadcast receiving apparatus 100 may display the thumbnail images regarding the generated summary content related to the second content on the third area. In response to one of the thumbnail images being selected, the broadcast receiving apparatus 100 may consecutively display the summary contents matched with the selected thumbnail image on the second area.

Hereinafter, an operation and method for generating bookmarking information to selectively output a video section related to an event section in the above-described broadcast receiving apparatus 100 will be explained in detail.

As described above, the data processor 150 signal-processes video and audio data of a received content or a prestored recorded content as formats that may be output. To achieve this, the data processor 150 may include at least one of a decoder 151, a scaler 153, and a deinterlacing unit 155. As described above, the decoder 151 decodes video and audio data of a received content or a prestored recorded content, and the scaler 153 scales the decoded video data. The deinterlacing unit 155 deinterlaces the decoded video data into a sequential scanning image. The decoder 151, the scaler 153, and the deinterlacing unit 155 of the data processor 150 are well-known elements for performing image-processing, and thus their detailed descriptions are omitted herein.

The controller 130 records a content received through the receiver 110 or the communicator 140 and stores the recorded content in the storage 160 according to a recording command input through the inputter 170.

The controller 130 performs an operation for providing a summary content service of a content requested by the user, according to a summary content generating command input through the inputter 170. In detail, the controller 130 analyzes at least one of the video and audio data of the content signal-processed by the data processor 150 to detect an event section corresponding to a preset condition. The controller 130 generates bookmarking information for selectively outputting only a video section related to the event section detected from the recorded content related to the corresponding content and stores the bookmarking information in the storage 160.

Here, the video section related to the event section may be a video section that is selected as a highlight image from the recorded content. Also, the bookmarking information for outputting the video section related to the event section may include time information about a start time and an end time of a summary content section including the event section. The bookmarking information may also include a video image that is determined as a representative thumbnail image among video images included in the summary content section including the corresponding event section. Therefore, the controller 130 may generate the time information about the start time and the end time of the summary content section including the event section and the bookmarking information including the video image determined as the representative thumbnail image among the video images included in the summary content section including the event section, and store the time information and the bookmarking information in the storage 160.

As described above, the storage 160 which stores a recorded content, a summary content, and a thumbnail image on the corresponding summary content may store a content recorded in relation to a content that is being viewed or a content that is set to be recorded and bookmarking information for selectively outputting a summary content section from the corresponding recorded content, according to a request of the user.

In response to an event section being detected according to the above-described various exemplary embodiments, the controller 130 may determine a summary content section including the detected event section, and determine a representative thumbnail image for the corresponding summary content section. In response to the representative thumbnail image for the summary content section being determined, the controller 130 may generate the time information about the start time and the end time of the summary content section including the event section and the bookmarking information including the video image determined as the representative thumbnail image, and store the time information and the bookmarking information in the storage 160.

In response to a recorded content playback command being input through the inputter 170, the controller 160 may control the outputter 120 to output a recorded content corresponding to the recorded content playback command among a plurality of recorded contents pre-stored in the storage 160. Here, in response to the recorded content playback command input through the inputter 170 being a summary content service command, the controller 130 may control the outputter 120 to selectively output only a video section corresponding to the summary content section from the corresponding recorded content.

In detail, the controller 130 acquires bookmarking information about the recorded content output through the outputter 120 according to the summary content service command. The controller 130 may control the outputter 120 to extract a video section corresponding to time information included in the bookmarking information about the recorded content based on playback time information of the recorded content and selectively output only an extracted summary content section. Therefore, the outputter 120 may selectively output only the video section corresponding to the summary content section from the recorded content through at least one of the image outputter 121 and the audio outputter 123.

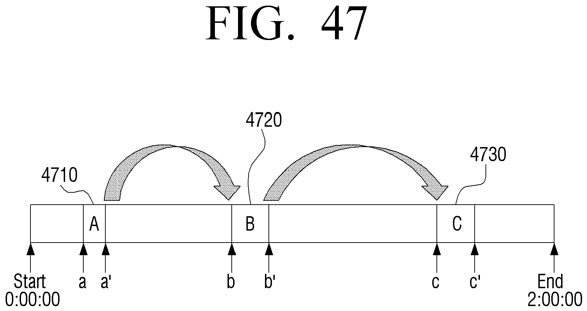

FIG. 47 is a view illustrating a summary content section that is output from the broadcast receiving apparatus, according to an exemplary embodiment.

As shown in FIG. 47, the controller 130 may acquire bookmarking information that is pre-stored in relation to a recorded content requested by a user. In response to the bookmarking information being acquired, the controller 130 acquires time information about a playback start time of a summary content section included in the acquired bookmarking information and time information about a playback end time of the summary content section. As shown in FIG. 47, a playback start time of summary content section A 4710 may be a, and a playback end time of the summary content section A 4710 may be a'. A playback start time of summary content section B 4720 may be b, and a playback end time of the summary content section B 4720 may be b'. Also, a playback start time of summary broadcast section C 4730 may be c, and a playback end time of the summary content section C 230 may be c'.

In response to time information about the summary content sections A through C being acquired based on acquired bookmarking information, the controller 130 controls the outputter 120 to output a video section between time a and time a' based on a time when a recorded content is played back. Therefore, the outputter 120 outputs the video section between the time a and the time a' among video sections of the recorded content. In response to the playback of the video section between the time a and the time a' ending, i.e., playback of a video section corresponding to the time a' ending, the controller 130 controls the outputter 120 to output a video section between time b and time b' with reference to the time when the recorded content is played back. Therefore, the outputter 120 outputs the video section between the time b and the time b' among the video sections of the recorded content. In response to the playback of the video section between the time b and the time b' ending, i.e., playback of a video section corresponding to the time b' ending, the controller 130 controls the outputter 120 to output a video section between time c and time c' with reference to the time when the recorded content is played back. Therefore, the outputter 120 outputs the video section between the time c and the time c' among the video sections of the recorded content.

As described above, the broadcast receiving apparatus 100 may selectively play back only a summary content section corresponding to a highlight image among video sections of a recorded content based on bookmarking information.

In response to a recorded content playback command being input, the controller 130 acquires a recorded content corresponding to the input recorded content playback command among a plurality of recorded contents that are pre-stored, and determines whether bookmarking information related to the acquired recorded content is stored. In response to determining that the bookmarking information related to the recorded content is stored, the controller 130 controls the outputter 120 to output the recorded content corresponding to the recorded content playback command and a representative thumbnail image included in the bookmarking information. Therefore, the outputter 120 outputs video data of the recorded content in a first area and a plurality of representative thumbnail images in a second area through the image outputter 151.

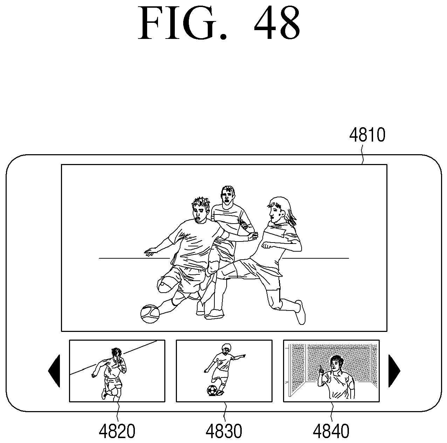

FIG. 48 is a view illustrating a recorded content that is output from the broadcast receiving apparatus, according to an exemplary embodiment.

As shown in FIG. 48, in response to a recorded content playback command of a user being input, the controller 130 acquires a recorded content corresponding to the recorded content playback command among a plurality of recorded contents that are pre-stored. Here, the controller 130 determines whether bookmarking information related to the recorded content is stored in the storage 160. In response to determining that the bookmarking information related to the recorded content is stored in the storage 160, the controller 130 controls the outputter 120 to output a recorded content 4810 corresponding to the recorded content playback command and a representative thumbnail image included in the bookmarking information related to the recorded content. Therefore, the outputter 120 outputs video data 4810 of the recorded content in a first area and first to third representative thumbnail images 4820 to 4840 included in the bookmarking information related to the recorded content in a second area through the image outputter 151.

In response to the first representative thumbnail image 4820 being selected when the first to third representative thumbnail images 4820 to 4840 are output in the second area, the controller 130 acquires time information of a summary content section related to the first representative thumbnail image 4820 and controls the outputter 120 to sequentially output the recorded content starting from a summary content section related to the selected representative thumbnail image based on the acquired time information. Here, the sequentially outputting of the recorded content starting from the summary content section related to the selected first representative thumbnail image 4820 may include playing back of the recorded content starting from the summary content section related to the first representative thumbnail image 4820 and selectively outputting of only summary content sections related to the first to third representative thumbnail images 4820 to 4840 of the recorded content.

According to the above-described various exemplary embodiments, the controller 130 that detects an event section of a content may apply different algorithms according to a signal-processing status of video data to detect an event section from the video data of the video data and audio data that are signal-processed. In other words, video data that is signal-processed through the data processor 150 may be decoded video data, deinterlaced video data, or scaled video data. Also, the video data may be data that is output according to a driving control signal of a timing driver 180 that generates the driving control signal corresponding to signal-processed video data.

Therefore, the controller 130 may apply different algorithms according to the video data decoded through the decoder 151 of the data processor 150, the video data deinterlaced through the deinterlacing unit 155, the video data scaled through the scaler 153, and the video data output according to the driving control signal of the timing driver 180 to analyze the respective video data in order to detect an event section.

In detail, in response to an event section being detected from a content which is demultiplexed through the demux 111, the controller 130 may decode video data included in the corresponding content and analyze the decoded video data to detect an event section corresponding to a preset condition. In response to video data of a content that is decoded through the decoder 151 being input, the controller 130 may analyze an interlaced video image to detect an event section corresponding to a preset condition. In response to video data that is scaled through the scaler 153 being input, the controller 130 may detect an event section corresponding to a preset condition in consideration of a resolution of a video image of the scaled video data. Also, in response to video data of a content that is deinterlaced through the deinterlacing unit 155 being input, the controller 130 may detect an event section corresponding to a preset condition in consideration of an input resolution of a video image of the video data. IN response to video data that is output according to the driving control signal of the timing driver 180 being input, the controller 130 may analyze a low voltage differential signal (LVDS) or a differential signal of a video image of the corresponding video data to detect an event section corresponding to a preset condition.

As described above, the controller 130 may record a content and detect an event section through the event detector 131 and the recorder 133 according to a summary content service command of the user. The event detector 131 detects an event section corresponding to a preset condition by analyzing at least one of video and audio data of a content received through the receiver 110. The recorder 153 records a content received through the receiver 110 to generate a recorded content of the corresponding content.

Therefore, in response to a summary content service command for a content that is being viewed being input, the controller 130 controls the data processor 150 and the outputter 120 to output the content received through the receiver 110. The controller 130 also controls the recorder 133 and the event detector 131 to record the corresponding content and detect an event section. Therefore, the recorder 133 may record the content received through the receiver 110 to generate the recorded content, and simultaneously, the event detector 131 may analyze at least one of video and audio data of the content received through the receiver 110 to detect an event section corresponding to a preset condition. As a result, the controller 130 may determine a summary content section based on the event section detected through the event detector 131, generate bookmarking information of the determined summary content section, match the bookmarking information with the recorded content generated through the recorder 133, and store the matched bookmarking information and recorded content in the storage 160.

In response to a summary content service command for a content different from the content that is being viewed being input, the controller 130 controls the outputter 120 to output a content of a channel selected through a first tuner 113-1. The controller 130 also controls the recorder 133 and the event detector 131 to record the content of the channel selected through the second tuner 113-3 and detect an event section. Therefore, the recorder 133 may record the content selected and received through the second tuner 113-3 to generate a recorded content. Also, the event detector 131 may analyze at least one of video and audio data of the content selected and received through the second tuner 113-3 to detect an event section corresponding to a preset condition. Therefore, the controller 130 may determine a summary content section of the corresponding content based on the event section detected through the event detector 131, generate bookmarking information of the determined summary content section, match the bookmarking information with the recorded content generated through the recorder 133, and store the matched bookmarking information and recorded content in the storage 160.

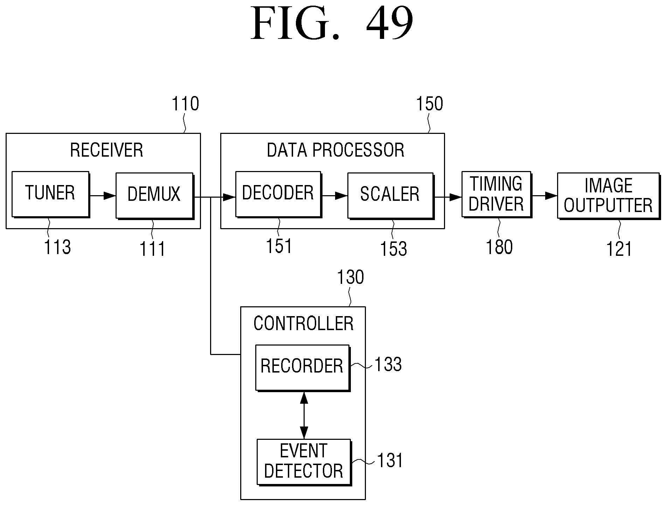

Elements of the broadcast receiving apparatus 100 according to the present general inventive concept have been described in detail. The elements of the broadcast receiving apparatus 100 that provides a summary content service according to various exemplary embodiments of the present general inventive concept will now be described in more detail. However, operations of the elements of the broadcast receiving apparatus 100 have been described above in relation to a summary content service. Therefore, a configuration method of the broadcast receiving apparatus 100 that provides the summary content service will now be described in detail with reference to FIGS. 49 through 58.

FIG. 49 is a first block diagram of a broadcast receiving apparatus that provides a summary content service, according to an exemplary embodiment.

As shown in FIG. 49, the demux 111 extracts a content of a channel requested by a user from a plurality of channels selected through the tuner 113 and outputs the extracted content to the data processor 150 and the controller 130. The data processor 150 that receives the content through the demux 111 decodes video and audio data of the content through the decoder 151 and outputs the decoded video and audio data to the scaler 153. The scaler 153 scales the decoded video data and outputs the scaled video data to the timing driver 180. The timing driver 180 generates a driving control signal corresponding to the video data scaled through the scaler 153, and the image outputter 121 outputs the video data based on the driving control signal generated by the timing driver 180.

In response to the content output through the demux 111 being input, the controller 130 records the content and detects an event section through the recorder 133 and the event detector 131. In detail, the recorder 133 records the content output from the demux 111 to generate the recorded content of the corresponding content. The event detector 131 decodes video and audio data of the content output from the demux 111 and analyzes the decoded video data to detect an event section corresponding to a preset condition. Here, the event detector 131 may also analyze the decoded audio data together to detect the event section corresponding to the preset condition. A method of analyzing video data of a content to detect an event section corresponding to a preset condition in the event detector 131 will now be described.

In response to an event section being detected through the event detector 131, the controller 130 determines a summary content section including the event section and generates bookmarking information including playback-related time information of the determined summary content section and a representative thumbnail image as described above. The controller 130 may match the recorded content generated by the recorder 133 with the bookmarking information and store the matched recorded content and bookmarking information in the storage 160.

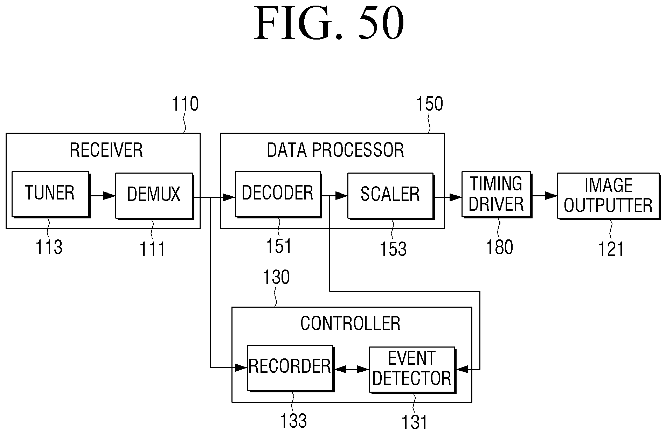

FIG. 50 is a second block diagram of the broadcast receiving apparatus that provides a summary content service, according to another exemplary embodiment.

As described above with reference to FIG. 49, in response to a content of a channel requested by a user being extracted, the demux 111 outputs the corresponding content to the data processor 150 and the controller 130. Therefore, the data processor 150 signal-processes video data, and the image outputter 121 outputs the corresponding video data based on a driving control signal of the timing driver 180.

As shown in FIG. 50, the decoder 151 of the data processor 150 decodes the video data of the content output from the demux 111 and outputs the decoded video data to the controller 130. Therefore, the recorder 133 records the content output from the demux 111 to generate a recorded content of the corresponding content. The event detector 131 analyzes the video data output from the decoder 151 to detect an event section corresponding to a preset condition. In response to the recorded content being generated through the recorder 133, and the event section being detected through the event detector 131, the controller 130 may generate bookmarking information of the recorded content, match the generated bookmarking information with the recorded content, and store the matched bookmarking information and recorded content in the storage 160 as described above.

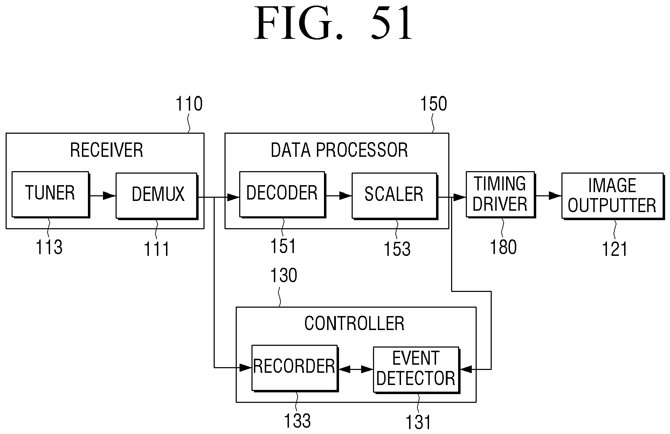

FIG. 51 is a third block diagram of the broadcast receiving apparatus that provides a summary content service, according to another exemplary embodiment.

As described above with reference to FIG. 49, in response to a content of a channel requested by a user being extracted, the demux 111 outputs the corresponding content to the data processor 150 and the controller 130. In response to the content of the channel requested by the user being extracted through the demux 111, the data processor 150 signal-processes video data, and the image outputter 121 outputs the corresponding video data based on a driving control signal of the timing driver 180.

In response to the scaler 153 of the data processor 150 scaling the video data decoded through the decoder 151, the scaler 153 outputs the scaled video data to the controller 130 as shown in FIG. 51. Therefore, the recorder 131 records the content output from the demux 111 to generate a recorded content of the corresponding content. The event detector 131 also analyses the video data scaled by the scaler 143 to detect an event section corresponding to a preset condition. Here, the event detector 131 may detect the event section in consideration of a resolution of the scaled video data.

In response to the recorded content of the content being generated through the recorder 133, and the event section being detected through the event detector 131, the controller 130 may generate bookmarking information of the recorded content, match the generated bookmarking information with the recorded content, and store the matched bookmarking information and recorded content in the storage 160 as described above.

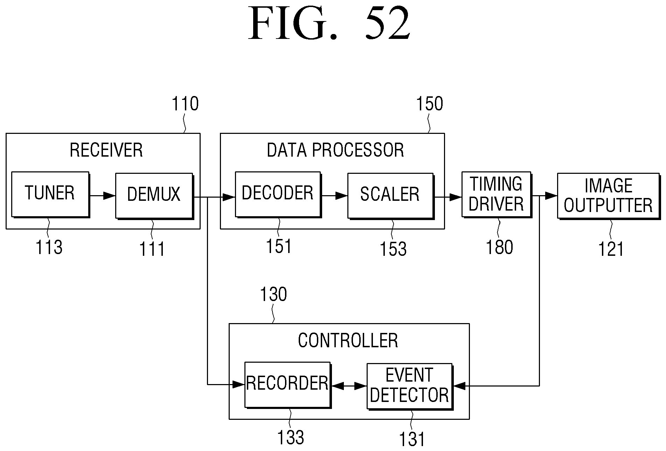

FIG. 52 is a fourth block diagram of the broadcast receiving apparatus that provides a summary content service, according to another exemplary embodiment.

As described above with reference to FIG. 49, in response to a content of a channel requested by a user being extracted, the demux 111 outputs the corresponding content to the data processor 150 and the controller 130. Therefore, the data processor 150 signal-processes video data, and the image outputter 121 outputs the corresponding video data based on a driving control signal of the timing driver 180.

As shown in FIG. 52, the timing driver 180 generates the driving control signal related to outputting of the video data scaled through the scaler 153 and outputs the corresponding video data to the controller 130 at a timing when the video data is output to the image outputter 121, based on the generated driving control signal. Therefore, the recorder 133 records the content output from the demux 111 to generate a recorded content of the corresponding content. The event detector 131 analyzes the video data output from the timing driver 180 to detect an event section corresponding to a preset condition. Here, the event detector 131 may analyze an LVDS or a differential signal of the video data output based on the driving control signal of the timing driver 180 to detect the event section corresponding to the preset condition.

In response to the recorded content of the content being generated through the recorder 133, and the event section being detected through the event detector 131, the controller 130 may generate bookmarking information of the recorded content, match the generated bookmarking information with the recorded content, and store the matched bookmarking information and recorded content in the storage 160 as described above.

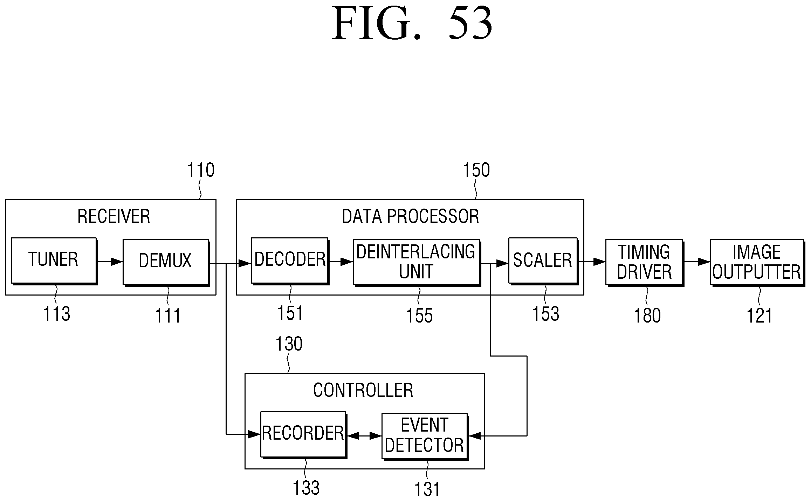

FIG. 53 is a fifth block diagram of the broadcast receiving apparatus that provides a summary content service, according to another exemplary embodiment.

As described above with reference to FIG. 49, in response to a content of a channel requested by a user being extracted, the demux 111 outputs the corresponding content to the data processor 150 and the controller 130. Therefore, the data processor 150 signal-processes video data of the corresponding content. Here, before the scaler 153 scales the video data decoded through the decoder 151, the data processor 150 may convert the decoded video data into a sequential scanning image through the deinterlacing unit 155 and scale the video data converted into the sequential scanning image through the scaler 153.

As shown in FIG. 53, the deinterlacing unit 155 outputs the video data converted into the sequential scanning image to the scaler 153 and simultaneously outputs the corresponding video data to the controller 130. Therefore, the recorder 133 records the content output from the demux 111 to generate a recorded content of the corresponding content. The event detector 131 may detect an event section corresponding to a preset condition in consideration of an input resolution of the video data converted into the sequential scanning image through the deinterlacing unit 155.

In response to the recorded content of the content being generated through the recorder 133, and the event section being detected through the event detector 131, the controller 130 may generate bookmarking information of the recorded content, match the generated bookmarking information with the recorded content, and store the matched bookmarking information and recorded content in the storage 160 as described above.

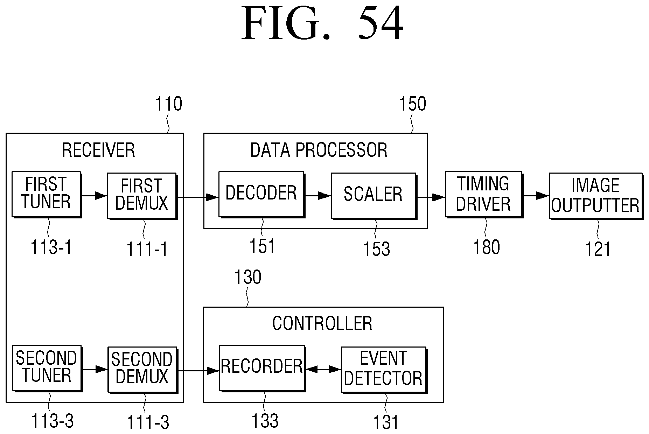

FIG. 54 is a first block diagram of the broadcast receiving apparatus that provides a summary content service for a content different from a content that is being viewed, according to an exemplary embodiment.

As shown in FIG. 54, a first demux 111-1 extracts a first content of a channel requested by a user from a plurality of channels selected through the first tuner 113-1 and outputs the extracted first content to the data processor 150. The data processor 150 that receives the content through the first demux 111-1 decodes video and audio data of the content through the decoder 151 and outputs the decoded video and audio data to the scaler 153, and the scaler 153 scales the decoded video data and outputs the scale video data to the timing driver 180. The timing driver 180 generates a driving control signal corresponding to the video data scaled through the scaler 153, and the image outputter 121 outputs the video data based on the driving control signal generated by the timing driver 180.

A second demux 111-3 extracts a second content of a channel for which the user requests a summary content service, among a plurality of channels selected through the second tuner 113-3 and outputs the extracted second content to the controller 130. In response to the second content output through the second demux 111-3 being input, the controller 130 records the second content and detects an event section through the recorder 133 and the event detector 131. As described above, the recorder 133 records the second content output from the second demux 111-3 to generate the recorded content of the second content. The event detector 131 decodes video data of the second content output from the second demux 111-3 and analyzes the decoded video data to detect the event section corresponding to a preset condition.

In response to the content being generated and the event section being detected through the recorder 133 and the event detector 131, the controller 130 may generate bookmarking information of the recorded content, match the generated bookmarking information with the recorded content, and store the matched bookmarking information and recorded content in the storage 160.

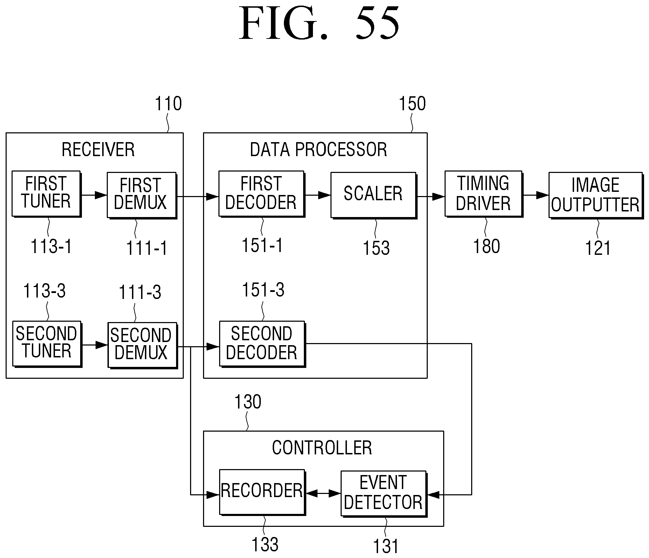

FIG. 55 is a second block diagram of the broadcast receiving apparatus that provides a summary content service for a content different from a content that is being viewed, according to another exemplary embodiment.

As shown in FIG. 55, in response to a first content of a channel of which a user requests viewing being extracted, the first demux 111-1 outputs the first content to the data processor 150. Therefore, a first decoder 151-1 of the data processor 150 decodes video and audio data of the first content, and a first scaler 143-1 scales the video data decoded through the first decoder 141-1 and transmits the scaled image data to the timing driver 180. Therefore, the image outputter 151 outputs the image data of the first content based on a driving control signal of the timing driver 180.

The second demux 111-3 extracts a second content of a channel for which the user requests a summary content service, from a plurality of channels selected through the second tuner 113-3 and outputs the extracted second content to the data processor 150 and the controller 130.

Therefore, the second decoder 151-3 of the data processor 150 decodes video and audio data of the second content and outputs the decoded video data to the controller 130. In response to the second content output through the second demux 111-3 and the video data decoded through the second decoder 151-3 being input, the controller 130 records the second content and detects an event section through the recorder 133 and the event detector 131. In detail, the recorder 133 records the second content output from the second demux 111-3 to generate the recorded content of the second content. The event detector 131 analyzes the video data decoded through the second decoder 151-3 to detect the event section corresponding to a preset condition.

In response to the content being recorded and the event section being detected through the recorder 133 and the event detector 131, the controller 130 may generate bookmarking information of the recorded content, match the generated bookmarking information with the recorded content, and store the matched bookmarking information and recorded content in the storage 160.

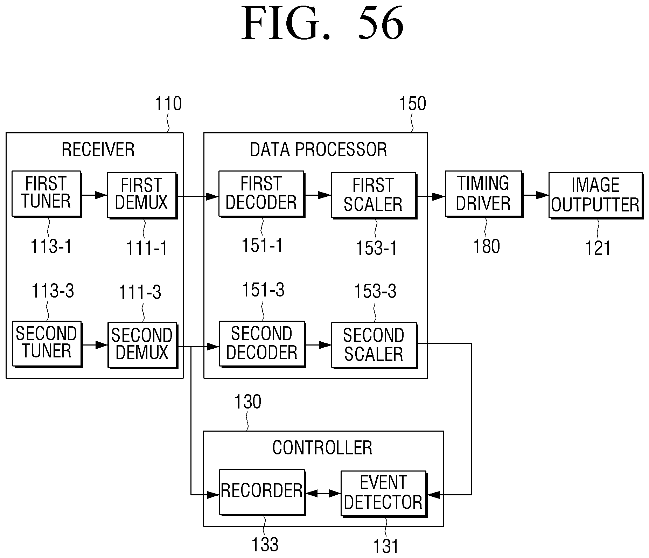

FIG. 56 is a third block diagram of the broadcast receiving apparatus that provides a summary content service for a content different from a content that is being viewed, according to another exemplary embodiment.

As shown in FIG. 56, in response to a first content of a channel of which a user requests viewing being extracted, the first demux 111-1 outputs the first content to the data processor 150. Therefore, the first decoder 151-1 of the data processor 150 decodes video and audio data of the first content, and the first scaler 153-1 scales the video data decoded through the first decoder 151-1 and outputs the scaled video data to the timing driver 180. Therefore, the image outputter 121 outputs the video data of the first content based on a driving control signal of the timing driver 180.

The second demux 111-3 extracts a second content of a channel for which the user requests a summary content service, from a plurality of channels selected through the second tuner 113-3 and outputs the extracted second content to the data processor 150 and the controller 130.Therefore, the second decoder 151-3 of the data processor 150 decodes video and audio data of the second content, and the second scaler 153-3 scales the video data decoded through the second decoder 151-3 and outputs the scaled video data to the controller 130. In response to the second content output through the second demux 111-3 and the video data scaled through the second scaler 153-3 being input, the controller 130 records the second content and detects an event section through the recorder 133 and the event detector 131. In detail, the recorder 133 records the second content output from the second demux 111-3 to generate the recorded content of the second content. Also, the event detector 131 analyzes the video data scaled through the second scaler 153-3 to detect the event section corresponding to a preset condition. Here, the event detector 131 may detect the event section in consideration of a resolution of the scaled video data.

In response to a recorded content being generated from the recording unit 133 and the event section being detected through the event detector 131, the controller 130 may generate bookmarking information of the recorded content, matching the generated bookmarking information with the recorded content, and store the matched bookmarking information and recorded content in the storage 160.

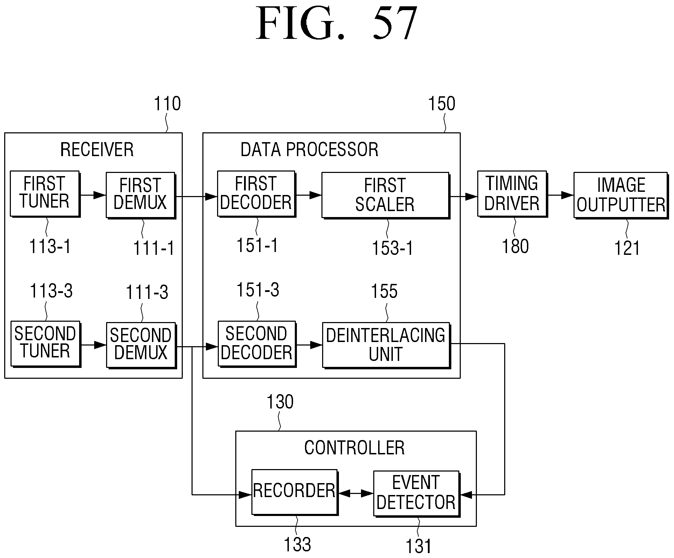

FIG. 57 is a fourth block diagram of the broadcastreceiving apparatus that provides a summary content service for a content different from a content that is being viewed, according to another exemplary embodiment.

As shown in FIG. 57, in response to a first content of a channel of which a user requests viewing being extracted, the first demux 111-1 outputs the first content to the data processor 150. Therefore, the first decoder 151-1 of the data processor 150 decodes video and audio data of the first content, and the first scaler 153-1 scales the video data decoded through the first decoder 151-1 and outputs the scaled video data to the timing driver 180. As a result, the image outputter 121 outputs the video data of the first content based on a driving control signal of the timing driver 180.

The second demux 111-3 extracts a second content of a channel for which the user requests a summary content service, from a plurality of channels selected through the second tuner 113-3 and outputs the extracted second content to the data processor 150 and the controller 130.

Therefore, the second decoder 151-3 of the data processor 150 decodes video and audio data of the second content, and the deinterlacing unit 155 converts the video data decoded through the second decoder 151-3 into a sequential scanning image and outputs the video data converted into the sequential scanning image to the controller 130. In response to the second content output through the second demux 111-3 and the video data converted into the sequential scanning image through the deinterlacing unit 155 being input, the controller 130 records the second content and detects an event section through the recorder 133 and the event detector 131. In detail, the recorder 133 records the second content output from the second demux 111-3 to generate the recorded content of the second content. Also, the event detector 131 may detect the event section corresponding to a preset condition in consideration of an input resolution of the video data converted into the sequential scanning image through the deinterlacing unit 155.

In response to a recorded content being generated from the recording unit 133 and the event section being detected through the event detector 131, the controller 130 may generate bookmarking information of the recorded content, match the generated bookmarking information with the recorded content, and store the matched bookmarking information and recorded content in the storage 160.

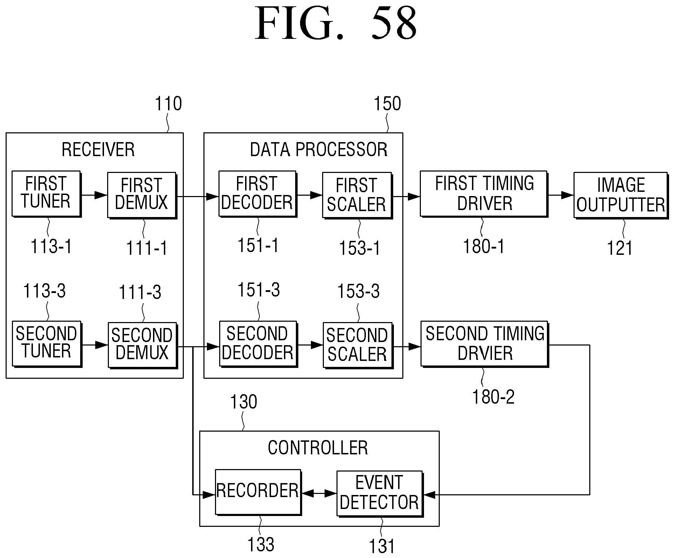

FIG. 58 is a fifth block diagram of the broadcast receiving apparatus that provides a summary content service for a content different from a content that is being viewed, according to another exemplary embodiment.

As shown in FIG. 58, in response to a first content of a channel of which a user requests viewing being extracted, the first demux 111-1 transmits the first content to the data processor 150. Therefore, the first decoder 151-1 of the data processor 150 decodes video and audio data of the first content, and the first scaler 153-1 scales the video data decoded through the first decoder 151-1 and outputs the scaled video data to a first timing driver 180-1. Therefore, the image outputter 121 outputs the video data of the first content based on a driving control signal of the first timing driver 180-1.

The second demux 111-3 extracts a second content of a channel for which the user requests a summary content service, from a plurality of channels selected through the second tuner 113-3 and transmits the extracted second content to the data processor 150 and the controller 130. Therefore, the second decoder 151-3 of the data processor 150 decodes video and audio data of the second content, and the second scaler 153-3 scales the decoded video data and transmits the scaled video data to a second timing driver 180-2. In response to the scaled video data being input, the second timing driver 180-2 that generates a driving control signal for outputting the video data outputs the corresponding video data to the controller 130.

In response to the second content output through the second demux 111-3 and the video data transmitted through the second timing driver 180-2 being input, the controller 130 records the second content and detects an event section through the recorder 133 and the event detector 131. In detail, the recorder 133 records the second content transmitted from the second demux 111-3 to generate the recorded content of the second content. Also, the event detector 131 may analyze an LVDS or a differential signal of a video image of the video data output through the second timing driver 180-2 to detect the event section corresponding to a preset condition.

In response to a recorded content being generated from the recording unit 133 and the event section being detected through the event detector 131, the controller 130 may generate bookmarking information of the recorded content, match the generated bookmarking information with the recorded content, and store the matched bookmarking information and recorded content in the storage 160.

Elements of the broadcast receiving apparatus 100 that provides a summary content service according to various exemplary embodiments have been described in detail. A method of providing a summary content service in the broadcast receiving apparatus 100 according to the present general inventive concept will now be described in detail.

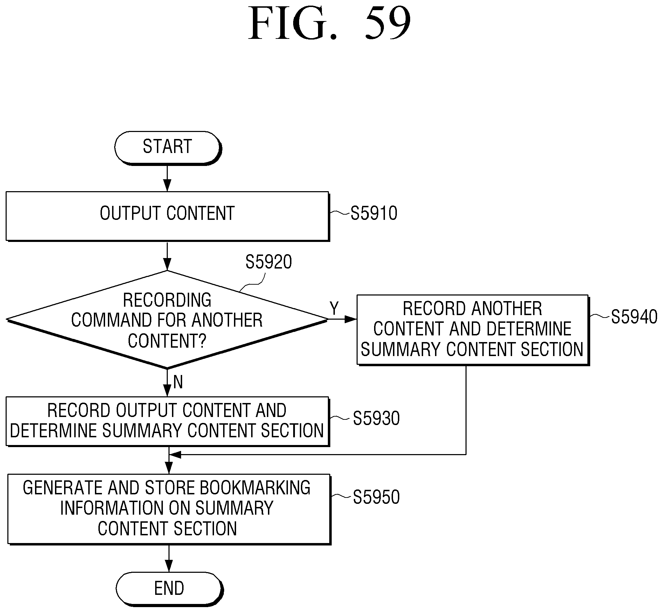

FIG. 59 is a flowchart of a method of generating bookmarking information related to a summary content service in the broadcast receiving apparatus, according to an exemplary embodiment.

Referring to FIG. 59, the broadcast receiving apparatus 100 receives a content from a channel corresponding to a user command for a summary content service, processes video and audio data of the received content as formats that may be output, and outputs the processed video and audio data (S5910). In response to the content being output, the broadcast receiving apparatus 100 determines whether a recording command for another content is input (S5920).

In response to determining that the recording command for the another content is not input, the broadcast receiving apparatus 100 generates a recorded content of the output content and determines a summary content section of the corresponding content (S5930). In detail, in response to the recording command for the another content being not input, the broadcast receiving apparatus 100 analyzes at least one of video and audio data of the output content to detect an event section corresponding to a preset condition. In response to the recording command for the another content being input, the broadcast receiving apparatus 100 receives another content (hereinafter referred to as a second content) different from a content (hereinafter referred to as a first content) output from a channel corresponding to the input recording command. The broadcast receiving apparatus 100 generates a recorded content of the second content and determines a summary content section of the second content (S5940). In response to the summary content section of the first or second content being determined, the broadcast receiving apparatus 100 generates bookmarking information of the corresponding summary content section, matches the generated bookmarking information with the recorded content, and stores the matched bookmarking information and recorded content (S5950).

In detail, the broadcast receiving apparatus 100 analyzes at least one of video and audio data of the first content that is being viewed or the second content different from the first content to detect an event section corresponding to a preset condition.

According to an exemplary embodiment, the broadcast receiving apparatus 100 may analyze the video data of the first or second content to detect a video section corresponding to a preset game condition as an event section. According to another exemplary embodiment, the broadcast receiving apparatus 100 may analyze the audio data of the first or second content to detect a video section having an audio signal level higher than or equal to a preset threshold level as an event section. In response to the event section being detected, the broadcast receiving apparatus 100 determines a summary content section including the detected event section and generates bookmarking information for selectively outputting only the corresponding summary content section. Here, the bookmarking information may include time information about a playback start time and a playback end time of the summary content section including the event section.

Here, in response to the summary content section including the detected event section being determined, the broadcast receiving apparatus 100 determines one of video images included in the determined summary content section as a representative thumbnail image. According to exemplary embodiments, the broadcast receiving apparatus 100 may determine a zoom-in video image of video images included in the summary content section including the event section as a representative thumbnail image. In response to the representative thumbnail image of the summary content section being determined as described above, the broadcast receiving apparatus 100 generates bookmarking information including the determined representative thumbnail image and time information about a playback start time and a playback end time of a summary content section related to the corresponding representative thumbnail image. The broadcast receiving apparatus 100 matches the recorded content of the first or second content with the bookmarking information of the recorded content and stores the matched bookmarking information and recorded content.

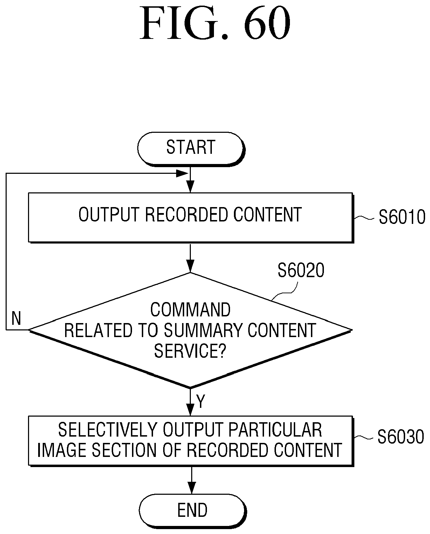

FIG. 60 is a flowchart of a method of outputting a recorded content related to a summary content service in the broadcast receiving apparatus, according to an exemplary embodiment.

Referring to FIG. 60, in response to a user command related to playback of a content being input, the broadcast receiving apparatus 100 outputs video and audio data of a recorded content corresponding to the input user command among a plurality of recorded contents that are pre-stored (6010). In response to the recorded content being output, the broadcast receiving apparatus 100 determines whether a user command related to a summary content service is input (6020). In response to determining that the user command related to the summary content service is input, the broadcast receiving apparatus 100 selectively outputs only a particular video section of the recorded content (6030). Here, the particular video section may be a summary content section including a detected event section.

In detail, in response to the user command related to the summary content service being input, the broadcast receiving apparatus 100 selectively outputs only a summary content section that is a video section corresponding to time information included in bookmarking information of the corresponding recorded content based on playback time information of the recorded content. In operation S6010, the broadcast receiving apparatus 100 acquires a recorded content corresponding to a content playback command among a plurality of recorded contents that are pre-stored and determines whether bookmarking information related to the acquired recorded content is stored, according to the content playing command. In response to determining that the bookmarking information related to the recorded content is stored, the broadcast receiving apparatus 100 outputs the recorded content corresponding to the content playback command and a representative thumbnail image included in the bookmarking information. In other words, the broadcast receiving apparatus 100 outputs video data of the recorded content in a first area and outputs a plurality of thumbnail images in a second area.

Therefore, in response to one of a plurality of representative thumbnail images being selected, the broadcast receiving apparatus 100 may output a recorded content from a time when a summary content section related to the selected representative thumbnail image is played back.

A method of providing a summary content service in the broadcast receiving apparatus 100 as described above may be implemented by a program including an executable algorithm that may be executed in a computer. The program may be stored and provided on a non-transitory computer-readable medium.

The non-transitory computer-readable medium refers to a medium which does not store data for a short time such as a register, a cache memory, a memory, or the like but semi-permanently stores data and is readable by a device. In detail, the above-described various applications or programs may be stored and provided on a non-transitory computer readable medium such as a CD, a DVD, a hard disk, a blu-ray disk, a universal serial bus (USB), a memory card, a ROM, or the like.

The foregoing exemplary embodiments and advantages are merely exemplary and are not to be construed as limiting the present inventive concept. The exemplary embodiments can be readily applied to other types of apparatuses. Also, the description of the exemplary embodiments is intended to be illustrative, and not to limit the scope of the claims, and many alternatives, modifications, and variations will be apparent to those skilled in the art.

## Claims

1. A method for providing a summary content (2110, 2210) service of a broadcast receiving apparatus (100), the method comprising:
receiving a content comprising a plurality of image frames;
identifying a guide area (320, 910, 1110, 3030) of the content by comparing pixel values between corresponding pixel regions of the plurality of image frames and identifying at least one image section as an event section (3110) by detecting a change of character included in the guide area (320, 910, 1110, 3030)
obtaining a video section (3110-1) corresponding to the at least one event section (3110) using time information of the identified event section (3110);
determining whether the video section (3110-1) is a sport-related content, by analyzing whether a proportion value of a predetermined color included in the video section (3110-1) is equal to or higher than a predetermined first threshold value,
in response to determining that the video section (3110-1) is the sport-related content,
identifying a content summary section including the obtained video section (3110-1); and
providing a summary content (2110, 2210) corresponding to the identified content summary section.

2. The method of claim 1, wherein the broadcast receiving apparatus (100) stores a play situation condition related to the summary content (2110, 2210) of the sport-related content, wherein the play situation condition relates to an important situation in the sport-related content indicated by the change of character included in the guide area (320, 910, 1110, 3030), and
wherein the identifying the at least one event section (3110) comprises analyzing video data comprised in the content and identifying the video section (3110-1) corresponding to the stored play situation condition.

3. The method of claim 1, wherein the analyzing comprises analyzing whether a proportion of a color among the colors included in the video section of the at least one detected event section (3110) corresponds to a predetermined color of a field of play of a genre of the sport-related content which is pre-stored in the broadcast receiving apparatus.

4. The method of claim 3, wherein the analyzing comprises analyzing whether the proportion value of the color corresponding to the predetermined color of the field among the colors included in image frames of video sections which are previous or subsequent to the video section of the at least one detected event section (3110) is equal to or higher than a predetermined second threshold value.

5. The method of claim 3, wherein the guide area (320, 910, 1110, 3030) indicates a play situation condition from an image of the image section of the at least one detected event section (3110), and determining whether the sport is being played is done on the basis of the guide area (320, 910, 1110, 3030) and
wherein the guide area (320, 910, 1110, 3030) is an area indicating at least one of a score of the sport and a duration of the sport.

6. The method of claim 1, wherein the identifying the content summary section comprises acquiring previous and subsequent video sections (3120-1, 3130-1) which exist within a predetermined fixed time (3120, 3130) of the at least one detected event section (3110), and determining the acquired previous and subsequent video sections (3120-1, 3130-1) and the video section of the at least one event section as the content summary section.

7. The method of claim 6, wherein the identifying the content summary section comprises changing the fixed time (3120, 3130) according to whether a scene changes in at least one of the acquired previous and subsequent video sections (3120-1, 3130-1) compared to the video section (3110-1) of the at least one detected event section.

8. The method of claim 1, further comprising:
in response to the at least one event section (3110) being detected, acquiring a thumbnail image (3331) from an image frame of the at least one detected event section (3110);
matching and storing the summary content (2110, 2210) and the thumbnail image (3331) acquired with respect to the summary content (2110, 2210); and
outputting the summary content (2110, 2210) of the content and the thumbnail image (3331) matched with the summary content (2110, 2210) in accordance with a user command.

9. The method of claim 8, wherein acquiring the thumbnail image (3331) comprises, in response to there being a plurality of thumbnail images, acquiring the thumbnail image having least color corresponding to a predetermined valid field color or a thumbnail image comprising a largest object with respect to a same object comprised in each of the thumbnail images from among the plurality of thumbnail images.

10. The method of claim 1, wherein the identifying the guide area comprises:
comparing pixel differences of corresponding pixel regions of a first image frame and a second image frame among the plurality of image frames with a preset threshold value and calculating a number of pixel regions having a pixel difference of lower than the threshold value,
in response to the number of pixel regions having the pixel difference of lower than the threshold value being less than a preset threshold number of pixels, identifying whether or not the pixel region having the pixel difference of lower than the threshold value is continuously detected a preset threshold number of times or more; and
in response to the pixel region having the pixel difference of lower than the threshold value being continuously detected the preset threshold number of times or more, identifying the guide area on the basis of the pixel region having the pixel difference of lower than the threshold value, and storing the detected guide area.

11. A broadcast receiving apparatus (100) comprising:
a receiver (110) configured to receive a content comprising a plurality of image frames;
an outputter (120) configured to output the content; and
a controller (130) configured to:
identify an guide area (320, 910, 1110, 3030) of the content by comparing pixel values between corresponding pixel regions of the plurality of image frames and identify at least one image section as an event section (3110) by detecting a change of character included in the guide area (320, 910, 1110, 3030)
obtain a video section (3110-1) corresponding to the at least one event section (3110) using time information of the identified event section (3110),
determine whether the video section (3110-1) is a sport-related content, by analyzing whether a proportion value of a predetermined color included in the video section (3110-1) is higher than or equal to a predetermined first threshold value,
in response to determining that the video section (3110-1) is the sport-related content,
identify a content summary section including the obtained video section (3110-1), and
control the outputter (120) to output a summary content (2110, 2210) corresponding to the identified content summary section.

## Patentansprüche

1. Verfahren zum Bereitstellen eines Inhaltszusammenfassungsdienstes (2110, 2210) einer Rundfunkempfangsvorrichtung (100), wobei das Verfahren umfasst:
Empfangen eines Inhalts, der eine Vielzahl von Bildfeldern umfasst;
Identifizieren eines Führungsbereichs (320, 910, 1110, 3030) des Inhalts durch Vergleichen von Pixelwerten zwischen entsprechenden Pixelbereichen der Vielzahl von Bildfeldern und Identifizieren mindestens eines Bildabschnitts als einen Ereignisabschnitt (3110) durch Erfassen einer in dem Führungsbereich (320, 910, 1110, 3030) enthaltenen Zeichenänderung;
Erhalten eines Videoabschnitts (3110-1), der dem mindestens einen Ereignisabschnitt (3110) entspricht, unter Verwendung von Zeitinformationen des identifizierten Ereignisabschnitts (3110);
Bestimmen, ob der Videoabschnitt (3110-1) ein sportbezogener Inhalt ist, durch Analysieren, ob ein Anteilswert einer vorbestimmten Farbe, die in dem Videoabschnitt (3110-1) enthalten ist, gleich oder höher als ein vorbestimmter erster Schwellenwert ist,
als Reaktion auf das Bestimmen, dass der Videoabschnitt (3110-1) der sportbezogene Inhalt ist,
Identifizieren eines Inhaltszusammenfassungsabschnitts, der den erhaltenen Videoabschnitt (3110-1) umfasst; und
Bereitstellen eines Zusammenfassungsinhalts (2110, 2210), der dem identifizierten Inhaltszusammenfassungsabschnitt entspricht.

2. Verfahren nach Anspruch 1, wobei die Rundfunkempfangsvorrichtung (100) eine Spielsituationsbedingung in Bezug auf den Zusammenfassungsinhalt (2110, 2210) des sportbezogenen Inhalts speichert, wobei sich die Spielsituationsbedingung auf eine wichtige Situation in dem sportbezogenen Inhalt bezieht, die durch die im Führungsbereich (320, 910, 1110, 3030) enthaltene Zeichenänderung angezeigt wird, und
wobei das Identifizieren des mindestens einen Ereignisabschnitts (3110) das Analysieren von im Inhalt enthaltenen Videodaten und das Identifizieren des der gespeicherten Spielsituation entsprechenden Videoabschnitts (3110-1) umfasst.

3. Verfahren nach Anspruch 1, wobei das Analysieren das Analysieren umfasst, ob ein Anteil einer Farbe unter den Farben, die in dem Videoabschnitt des mindestens einen erfassten Ereignisabschnitts (3110) enthalten sind, einer vorbestimmten Farbe eines Spielfeldes eines Genres des sportbezogenen Inhalts entspricht, die in der Rundfunkempfangsvorrichtung vorab gespeichert ist.

4. Verfahren nach Anspruch 3, wobei das Analysieren das Analysieren umfasst, ob der Anteilswert der Farbe entsprechend der vorbestimmten Farbe des Feldes unter den Farben, die in Bildfeldern von Videoabschnitten enthalten sind, die vor oder nach dem Videoabschnitt des mindestens einen erfassten Ereignisabschnitts (3110) liegen, gleich oder höher als ein vorbestimmter zweiter Schwellenwert ist.

5. Verfahren nach Anspruch 3, wobei der Führungsbereich (320, 910, 1110, 3030) eine Spielsituationsbedingung aus einem Bild des Bildabschnitts des mindestens einen erfassten Ereignisabschnitts (3110) anzeigt, und
Bestimmen, ob die Sportart stattfindet, auf Grundlage des Führungsbereichs (320, 910, 1110, 3030), und
wobei der Führungsbereich (320, 910, 1110, 3030) ein Bereich ist, der mindestens eines aus einem Spielstand des Sports und einer Dauer des Sports anzeigt.

6. Verfahren nach Anspruch 1, wobei das Identifizieren des Inhaltszusammenfassungsabschnitts das Erfassen von vorherigen und nachfolgenden Videoabschnitten (3120-1, 3130-1), die innerhalb einer vorbestimmten festen Zeit (3120, 3130) des mindestens einen erfassten Ereignisabschnitts (3110) vorhanden sind, und das Bestimmen der erfassten vorherigen und nachfolgenden Videoabschnitte (3120-1, 3130-1) und des Videoabschnitts des mindestens einen Ereignisabschnitts als Inhaltszusammenfassungsabschnitt umfasst.

7. Verfahren nach Anspruch 6, wobei das Identifizieren des Inhaltszusammenfassungsabschnitts das Ändern der festen Zeit (3120, 3130) abhängig davon umfasst, ob sich eine Szene in mindestens einem der erfassten vorherigen und nachfolgenden Videoabschnitte (3120-1, 3130-1) im Vergleich zu dem Videoabschnitt (3110-1) des mindestens einen erfassten Ereignisabschnitts ändert.

8. Verfahren nach Anspruch 1, ferner umfassend:
als Reaktion auf den mindestens einen erfassten Ereignisabschnitt (3110) Erfassen eines Miniaturansichtsbildes (3331) aus einem Bildfeld des mindestens einen erfassten Ereignisabschnitts (3110);
Zuordnen und Speichern des Zusammenfassungsinhalts (2110, 2210) und des Miniaturansichtsbildes (3331), das in Bezug zum Zusammenfassungsinhalt (2110, 2210) erfasst wurde; und
Ausgeben des Zusammenfassungsinhalts (2110, 2210) des Inhalts und des dem Zusammenfassungsinhalt (2110, 2210) zugeordneten Miniaturansichtsbildes (3331), gemäß einem Benutzerbefehl.

9. Verfahren nach Anspruch 8, wobei das Erfassen des Miniaturansichtsbildes (3331) als Reaktion auf eine Vielzahl von Miniaturansichtsbildern das Erfassen des Miniaturansichtsbildes mit der geringsten Farbe entsprechend einer vorbestimmten gültigen Feldfarbe oder eines Miniaturansichtsbildes, das ein größtes Objekt bezüglich eines gleichen Objekts enthält, das in jedem der Miniaturansichtsbilder aus der Vielzahl von Miniaturansichtsbildern enthalten ist, umfasst.

10. Verfahren nach Anspruch 1, wobei das Identifizieren des Führungsbereichs umfasst:
Vergleichen von Pixeldifferenzen entsprechender Pixelbereiche eines ersten Bildfelds und eines zweiten Bildfelds aus der Vielzahl von Bildfeldern mit einem voreingestellten Schwellenwert und Berechnen einer Anzahl von Pixelbereichen mit einer Pixeldifferenz, die niedriger als der Schwellenwert ist,
als Reaktion auf die Anzahl der Pixelbereiche, die eine Pixeldifferenz von weniger als dem Schwellenwert aufweisen, wobei diese weniger als eine voreingestellte Schwellenanzahl von Pixeln beträgt, Identifizieren, ob der Pixelbereich, der eine Pixeldifferenz von weniger als dem Schwellenwert aufweist, kontinuierlich eine voreingestellte Schwellenanzahl von Malen oder mehr erfasst wird oder nicht; und
als Reaktion auf den Pixelbereich, der eine Pixeldifferenz von weniger als dem Schwellenwert aufweist, die kontinuierlich die voreingestellte Schwellenwertanzahl von Malen oder mehr erfasst wird, Identifizieren des Führungsbereichs auf der Grundlage des Pixelbereichs mit einer Pixeldifferenz von weniger als dem Schwellenwert und Speichern des erfassten Führungsbereichs.

11. Rundfunkempfangsvorrichtung (100), umfassend:
einen Empfänger (110), der dazu eingerichtet ist, einen Inhalt zu empfangen, der eine Vielzahl von Bildfeldern umfasst;
ein Ausgabegerät (120), das dazu eingerichtet ist, den Inhalt auszugeben; und
einen Controller (130), der eingerichtet ist zum:
Identifizieren eines Führungsbereichs (320, 910, 1110, 3030) des Inhalts durch Vergleichen von Pixelwerten zwischen entsprechenden Pixelbereichen der Vielzahl von Bildfeldern und Identifizieren mindestens eines Bildabschnitts als Ereignisabschnitt (3110) durch Erfassen einer in dem Führungsbereich (320, 910, 1110, 3030) enthaltenen Zeichenänderung,
Erhalten eines Videoabschnitts (3110-1), der dem mindestens einen Ereignisabschnitt (3110) entspricht, unter Verwendung von Zeitinformationen des identifizierten Ereignisabschnitts (3110),
Bestimmen, ob der Videoabschnitt (3110-1) ein sportbezogener Inhalt ist, durch Analysieren, ob ein Anteilswert einer vorbestimmten Farbe, die in dem Videoabschnitt (3110-1) enthalten ist, gleich oder höher als ein vorbestimmter erster Schwellenwert ist,
als Reaktion auf das Bestimmen, dass der Videoabschnitt (3110-1) der sportbezogene Inhalt ist, Identifizieren eines Inhaltszusammenfassungsabschnitts, das den erhaltenen Videoabschnitt (3110-1) umfasst, und
Steuern des Ausgabegerätes (120) zum Ausgeben eines Zusammenfassungsinhalts (2110, 2210), der dem identifizierten Inhaltszusammenfassungsabschnitt entspricht.

## Revendications

1. Procédé de fourniture d'un service de contenu résumé (2110, 2210) d'un appareil de réception de diffusion (100), le procédé comprenant :
la réception d'un contenu comprenant une pluralité de trames d'image ;
l'identification d'une zone guide (320, 910, 1110, 3030) du contenu en comparant des valeurs de pixel entre des régions de pixel correspondantes de la pluralité de trames d'image et l'identification d'au moins une section d'image en tant que section d'événement (3110) en détectant un changement de caractère inclus dans la zone guide (320, 910, 1110, 3030) ;
l'obtention d'une section vidéo (3110-1) correspondant à l'au moins une section d'événement (3110) en utilisant des informations de temps de la section d'événement (3110) identifiée ;
la détermination de savoir si la section vidéo (3110-1) est un contenu relatif à un sport, en analysant si une valeur de proportion d'une couleur prédéterminée incluse dans la section vidéo (3110-1) est égale ou supérieure à une première valeur de seuil prédéterminée ;
en réponse à la détermination du fait que la section vidéo (3110-1) est le contenu relatif à un sport, l'identification d'une section de résumé de contenu contenant la section vidéo (3110-1) obtenue ; et
la fourniture d'un contenu résumé (2110, 2210) correspondant à la section de résumé de contenu identifiée.

2. Procédé selon la revendication 1, l'appareil de réception de diffusion (100) stockant une condition de situation de lecture en rapport avec le contenu résumé (2110, 2210) du contenu relatif à un sport, la condition de situation de lecture se rapportant à une situation importante dans le contenu relatif à un sport indiquée par le changement de caractère inclus dans la zone guide (320, 910, 1110, 3030) et l'identification de l'au moins une section d'événement (3110) comprenant l'analyse des données vidéo comprises dans le contenu et l'identification de la section vidéo (3110-1) correspondant à la condition de situation de lecture stockée.

3. Procédé selon la revendication 1, l'analyse comprenant l'analyse de savoir si une proportion d'une couleur parmi les couleurs incluses dans la section vidéo de l'au moins une section d'événement (3110) détectée correspond à une couleur prédéterminée d'un terrain de lecture d'un genre du contenu relatif à un sport qui est pré-stockée dans l'appareil de réception de diffusion.

4. Procédé selon la revendication 3, l'analyse comprenant l'analyse de savoir si la valeur de la proportion de la couleur correspondant à la couleur prédéterminée du terrain parmi les couleurs incluses dans les trames d'image des sections vidéo qui sont antérieures ou postérieures à la section vidéo de l'au moins une section d'événement (3110) détectée est égale ou supérieure à une deuxième valeur de seuil prédéterminée.

5. Procédé selon la revendication 3, la zone guide (320, 910, 1110, 3030) indiquant une condition de situation de lecture à partir d'une image de la section d'image de l'au moins une section d'événement (3110) détectée et la détermination de savoir si le sport est en train d'être joué est effectuée en se basant sur la zone guide (320, 910, 1110, 3030) et la zone guide (320, 910, 1110, 3030) étant une zone indiquant au moins un score du sport et/ou une durée du sport.

6. Procédé selon la revendication 1, l'identification de la section de résumé de contenu comprenant l'acquisition des sections vidéo antérieures et postérieures (3120-1, 3130-1) qui existent au sein d'une durée fixe (3120, 3130) prédéterminée de l'au moins une section d'événement (3110) détectée, et la détermination des sections vidéo antérieures et postérieures (3120-1, 3130-1) acquises et de la section vidéo de l'au moins une section d'événement en tant que section de résumé de contenu.

7. Procédé selon la revendication 6, l'identification de section de résumé de contenu comprenant la modification de la durée fixe (3120, 3130) suivant qu'une scène change ou non dans au moins l'une des sections vidéo antérieures et postérieures (3120-1, 3130-1) acquises en comparaison de la section vidéo (3110-1) de l'au moins une section d'événement détectée.

8. Procédé selon la revendication 1, comprenant en outre :
en réponse à la détection de l'au moins une section d'événement (3110), l'acquisition d'une vignette (3331) d'une trame d'image de l'au moins une section d'événement (3110) détectée ;
l'appariement et le stockage du contenu résumé (2110, 2210) et de la vignette (3331) acquise en rapport avec le contenu résumé (2110, 2210) ; et
la délivrance en sortie du contenu résumé (2110, 2210) du contenu et de la vignette (3331) appariée avec le contenu résumé (2110, 2210) conformément à une instruction d'utilisateur.

9. Procédé selon la revendication 8, l'acquisition de la vignette (3331) comprenant, en réponse à l'existence d'une pluralité de vignettes, l'acquisition de la vignette ayant le moins de couleur correspondant à une couleur de terrain valide prédéterminée ou d'une vignette comprenant un objet le plus grand en référence à un même objet compris dans chacune des vignettes parmi la pluralité de vignettes.

10. Procédé selon la revendication 1, l'identification de la zone guide comprenant :
la comparaison des différences de pixel des régions de pixels correspondantes d'une première trame d'image et d'une deuxième trame d'image parmi la pluralité de trames d'image avec une valeur de seuil prédéfinie et le calcul d'un nombre de régions de pixel ayant une différence de pixel inférieure à la valeur de seuil,
en réponse au fait que le nombre de régions de pixel présente la différence de pixel inférieure à la valeur de seuil est inférieur à un seuil prédéfini de nombre de pixels, l'identification de savoir si la région de pixel ayant la différence de pixel inférieure à la valeur de seuil est, ou non, détectée continuellement un nombre seuil prédéfini de fois ou plus ; et
en réponse au fait que la région de pixel ayant la différence de pixel inférieure à la valeur de seuil est détectée continuellement un nombre seuil prédéfini de fois ou plus, l'identification de la zone guide en se basant sur la région de pixel ayant la différence de pixel inférieure à la valeur de seuil et le stockage de la zone guide détectée.

11. Appareil de réception de diffusion (100) comprenant :
un récepteur (110) configuré pour recevoir un contenu comprenant une pluralité de trames d'image ;
un circuit de sortie (120) configuré pour délivrer le contenu en sortie ; et
un contrôleur (130) configuré pour :
identifier une zone guide (320, 910, 1110, 3030) du contenu en comparant des valeurs de pixel entre des régions de pixel correspondantes de la pluralité de trames d'image et identifier au moins une section d'image en tant qu'une section d'événement (3110) en détectant un changement de caractère inclus dans la zone guide (320, 910, 1110, 3030) ;
obtenir une section vidéo (3110-1) correspondant à l'au moins une section d'événement (3110) en utilisant des informations de temps de la section d'événement (3110) identifiée ;
déterminer si la section vidéo (3110-1) est un contenu relatif à un sport, en analysant si une valeur de proportion d'une couleur prédéterminée incluse dans la section vidéo (3110-1) est égale ou supérieure à une première valeur de seuil prédéterminée ;
en réponse au fait de déterminer que la section vidéo (3110-1) est le contenu relatif à un sport, identifier une section de résumé de contenu contenant la section vidéo (3110-1) obtenue ; et
commander le circuit de sortie (120) pour délivrer en sortie un contenu résumé (2110, 2210) correspondant à la section de résumé de contenu identifiée.
